# EUROPÄISCHE PATENTSCHRIFT

(11) **EP 4 460 403 B1**
(45) Veröffentlichungstag und Bekanntmachung des Hinweises auf die Patenterteilung: **17.12.2025**
(21) Anmeldenummer: 23731197.2
(22) Anmeldetag: 06.06.2023
(51) Int. Cl.: B05C 1/08, B05C 19/06, B29C 43/24, D21G 1/00, H01M 4/04

(54) **MASCHINE ZUR HERSTELLUNG EINES PRODUKTES MIT EINEM AUF EINEM TRÄGERSUBSTRAT AUFGEBRACHTEN TROCKENFILM**
MACHINE FOR PRODUCING A PRODUCT WITH A DRY FILM APPLIED TO A CARRIER SUBSTRATE
MACHINE POUR PRODUIRE UN PRODUIT AVEC UN FILM SEC APPLIQUÉ SUR UN SUBSTRAT DE SUPPORT

(30) Priorität: 08.06.2022 DE 102022114430; 26.07.2022 DE 102022118691; 20.09.2022 DE 102022124081; 07.03.2023 WO PCT/EP2023/055670
(43) Veröffentlichungstag der Anmeldung: 13.11.2024
(73) Patentinhaber: Koenig & Bauer AG, 97080 Würzburg (DE)
(72) Erfinder: BAUER, Stefan, 97291 Thüngersheim (DE); BOLZA-SCHÜNEMANN, Claus, 23552 Lübeck (DE); NEUMANN, Jann, 97297 Waldbüttelbrunn (DE)
(74) Vertreter: Koenig & Bauer AG
(86) Internationale Anmeldenummer: PCT/EP2023/065036
(87) Internationale Veröffentlichungsnummer: WO 2023/237507

(56) Entgegenhaltungen:
- WO-A1-2021/028619
- CN-A- 107 039 629
- JP-A- 2004 123 247
- US-A1- 2016 181 651
- US-A1- 2018 221 908
- US-A1- 2022 293 906

## Beschreibung

Die Erfindung betrifft eine Maschine zur Herstellung eines Produktes, insbesondere eines Produktstranges, mit einem auf einem Trägersubstrat aufgebrachten Trockenfilm, insbesondere einem durch einen aus einem pulverförmigen Material gebildeten Trockenfilm, gemäß Anspruch 1.

Durch die DE 10 2017 208 220 A1 ist eine Vorrichtung und ein Verfahren zum Beschichten eines Trägersubstrates bekannt, wobei in einem Spalt zwischen einer ersten und einer zweiten Walze ein Trockenfilm gebildet und in einer Ausführung in einem Spalt mit einer weiteren Walze auf das Trägersubstrat übertragen wird. Die Walzen werden zur Ausbildung von Fibrillen mit einer Differenzgeschwindigkeit betrieben.

Die US 2015/0224529 A1 offenbart eine Vorrichtung zur Beschichtung eines zu beschichtenden Objektes mit Beschichtungsmaterial, wobei das Beschichtungsmaterial unter Anderem 20 bis 65 Vol.% Wasser enthält. Zwischen einer ersten und einer zweiten Walze wird die Schicht gebildet, wobei die erste Walze zur besseren Abgabe verbesserte Transfereigenschaften, z. B. eine rauere Oberfläche aufweist und die Walzen mit unterschiedlichen Geschwindigkeiten betrieben werden können.

In der WO 2020/150254 A1 wird in einer ersten Ausführung ein Film durch Kalandrieren einer Pulvermischung erzeugt und auf einer Rolle aufgewickelt, um als solche einem weiteren Prozess zugeführt zu werden, in welchem sie auf einen Kollektor laminiert werden kann. In einer Ausführung wird die Pulvermischung auf ein Band aufgegeben und auf diesem in den Walzenspalt zweier Walzen geführt und von der zweiten Walze auf ein Trägermaterial aufgebracht.

Durch die KR 102 359 521 B1 ist eine Vorrichtung zum Trockenbeschichten einer Stromkollektorbahn mit einer Aktivmaterialschicht offenbart, wobei je Bahnseite eine erste und zweite Walze vorgesehen ist, zwischen welchen eine Aktivmaterialschicht gebildet wird, und wobei die jeweilige Aktivmaterialschicht in einer Nipstelle zwischen den beiden zweiten Walzen auf die Stromkollektorbahn aufgetragen wird.

In der US 11040368 B2 ist ein Verfahren und eine Vorrichtung zur Herstellung einer mit pastösem Material beschichteten Kollektorfolie offenbart, wobei ein Trägermaterial von einer Rolle abgewickelt, auf einer ersten Seite beschichtet und zu einer Rolle aufgewickelt wird, bevor die Rolle erneut zugeführt, auf der anderen Seite beschichtet und dann wieder auf einer Rolle aufgewickelt wird.

Die JP 2013077560 A betrifft die Herstellung einer Elektrode für eine Sekundärbatterie, wobei in einem Ausführungsbeispiel eine Trägerbahn zunächst doppelseitig mit einem Trockenfilm beaufschlagt und stromabwärts im Substratpfad einen Spalt zweier Andrückwalzen durchläuft.

US 2016/181651 A1 und WO2021028619A1 offenbaren jede eine Maschine zur Herstellung eines mehrlagigen Produktes mit einem auf einem Trägersubstrat aufgebrachten Trockenfilm.

Der Erfindung liegt die Aufgabe zugrunde, eine Maschine zur Herstellung eines

Produktes, insbesondere Produktstrangs, mit einem auf einem Trägersubstrat ausgebildeten Trockenfilm, insbesondere einem durch einen aus einem pulverförmigen Material gebildeten Trockenfilm, zu schaffen.

Die Aufgabe wird erfindungsgemäß durch die Merkmale des Anspruchs 1 gelöst.

Die mit der Erfindung erzielbaren Vorteile bestehen insbesondere darin, dass mittels der Maschine kontinuierlich und zuverlässig ein solch beschichtetes Trägersubstrat mit einer möglichst gleichmäßigen Aktivmaterialschicht herstellbar ist.

In einer für die Erfindung besonders zu bevorzugenden Ausführung für eine solche Maschine zur Herstellung eines mehrlagigen Produktes, welches auf zumindest einer Seite eines Trägersubstrates einen aus einer Pulvermischung ausgebildeten Trockenfilm aufweist, umfasst diese einen Substratabwickler, durch welchen der Maschine eingangsseitig in einer Substratrolle abzuwickelndes bahnförmiges Trägersubstrat in Form einer Trägersubstratbahn zuführbar ist, also z. B. betriebsmäßig, d.h. in der für den Betrieb eingerichteten Maschine, zugeführt wird oder werden kann, einen ersten Substratpfadabschnitt, über welchen das bahnförmige Trägersubstrat einer Auftragstufe zuführbar ist, z. B. betriebsmäßig zugeführt wird oder werden kann, wobei durch die Auftragstufe zumindest ein erster Trockenfilm aus einem pulverförmigen Material herstellbar, z. B. betriebsmäßig hergestellt wird oder werden kann, und auf zumindest eine erste Seite des Trägersubstrates aufbringbar ist, z. B. betriebsmäßig hergestellt wird oder werden kann, und einen zweiten Substratpfadabschnitt (400), insbesondere vorgegeben durch entsprechende Substratleitelemente, über welchen das auf zumindest einer Seite mit dem Trockenfilm versehene bahnförmige Trägermaterial als Produktstrang einem Produktaufwickler zuführbar ist, z. B. betriebsmäßig zugeführt wird oder werden kann, durch welchen der Produktstrang zu einer Produktrolle zusammenfassbar ist, z. B. betriebsmäßig zusammen gefasst wird oder werden kann.

Erfindungsgemäß ist im Substratpfad einer zwischen dem Ort des Abwickelns von der Substratrolle im Substratabwickler bis zum Eintritt in einen ersten oder einzigen Auftragspalt der Auftragstufe gelegenen ersten Substratpfadstrecke eine erste Tänzerwalze und/oder eine zwangsgetriebene Zugwalze angeordnet und/oder im Substratpfad einer zwischen dem Austritt aus einem letzten oder dem einzigen Auftragspalt der Auftragstufe und dem Ort des Aufwickelns des Produktstranges auf die Produktrolle gelegenen zweiten Substratpfadstrecke eine zweite Tänzerwalze und/oder eine zwangsgetriebene Zugwalze.

Dabei ist der jeweilige Substratpfadabschnitt durch Substratleitelemente, z. B. eine oder mehrere Leit- oder Umlenkwalzen und ggf. eine oder mehrere vorgesehene Mess-, Zug- oder Tänzerwalzen, definiert bzw. gebildet, die im Betrieb von der jeweiligen Bahn, d. h. der Trägersubstratbahn bzw. dem Produktstrang, zumindest zum Teil umschlungen sind oder diese, wie z. B. im Fall von Walzen der Auftragstufe oder von ggf. vorgesehenen Kalanderwalzen, paarweise klemmen.

Durch eine kontrollierte Bahn- bzw. Strangführung bzw. -spannung sind besonders gute Bedingungen für einen stabilen Betrieb und für einen konstanten Materialauftrag geschaffen.

Die jeweilige zwangsgetriebene Zugwalze ist vorzugsweise durch ein bezüglich der Geschwindigkeit regel- und/oder steuerbares Antriebsmittel mechanisch unabhängig von der oder jeder anderen im Substratpfad angeordneten Zugwalze antreibbar ausgeführt bzw. durch ein geschwindigkeitsgeregeltes und/oder gesteuertes Antriebsmittel mechanisch unabhängig von der oder jeder anderen im Substratpfad angeordneten Zugwalze oder dessen Antriebmittel angetrieben.

In einer vorteilhaften Ausgestaltung ist im Substratpfad der zwischen dem Ort des Abwickelns von der Substratrolle im Substratabwickler bis zum Eintritt in einen ersten oder einzigen Auftragspalt der Auftragstufe gelegenen ersten Substratpfadstrecke eine die Bahnspannung in der Trägersubstratbahn oder eine die Bahnspannung repräsentierende Größe liefernde Messwalze angeordnet und/oder im Substratpfad der zwischen dem Austritt aus einem letzten oder einzigen Auftragspalt der Auftragstufe und dem Ort des Aufwickelns des Produktstranges auf die Produktrolle gelegenen zweiten Substratpfadstrecke eine die Bahnspannung im Produktstrang oder eine die Bahnspannung repräsentierende Größe liefernde Messwalze angeordnet.

In vorteilhafter Weiterbildung hierzu ist eine Bahnspannungsregeleinrichtung vorgesehen, welche eingangsseitig mit zumindest einer oder beiden der in der ersten und/oder in der zweiten Substratpfadstrecke vorgesehenen Messwalzen und ausgangseitig mit dem Antrieb zumindest einer oder beider der in der ersten und/oder in der zweiten Substratpfadstrecke vorgesehenen Zugwalzen steht, und welche Datenverarbeitungs- und/oder elektronische Schaltmitteln aufweist, die eingerichtet sind durch entsprechende Ansteuerung der Antriebssteuerung des Antriebes einer oder mehrerer der Zugwalzen in der betreffenden oder jeder der beiden Substratpfadstrecken eine jeweils vorgegebene Bahnspannung und/oder eine für die beiden Substratpfadstrecken vorgegebene Bahnspannungsdifferenz aufzubauen und/oder zu erhalten.

Eine jeweilige Messwalze kann z. B. als im Gestell gelagerte Walze mit einer die radial wirkenden Kräfte im Walzenlager aufnehmenden Sensorik oder - z. B. Ähnlich einer Tänzerwalze - als radial bewegbar und entgegen der Bahnzugkraft vorgespannt gelagerte Walze mit einer die Position oder Lageänderung aufnehmenden Sensorik ausgebildet sein.

In einer vorteilhaften Weiterbildung der Maschine kann durch eine Temperaturmessung eingangsseitig des Auftrages und/oder vor dem Aufwickeln, insbesondere mit Integration in einen diese Temperatur betreffenden Regelkreis, weiter für stabile Betriebsverhältnisse und/oder durch eine Inspektion mit Fehlstellenmarkierung für eine fehlerfreie Verwertung im späteren Produkt gesorgt werden.

In einer vorteilhaften Ausführung der Maschine ist der Auftragstufe im ersten Substratpfadabschnitt eine thermische Vorbehandlungsstation vorgeordnet, durch welche das Trägersubstrat über Umgebungstemperatur erwärmbar ist und/oder im zweiten Substratpfadabschnitt eine Kühleinrichtung, durch welche ein hindurchgeführter Produktstrang abkühlbar ist.

In einer vorteilhaften Weiterbildung der Maschine ist der Auftragstufe im zweiten Substratpfadbschnitt ein Kalandrierwerk mit einem Kalandrierspalt nachgeordnet, durch welchen das zumindest auf einer Seite mit dem Trockenfilm versehene Trägersubstrat als Produktstrang unter Anwendung von Druck und/oder erhöhter Temperatur hindurch führbar ist und/oder betriebsmäßig geführt wird bzw. werden kann. Dabei sind z. B. zwei Walzen, z. B. Kalandrierwalzen, vorgesehen, von denen mindestens eine beheizbar ist und/oder zwischen welchen eine Pressung mit einer einstellbaren Linienkraft von z. B. zumindest 500 N/mm aufbringbar ist. In vorteilhafter Weiterbildung ist dabei eine in der zweiten Substratpfadstrecke gelegene Zugwalze und/oder Messwalze im Substratpfad zwischen dem letzten oder einzigen Auftragspalt der Auftragstufe und dem Kalandrierwerk angeordnet.

In einer vorteilhaften Ausführung der Auftragstufe ist der einzige oder jeweilige Auftragspalt, durch welchen das zu beschichtende Trägersubstrat hindurchführbar und dabei auf zumindest der ersten Seite mit dem ersten Trockenfilm beaufschlagbar ist, im Nip zwischen einer Auftragwalze eines ersten Auftragwerkes und einer als Gegendruckwalze wirksamen Walze ausgebildet. In besonders vorteilhafter Weiterbildung ist der Auftragsspalt zwischen der Auftragwalze und der Gegendruckwalze auf Basis eines kraftbasierten Stellantriebs stellbar, d. h. auf eine konstante und/oder definierte Anstell- bzw. Linienkraft hin einstellbar. Damit ist z. B. eine Kraft, mit der der Strang im Auftragspalt geklemmt wird bzw. ist, unabhängig von variierender und ggf. schwankender Strangdicke bewusst kontrollierbar und konstant zu halten. Grundsätzlich unabhängig hiervon, jedoch vorteilhaft in Verbindung hiermit umfasst das Auftragwerk eine Dosierwalze, welche zwischen ihrer Mantelfläche und der Mantelfläche der Auftragwalze oder einer in einem Walzenzug, d. h. einer Serie von sich aneinander anschließenden Walzen, zwischen Dosierwalze und Auftragwalze liegenden weiteren Walze des ersten Auftragwerkes einen der Filmbildung dienenden Dosierspalt ausbildet, durch welchen zur Herstellung des ersten Trockenfilms eine trockene Pulvermischung förderbar ist. Vorteilhaft ist der Dosierspalt auf Basis eines positionsbasierten Stellantriebs stellbar ausgebildet, d. h. er kann über einen positionsbasierten Stellmechanismus auf eine konstante und/oder definierte Spaltbreite hin eingestellt werden.

In einer besonders vorteilhaften Ausführung der Maschine bzw. der Auftragstufe ist durch die Maschine bzw. die Auftragstufe inline auf beiden Seiten des Trägersubstrates ein Trockenfilm auftragbar.

Weitere vorteilhafte Varianten und Weiterbildungen sind im Folgenden und in den Ansprüchen dargelegt.

Ausführungsbeispiele der Erfindung sind in den Zeichnungen dargestellt und werden im Folgenden näher beschrieben.

Es zeigen:

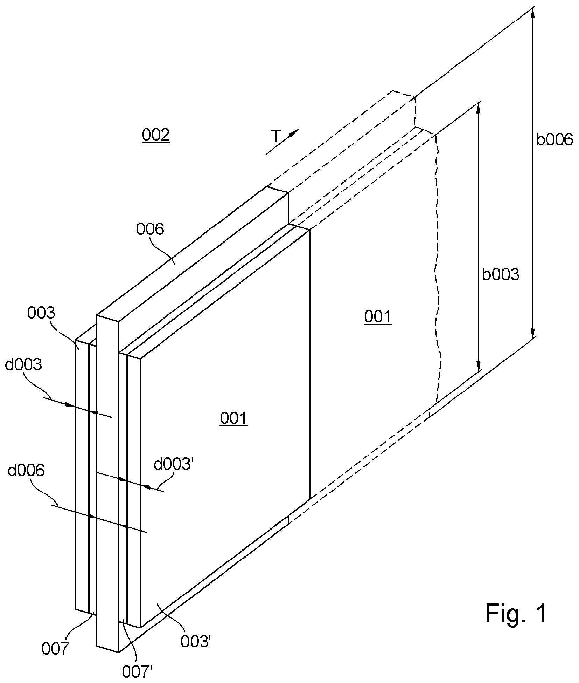

- Fig. 1: eine schematische Darstellung eines herzustellenden Produktes;
- Fig. 2: eine Prinzipskizze für die Erzeugung und den Auftrag eine Trockenfilmes;
- Fig. 3: ein Ausführungsbeispiel für eine Maschine zur Herstellung eines mehrlagigen Produktes mit einem auf einem Trägersubstrat aufgebrachten Trockenfilm mit einer Auftragstufe gemäß einer Ausführung einer ersten Gruppe von Ausführungsbeispielen;
- Fig. 4: eine vergrößerte Ansicht der Auftragstufe erster Ausführung aus Fig. 3;
- Fig. 5: eine alternative Ausführung einer Ausführung der ersten Gruppe von Ausführungsbeispielen;
- Fig. 6: eine weitere alternative Ausführung der Ausführung einer ersten Gruppe von Ausführungsbeispielen;
- Fig. 7: eine weitere alternative Ausführung der Ausführung einer ersten Gruppe von Ausführungsbeispielen;
- Fig. 8: eine Prinzipskizze für eine Ausführung einer zweiten Gruppe von Ausführungsbeispielen;
- Fig. 9: eine Prinzipskizze für eine weitere Ausführung einer zweiten Gruppe von Ausführungsbeispielen;
- Fig. 10: ein Ausführungsbeispiel für eine Maschine zur Herstellung eines mehrlagigen Produktes mit einem auf einem Trägersubstrat aufgebrachten Trockenfilm mit einer Auftragstufe gemäß einer Ausführung der zweiten Gruppe von Ausführungsbeispielen;
- Fig. 11: eine vergrößerte Ansicht der Auftragstufe aus Fig. 10 mit paarweise Kopplung zweier Walzen in einer ersten Ausgestaltung;
- Fig. 12: eine vergrößerte Ansicht der Auftragstufe aus Fig. 10 mit paarweise Kopplung zweier Walzen in einer zweiten Ausgestaltung;
- Fig. 13: eine Darstellung von schräg unten mit Abnahmeeinrichtungen;

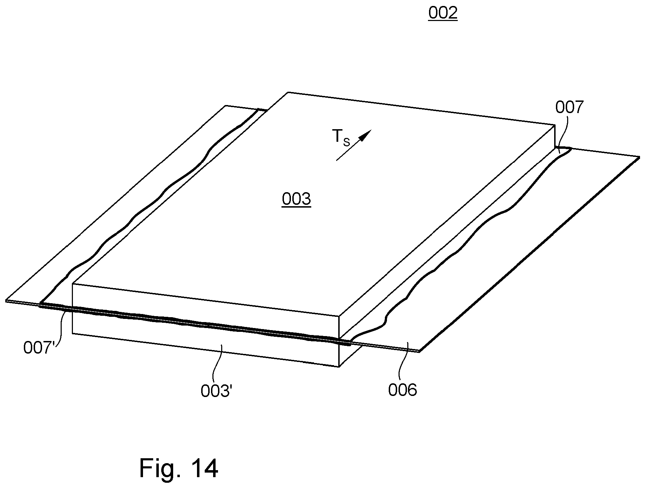

- Fig. 14: eine Schrägansicht eines Produktabschnittes mit geringfügig seitlichem Primerüberstand;
- Fig. 15: ein weiteres Ausführungsbeispiel für eine Maschine zur Herstellung eines mehrlagigen Produktes mit einem auf einem Trägersubstrat aufgebrachten Trockenfilm mit einer Auftragstufe gemäß einer Ausführung der zweiten Gruppe von Ausführungsbeispielen;
- Fig. 16: ein weiteres Ausführungsbeispiel für eine Maschine zur Herstellung eines mehrlagigen Produktes mit einem auf einem Trägersubstrat aufgebrachten Trockenfilm mit einer Auftragstufe gemäß einer Ausführung der zweiten Gruppe von Ausführungsbeispielen;
- Fig. 17: ein schematisch dargestelltes Auftragwerk mit einer ersten Ausführung einer Vorrichtung zur Zufuhr pulverförmigen Materials in den Walzenspalt;
- Fig. 18: ein schematisch dargestelltes Auftragwerk mit einer im Fallweg vorgesehenen Sensorik in einer ersten Ausführung;
- Fig. 19: ein schematisch dargestelltes Auftragwerk mit einer im Fallweg vorgesehenen Sensorik in einer zweiten Ausführung;
- Fig. 20: eine schematische Darstellung eines Ausführungsbeispiels für eine Vorrichtung zur Bestimmung der Dichte einer auf einer Mantelfläche einer Walze geförderten Materialschicht.

Bei nachfolgend beschriebenen Vorrichtungen bzw. Maschinen handelt es sich um die Herstellung von Elektrodeneinheiten 001 elektrochemischer Speicher, wie sie insbesondere in Batterien bzw. Akkumulatoren, wie z. B Lithium-Schwefel-, Natrium-Ionen oder insbesondere Lithium-Ionen-Batterien, wie auch in Festkörperbatterien, Anwendung finden.

Ein durch eine unten genannte Maschine herzustellendes Produkt 001; 002 kann beispielsweise durch ein noch zu schneidendes, z. B. bahnförmiges Zwischenprodukt 002, z. B. einen als Elektrodenstrang 002 ausgebildeten Produktstrang 002, oder durch bereits in der Maschine geschnittene, bogenförmige Endprodukte 001, z. B. als Elekrodeneinheiten 001, kurz Elektroden 001. gebildete Produktabschnitte 001, gebildet sein.

Zur Herstellung solcher Produkte 001; 002 mit einer auf einem Trägersubstrat 006, bevorzugt einer Trägersubstratbahn 006, z. B. einem durch beispielsweise eine Stromableiterfolie 006 gebildetes Stromableitersubstrat 006, ein- oder beidseitig aufgebrachten Materialschicht 003; 003', insbesondere Aktivmaterialschicht 003; 003', bevorzug aufgebracht als Trockenfilm 003; 003' ist nun eine Vorrichtung 100; 100* zum Beschichten, kurz Beschichtungsvorrichtung 100; 100*, insbesondere zum Trockenbeschichten, eines, insbesondere bahnförmigen, z. B. oben genanntes Trägersubstrates 006, mit einer o. g. Materialschicht 003; 003', bevorzugt einem Trockenfilm 003; 003', insbesondere einem Pulververbundstofffilm 003, vorgesehen, die mindestens ein erstes Auftragwerk 101 umfasst, durch welches pulverförmiges, bevorzugt trockenes, Material 004; 004', insbesondere eine, bevorzugt lösungsmittelfreie und/oder trockene Pulvermischung 004; 004', zunächst, insbesondere durch Verpressen und/oder unter Anwendung einer Presskraft, zu einem Trockenfilm 003 verarbeitbar ist und nachfolgend dieser Trockenfilm 003; 003' auf eine erste Seite des Trägersubstrates 006, insbesondere durch Anpressen und/oder unter Anwendung einer Anpresskraft, aufgebringbar ist. Ein aufzubringender Trockenfilm 003; 003' soll beispielsweise nach dem Auftrag und Verpressen beispielsweise eine Stärke von 20 µm bis 240 µm, bevorzugt von 40 µm bis 100 µm aufweisen.

Eine o. g., insbesondere als Trockenpulver vorliegende Pulvermischung 004; 004' umfasst - insbesondere für die Herstellung von Elektrodeneinheiten 001 für Lithium-Ionen-Batterien bzw. -Akkumulatoren - beispielsweise über neunzig Gewichtsprozent eines Aktivmaterials wie z. B. eines oder mehrere aus den Lithiumverbindungen Lithium-Eisenphosphat, Lithiummanganoxid, nickelreiches Lithium-Nickel-Mangan-Kobaltoxyd, Lithium-Nickel-Kobalt-Aluminiumoxid, Lithium-Kobalt-Oxid, Lithium-Mangan-Nickeloxid und/oder Lithiumtitanat, wenige, z. B. drei Gewichtsprozent eines Leitadditivs, z. B. Graphit oder sog. CNTs, d. h. mehrwandige Kohlenstoffnanoröhren, und wenige, z. B. zwei Gewichtsprozent eines im späteren Pulververbund als Bindemittel wirksamer Kunststoff, z. B. Polytetrafluoräthylen (PTFE).

Das Trägersubstrat 006 stellt z. B. gleichzeitig die stromableitende Schicht der Elektrodeneinheit 001 dar und ist z. B. durch folien-, vlies- oder gewebeartig ausgebildetes elektrisch leitfähiges Material, z. B. einem Metall gebildet. Es ist z. B. - insbesondere für die Herstellung von Elektrodeneinheiten 001 für Lithium-Ionen-Batterien bzw. -Akkumulatoren - aus Aluminium oder Kupfer gebildet und/oder weist beispielsweise eine Dicke d006 von 5 bis 16 µm auf. Im Falle der Produktion einer Anode ist sie insbesondere aus Kupfer mit z. B. einer Dicke d006 von beispielsweise im Bereich von 5 bis 13 µm und im Falle der Produktion einer Kathode insbesondere aus Aluminium mit z. B. einer Dicke d006 im Bereich von 7 bis 16 µm.

In einer zu bevorzugenden Ausführung weist das Trägersubstrat 006 zumindest im mit dem Trockenfilm 003; 003' zu beschichtenden Oberflächenbereich eine oberflächliche Beschichtung mit einem verbindungsunterstützendes oder -bewirkenden Mittel 007; 007', z. B. ein Binder 007; 007', einen Primer 007; 007' oder ein Klebemittel 007; 007', auf. Ein solches Mittel 007; 007' kann durch einen thermoplastischen oder reaktiven Binder oder Primer gebildet sein und z. B. eine thermoplastische Komponente umfassen und/oder eine Dicke d007 von nur wenigen µm, z. B. höchstens 5 µm, insbesondere höchstens 3 µm aufweisen.

Eine Dicke d003; d003' der Aktivmaterialschicht 003; 003' des Produktes 001; 002, d. h. der Elektrodeneinheit 001 bzw. des Elektrodenstranges 002, beträgt beispielsweise höchstens 240 µm, insbesondere höchstens 150 µm, bevorzugt bei maximal 100 µm und/oder ist beispielsweise mindestens 20 µm, insbesondere mindestens 30 µm, bevorzugt bei mindestens 40 µm.

Eine Gesamtstärke des z. B. beidseitig beschichteten Produktes 001; 002 beläuft sich z. B. auf bis zu 500 µm, insbesondere bis 320 µm, bevorzugt bis 220 µm und/oder auf mindestens 50 µm, insbesondere mindestens 70 µm, bevorzugt mindestens 90 µm.

Um einen effektiven Herstellungsprozess zu gewährleisten, wird bevorzugt bahnförmiges Trägermaterial 006 zu einem o. g. End- oder Zwischenprodukt verarbeitet, welches z. B. eine Breite von mindestens 500 mm, insbesondere mindestens 600 mm, in einer besonders vorteilhaften Ausführung gar mindestens 1.200 mm aufweist. Dabei wird das Trägermaterial 006 beispielsweise nicht auf der gesamten breite mit dem Trockenfilm 003; 003' beschichtet, sondern nur bis auf einen freibleibenden Randbereich, in welchem die Oberfläche des metallisch leitenden Trägermaterials 006 frei und - z. B. für Verbindungszwecke mit Leitungen - zugänglich bleibt.

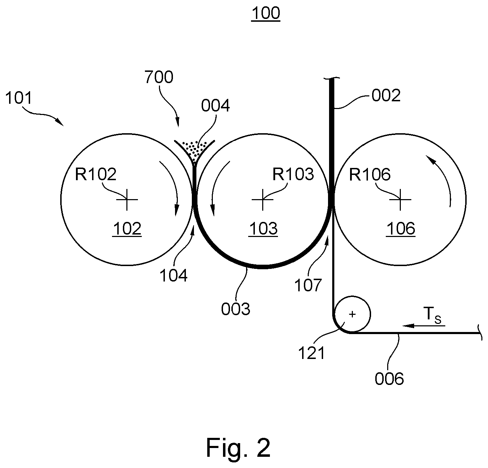

Zur o. g. Herstellung eines Trockenfilms 003 sind eine erste Walze 102, insbesondere eine Dosierwalze 102, und eine zweite Walze 103, insbesondere eine Laminierwalze 103 des ersten Auftragwerks 101 derart vorgesehen, dass sie im Nip zwischen ihren Mantelflächen einen ersten Spalt 104, insbesondere ersten Filmbildungsspalt 104, ausbilden, durch welchen zur Ausformung des Trockenfilms 003 die z. B. durch eine Vorrichtung zur Zufuhr pulverförmigen Materials 700, kurz Pulverzufuhrvorrichtung 700, in den Nip geförderte Pulvermischung 004 hindurch förderbar ist (siehe z. B. Fig. 2). Eine lichte Weite des ersten Spaltes 104 an dessen engster Stelle bestimmt die - ggf. gegenüber der Dicke im späteren Produkt 001; 002 noch größere - Dicke des Trockenfilms 003 noch vor dessen Passage einer Auftragstelle, an welcher er - insbesondere unter Druck - auf dem Trägersubstrat 006 aufgebracht wird.

Die Auftragstelle wird hier bevorzugt direkt durch einen Nip der zweiten, in diesem Fall als Laminierwalze 103 wirksamen Walze 103 mit einer als Gegendruckwalze 106; 103' wirksamen Walze 106; 103 gebildet oder durch eine mit der zweiten Walze unmittelbar oder über eine oder mehrere weitere Walzen mittelbar zusammenwirkende und als Laminierwalze wirksame Walze mit einer als Gegendruckwalze 106; 103' wirksamen Walze 106; 103 (hier nicht dargestellt). Die als Laminierwalze 003 wirksame zweite oder weitere Walze und die als Gegendruckwalze 106; 103 wirksame Walze 106; 103 bilden im Nip zwischen ihren Mantelflächen einen zweiten Spalt 107, insbesondere einen Auftragspalt 107, im Folgenden z. B. auch als Laminierspalt 107 bezeichnet, aus, durch welchen das Trägersubstrat 006 führbar und, insbesondere auf von der Gegendruckwalze 106; 103 abgewandten Seite her, mit dem über den ersten Filmbildungsspalt 104 gebildeten, z. B. mindestens 40 µm dicken, z. B. zwischen 50 µm bis 200 µm, insbesondere 60 bis 120 µm dicken Trockenfilm 003 beaufschlagbar ist.

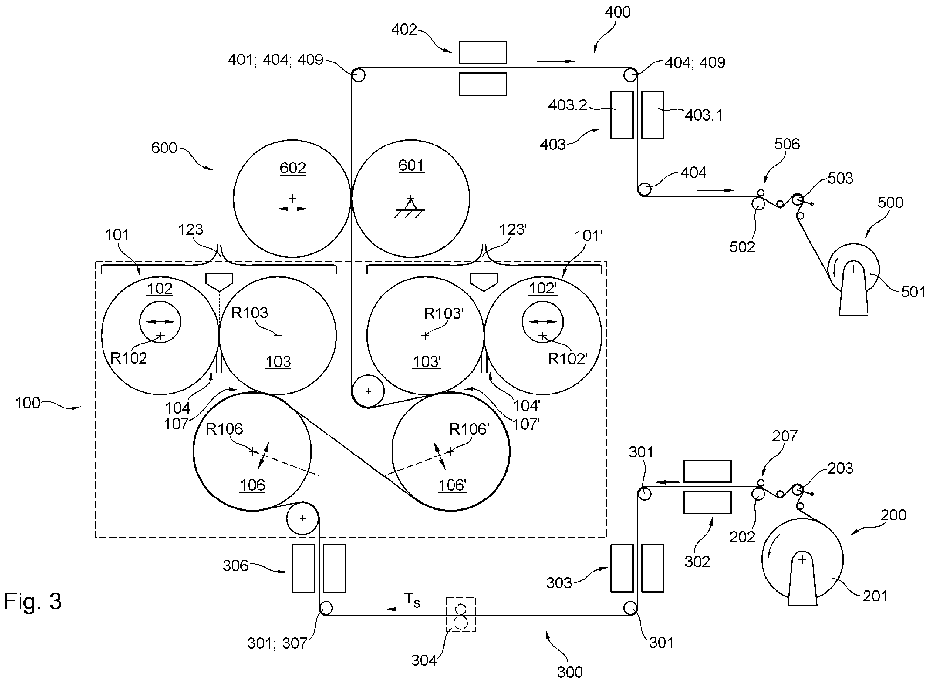

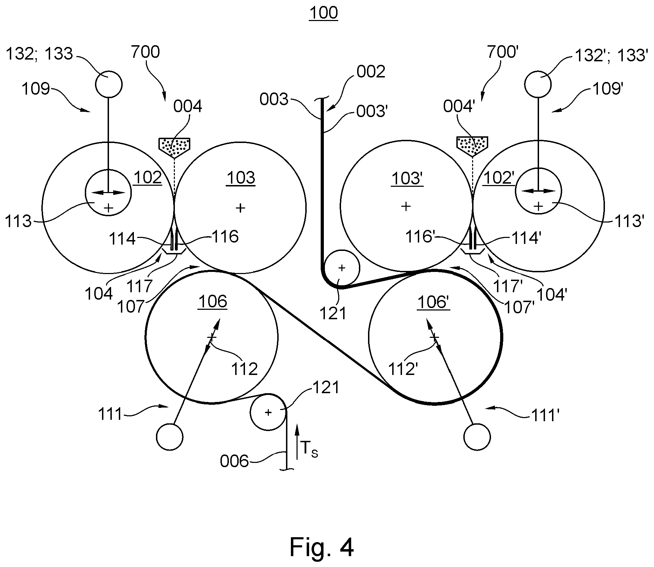

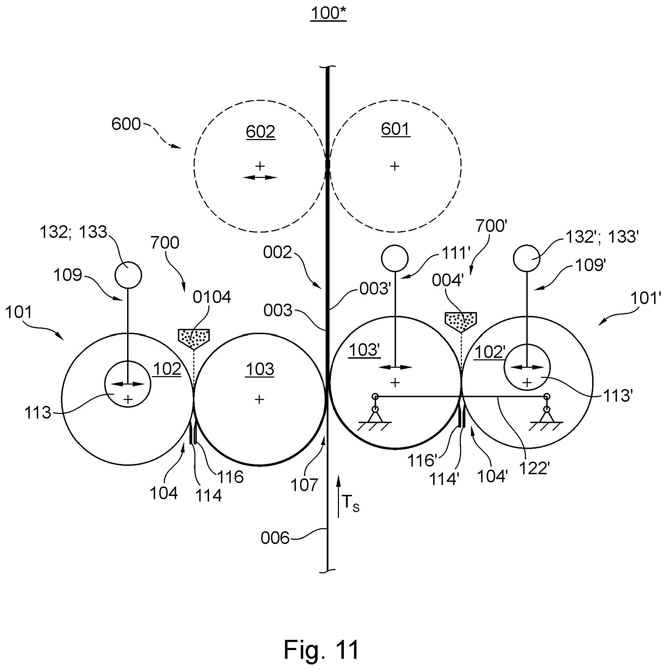

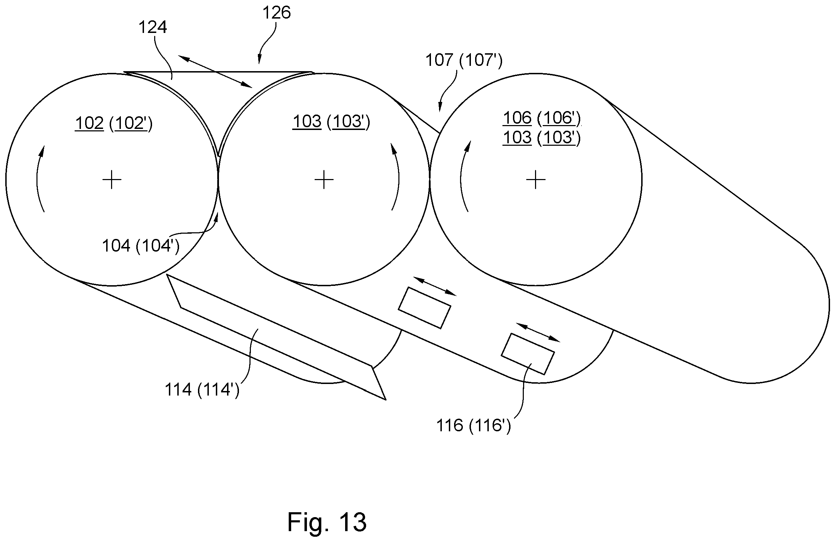

Die Auftragstufe 100; 100* umfasst in bevorzugter Ausführung ein zweites Auftragwerk 101' (siehe z. B. Fig. 3 bis Fig. 13), durch welches ebenfalls eine, insbesondere lösungsmittelfreie und/oder trockene, z. B. durch eine zweite Vorrichtung zur Zufuhr pulverförmigen Materials 700', kurz Pulverzufuhrvorrichtung 700', in den Nip geförderte Pulvermischung 004' zunächst, insbesondere durch Verpressen und/oder unter Anwendung einer Presskraft, zu einem zweiten Trockenfilm 003'; 003 verarbeitbar und nachfolgend dieser zweite Trockenfilm 003'; 003 auf die andere, zweite Seite des Trägersubstrates 006, insbesondere durch Anpressen und/oder unter Anwendung einer Anpresskraft, aufgebringbar ist. Dabei kann es sich grundsätzlich um eine selbe oder eine von der ersten Pulvermischung 004' verschiedene Pulvermischung 004' handeln.

Auch im zweiten Auftragwerk 101' sind bevorzugter Weise eine erste Walze 102', insbesondere Dosierwalze 102', und eine zweite Walze 103', insbesondere Laminierwalze 103' derart vorgesehen, dass sie im Nip zwischen ihren Mantelflächen einen ersten Spalt 104', insbesondere zweiten Filmbildungsspalt 104' ausbilden, durch welchen zur Ausformung des zweiten Trockenfilms 003' die Pulvermischung 004' förderbar ist.

Auch hier kann die zweite Walze 003' des zweiten Auftragwerks 101' direkt oder eine mit der zweiten Walze 103' unmittelbar oder über eine oder mehrere weitere Walzen mittelbar zusammenwirkende und als Laminierwalze wirksame Walze (hier nicht dargestellt) im Nip zwischen ihren Mantelflächen einen Spalt 107'; Spalt 107 mit einer als Gegendruckwalze 106'; 103 wirksamen, Walze 106'; 103 bilden, durch welchen das Trägersubstrat 006 führbar und, insbesondere auf von der zweiten Gegendruckwalze 106'; 103 abgewandten zweiten Seite, mit dem über den zweiten Filmbildungsspalt 104'; 104 gebildeten zweiten Trockenfilm 003' beaufschlagbar ist.

In einer ersten Gruppe von Ausführungsbeispielen für die Beschichtungsvorrichtung 100 (siehe z. B. Fig. 3 bis Fig. 7) ist ein zweiter Spalt 107' durch einen vom ersten Auftrag-, bzw. Laminierspalt 107' verschiedenen zweiten Auftragspalt 107', z. B. Laminierspalt 107', mit einer zweiten, insbesondere einer als Gegendruckwalze 106 wirksamen und von der ersten Gegendruckwalze 106 und/oder von der Laminierwalze 103 des ersten Auftragwerks 101 verschiedenen zweiten Gegendruckwalze 106' wirksamen, Walze 106' gebildet, durch welchen das Trägersubstrat 006 führbar und, insbesondere auf von der zweiten Gegendruckwalze 106' abgewandten zweiten Seite, mit dem über den zweiten Filmbildungsspalt 104' gebildeten zweiten Trockenfilm 003' beaufschlagbar ist. In dieser Ausführung sind zwei unabhängige Auftragwerke 101; 101' für die beiden Seiten des Trägersubstrates 106 vorgesehen. Es ist daher möglich, im betreffenden Laminierspalt 107; 107' unabhängig voneinander unterschiedliche Bedingungen für den jeweiligen Auftrag einzustellen. Dabei ist z. B. eine unterschiedliche Press- bzw. Linienkraft und/oder ggf. Temperatur einstellbar.

Für eine solche Ausführung können - z. B. im Hinblick auf eine große Umschlingung - im jeweiligen Auftragwerk 101; 101' die Dosierwalze 102; 102, die Laminierwalze 103; 103' und die mit letzterer den Laminierspalt 107; 107' ausbildende Gegendruckwalze 106; 106' in einer ersten Ausführungsvariante derart zueinander angeordnet sein, dass die die Rotationsachsen R102; R103; R106; R102'; R103' der jeweils benachbarten Walzen 102; 103; 106; 102'; 103'; 106' verbindenden Ebenen sich unter einem Winkel α schneiden, der z. B. zwischen 40° und 130°, insbesondere zwischen 70° und 110°, bevorzugt zwischen 80° und 100°, liegt. Eine große Umschlingung kann einen besseren Wärmeübergang von einer ggf. temperierbaren Gegendruckwalze 106; 106' und/oder ein verbessertes -z. B. flatterfreies - Auf- und Ablaufen bedingen (siehe z. B. Fig. 3 bis Fig. 5).

So kann die jeweilige Gegendruckwalze 106; 106' z. B. derart unterhalb der Laminierwalze 103; 103' angeordnet sein, dass die die Rotationsachsen R103; R106; R103' der beiden Walzen 103; 103'; 106; 106' verbindende Ebene höchsten um ± 30°, insbesondere höchstens ± 15° von der Vertikalen abweicht. Dabei wirken die Presskraft im Laminierspalt und die Gravitation überwiegend in einer selben Richtung.

In einer zweiten - z. B. im Hinblick auf die wirksamen Kräfte und Belastungsrichtungen vorteilhaften - Ausführungsvariante sind im jeweiligen Auftragwerk 101; 101' die Dosierwalze 102; 102, die Laminierwalze 103; 103' und die mit letzterer den Laminierspalt 107; 107' ausbildende Gegendruckwalze 106; 106' z. B. derart zueinander angeordnet, dass die die Rotationsachsen R102; R103; R106; R102'; R103' der jeweils paarweise benachbarten Walzen 102; 103; 106; 102'; 103'; 106' verbindenden Ebenen sich höchstens unter einem spitzen Winkel α schneiden, der maximal bei 20° grad liegt, insbesondere bei 0°, sodass die Rotationsachsen R102; R103; R106; R102'; R103' der drei Walzen 102; 103; 106; 102'; 103'; 106' desselben Auftragwerks 101; 101' in einer selben Ebene liegen. Damit ist die Anordnung sehr steif, da die Kräfte und Gegenkräfte zumindest überwiegend einander entgegengerichtet sind.

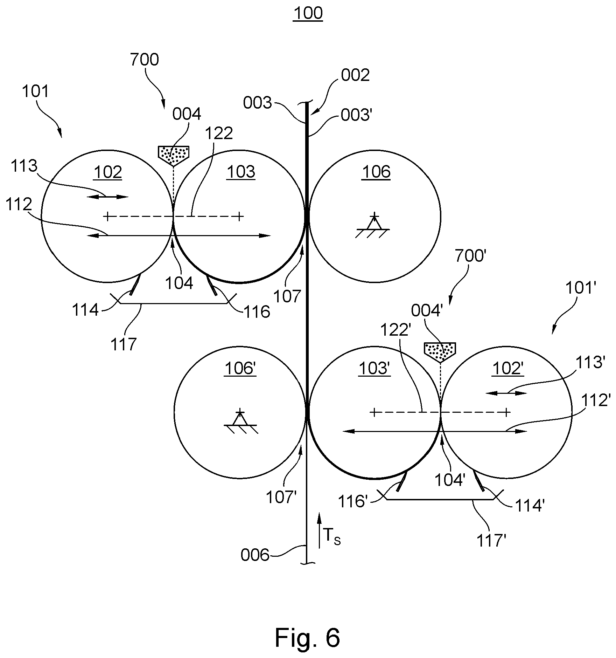

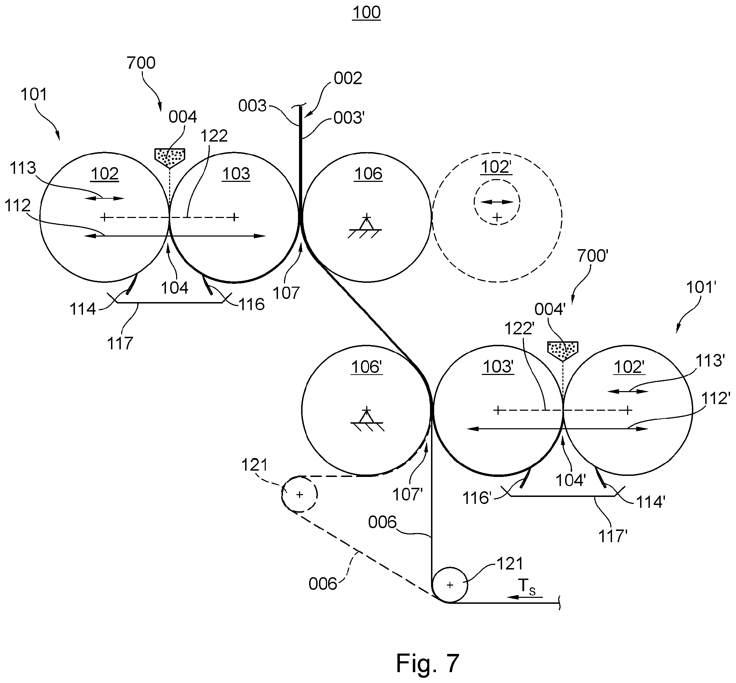

Dabei liegen die beiden Auftragwerke 101; 101' mit ihren Laminierwalzen 103; 103' auf unterschiedlichen Seiten des Substratpfades und können derart übereinander angeordnet sein, sodass die beiden Laminierspalte 107; 107' in einer Ausführungsform vertikal direkt übereinander liegen (siehe z. B. Fig. 6) oder in anderer Ausführungsform horizontal, insbesondere um mindestens einen halben und höchsten eineinhalb Laminierwalzendurchmesser, zueinander versetzt sind (siehe z. B. Fig. 7). Anhand Fig. 7 ist z. B. auch eine auf andere Ausführungen zu übertragende Substratführung exemplarisch durch strichlierte Line angedeutet, durch welche sich ein größerer Umschlingungswinkel und damit ein besserer Wärmeübergang und/oder ein stabileres Auflaufen realisieren lässt. Hierzu ist bzw. wird der Substratpfad durch ein zusätzliches Substratleitelement 121 derart ausgelenkt, so dass die Transportrichtung Ts beim Auflaufen auf die nachfolgende Walze 106; 106' um mindestens 45° geneigt zur Transportrichtung Ts des auslaufenden Substrates 006 verläuft.

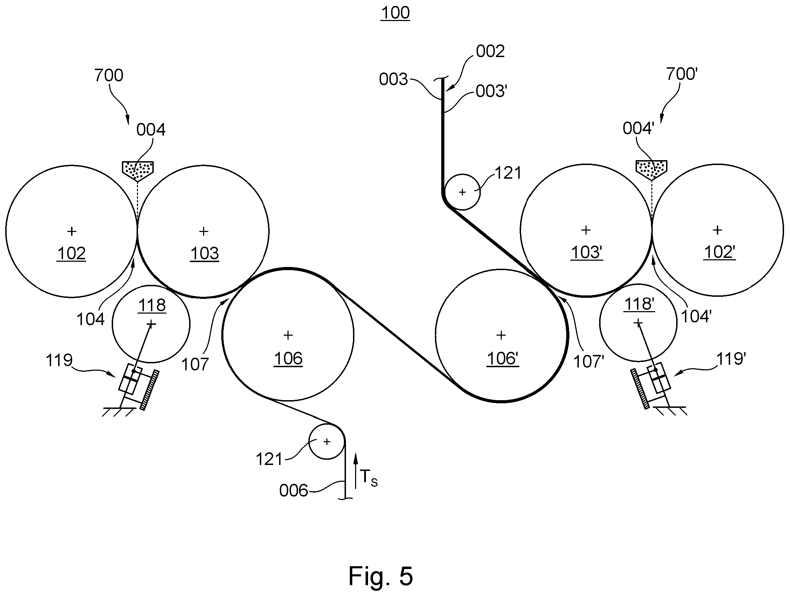

Zusätzlich zu der Dosierwalze 102; 102', der zweiten Walze 103; 103' oder einer mit der zweiten Walze unmittelbar oder über eine oder mehrere weitere Walzen mittelbar zusammenwirkende und als Laminierwalze wirksame Walze kann in vorteilhafter Weiterbildung eine weitere Walze 118; 118' (siehe z. B. exemplarisch für sämtliche Ausführengen der ersten Gruppe in Fig. 5) vorgesehen sein, welche in einem betriebsmäßig, d. h. während des Produktionsbetriebes den Trockenfilm 003; 003' führenden Umfangsabschnitt zwischen Dosierspalt 104; 104' und Laminierspalt 107; 107' der Laminierwalze 103; 103' in Art einer Kalanderwalze 118; 118' an einen auf der Laminierwalze 103; 103' zuführenden oder geführten Trockenfilm 003; 003' anstellbar ist.

Für die o. g. Ausführungen, Ausführungsvarianten und - formen kann in einer ersten Konfiguration für die Walzenlagerung die Laminierwalze 103; 103' des jeweiligen Auftragswerkes 101; 101' mit ihrer Rotationsachse R103; R103' betriebsmäßig ortsfest, wenn auch ggf. in ihrer Lage justierbar, und die Dosierwalze 102; 102' sowie die Gegendruckwalze 106; 106' über jeweilige Stellantriebe 109; 109'; 111; 111' jeweils in einer Richtung mit zumindest einer Bewegungskomponente zur zugeordneten Laminierwalze 103; 103' hin und/oder von dieser weg stellbar gelagert sein. Hier und im Folgenden ist unter dem Begriff eines Stellantriebs 109; 109'; 111; 111' die Gesamtheit der das mittel- oder unmittelbare Stellen einer Walze 102; 102'; 103; 103'; 106; 106' bewerkstelligenden und/oder ermöglichenden Mittel zu verstehen, welche im Folgenden auch als Stellmittel 109; 109'; 111; 111' bezeichnet sind und zumindest einen die Walze 102; 102'; 103; 103'; 106; 106' entlang einer Stellbewegung führenden Stellmechanismus 112; 112'; 113; 113' sowie ein oder mehrere das Stellen bewirkende Antriebsmittel 132; 132'; 133; 133' umfasst.

Für das Stellen der jeweiligen Dosierwalze 102; 102' an die zweite Walze 103; 103' ist in einer ersten Ausgestaltung ein positionsbasierter Stellantrieb 109; 109' bzw. Stellmittel 109; 109' für ein positionsbasiertes Stellen vorgesehen, d. h. ein Stellantrieb 109; 109 'bzw. Stellmittel 109; 109', über welchen bzw. welche eine definierte Position für das zu stellende Bauteil anfahrbar ist.

Ein solcher positionsbasierter Stellantrieb 109; 109' kann z. B. dadurch realisiert sein, dass ein Antriebsmittel 132; 133, z. B. Antriebsmotor, selbst eine definierte und vorgebbare Lage einnehmen kann, wie es beispielsweise für einen lageregelbaren Servoantrieb bzw. -motor möglich ist, oder dadurch, dass ein Stellweg zumindest zur relevanten Seite hin durch z. B. über Stell- und/oder Antriebsmittel stellbare Anschlagmittel, z. B. einen stellbaren Anschlag, begrenzt ist, welcher die Endposition definiert und gegen welchen das bzgl. der Position zu stellende Bauteil mittels eines z. B. kraftbasierten oder nichtpositionstreuen Antriebsmittels 133; 133' gestellt wird oder stellbar ist. Dabei ist die Walze 102; 102' beispielsweise in oder an einem Stellmechanismus 112; 112'; 113; 113' gelagert, welcher durch eine den Stellweg z. B. positionsgenau umsetzende Lagermechanik 112; 112'; 113; 113' gebildet ist. Eine solche ist - insbesondere für kleine Stellwege bei großen Kräften - z. B. vorteilhaft durch ein einen Exzenter umfassendes Lager 113; 113', z. B. ein Dreiringlager 113; 113' gegeben. Im Hinblick z. B. auf eine zur Stellrichtung parallele und daher bzgl. des Stellweges direktere Stellung kann jedoch stattdessen auch ein in Stellrichtung verlaufendes Linearlager 112; 112' von Vorteil sein.

Für das Stellen der jeweiligen Gegendruckwalze 106; 106' ist in dieser ersten, vorteilhaften Ausgestaltung ein kraftbasierter Stellantrieb 111; 111' bzw. sind Stellmittel 111; 111' für ein kraftbasiertes Stellen, vorgesehen, d. h. ein Stellantrieb 111; 111" bzw. Stellmittel 111; 111', über welchen bzw. welche ein Anstellen mit einer definierten Kraft an das Widerlager realisierbar ist.

Ein solcher - insbesondere zumindest einseitig vorgesehener - kraftbasierter Stellantrieb 111; 111' kann z. B. dadurch realisiert sein, dass ein Antriebsmittel 132; 132', z. B. ein Antriebsmotor 132; 132', selbst eine definierte und vorgebbare Kraft aufbringen kann, wie es beispielsweise für einen momentregelbaren oder -steuerbaren, insbesondere drehmomentregelbaren oder -steuerbaren Servoantrieb bzw. -motor möglich ist, oder dadurch, dass die zu stellende Walze mit einer Stellkraft zur relevanten Seite hin durch ein mittels eines Druckmittels betätigbaren Antriebsmittels 132; 132'; 133; 133', z. B. durch ein pneumatisch oder hydraulisch betätigtes Zylinder-Kolben-System, gegen die andere Walze 103; 103' anstellbar ist, wobei der Druck des Antriebsmittels 132; 132'; 133; 133' bevorzugter Weise einstellbar ist. Die Gegendruckwalze 106; 106' ist hierbei beispielsweise in oder an einem Stellmechanismus 112; 112'; 113; 113' gelagert, welcher durch eine die Stellkraft kraftbasiert, d. h. ohne zusätzliche mechanische Begrenzung des Stellweges, umsetzende Lagermechanik 112; 112' gebildet ist. Als solche kann z. B. - zumindest ein-, jedoch bevorzugt beidseitig - durch eine als Linearlager 112; 112' ausgebildete Lagermechanik 112; 112' vorteilhaft gebildet sein.

In einer zweiten Ausgestaltung kann jedoch in umgekehrter Weise die Dosierwalze 102; 102' kraftbasiert und die Gegendruckwalze 106; 106 positionsbasiert stellbar sein. Hierfür ist das o. g. in jeweiliger Entsprechung zu übertragen und anzuwenden.

In einer dritten Ausgestaltung können jedoch beide Walzen 102; 102'; 106; 106 kraftbasiert und in einer vierten Ausgestaltung beide Walzen 102; 102'; 106; 106 positionsbasiert stellbar sein. Hierfür ist das o. g. in jeweiliger Entsprechung zu übertragen und anzuwenden.

In einer besonders vorteilhaften fünften Ausgestaltung ist für das Stellen zumindest der Dosierwalze 102; 102' und/oder zumindest für das Stellen der Gegendruckwalze 106; 106' ein kombinierter Stellmechanismus 112; 113; 112'; 113' und/oder ein kombinierter Stellantrieb 109; 109'; 111; 111' bzw. kombinierte Stellmittel 109; 109'; 111; 111' vorgesehen, welcher bzw. welche wahlweise ein positionsbasiertes Stellen der betreffenden Walze 102; 102'; 106; 106' oder ein kraftbasiertes Stellen erlaubt.

Ein solcher kombinierter Stellantrieb 109; 109'; 111; 111' ist beispielsweise durch einen kraftbasierten Stellantrieb 111; 111' mit einem Stellmechanismus 112; 112'; 113; 113' gebildet, in dessen Stellweg zur Positionsbegrenzung wahlweise ein z. B. über Antriebs- und/oder Stellmittel positionierbarer Anschlag einbringbar ist. Alternativ ist auch ein Stellantrieb 109; 109'; 111; 111' von Vorteil, der als Antriebsmittel 132; 132'; 133; 133' einen wahlweise lagegeregelt oder -gesteuert oder momentengeregelt oder -gesteuert betreibbaren Motor, insbesondere Servomotor, umfasst.

In einer zweiten Konfiguration für die Walzenlagerung kann die Gegendruckwalze 106; 106' des jeweiligen Auftragswerkes 101; 101' mit ihrer Rotationsachse R106; R106' betriebsmäßig ortsfest, wenn auch ggf. justierbar, und die Laminierwalzen 103; 103' mit jeweils zugeordneter Dosierwalze 102; 102' über jeweilige gemeinsame Lagermechaniken 112; 112' und/oder Stellantriebe 111; 111' paarweise in einer Richtung mit zumindest einer Bewegungskomponente zur zugeordneten Gegendruckwalze 106; 106' hin und/oder weg, und zusätzlich hierzu die jeweiligen Dosierwalzen 102; 102' über Lagermechaniken 112; 112'; 113; 113' und/oder Stellantriebe 109; 109'; 111; 111' in einer Richtung mit zumindest einer Bewegungskomponente zur jeweils zugeordneten Laminierwalze 103; 103' hin und/oder von dieser weg stellbar gelagert sein.

In einer ersten, vorteilhaften Ausgestaltung kann für das Stellen der jeweiligen Dosierwalze 102; 102' hierzu ein in obigem Sinne positionsbasierter Stellantrieb 109; 109', z. B. ein- oder beidseitig eine durch ein Dreiringlager 113; 113' oder durch ein Linearlager 112; 112'; 113; 113' gebildete Lagermechanik 112; 112'; 113; 113' vorgesehen sein. Für das paarweise Stellen der Laminierwalzen 103; 103' mit jeweils zugeordneter Dosierwalze 102; 102' kann ein kraftbasierter Stellantrieb 111; 111 in obigem Sinne vorgesehen sein.

In einer zweiten Ausgestaltung kann jedoch in umgekehrter Weise die Dosierwalze 102; 102' kraftbasiert und das Walzenpaar 103, 102; 103', 102 positionsbasiert stellbar sein. Hierfür ist das o. g. in jeweiliger Entsprechung zu übertragen und anzuwenden.

In einer dritten Ausgestaltung können jedoch die Dosierwalze 102; 102' und das Walzenpaar 103, 102; 103', 102 kraftbasiert und in einer vierten Ausgestaltung die Dosierwalze 102; 102' und das Walzenpaar 103, 102; 103', 102 positionsbasiert stellbar sein. Hierfür ist das o. g. in jeweiliger Entsprechung zu übertragen und anzuwenden.

In einer besonders vorteilhaften fünften Ausgestaltung ist für das Stellen zumindest der Dosierwalze 102; 102' und/oder zumindest für das Stellen des Walzenpaars 103, 102; 103', 102 in obigem Sinne und/oder in obiger Ausführung ein kombinierter Stellmechanismus 112; 113; 112, 113 vorgesehen, welcher wahlweise ein positionsbasiertes oder kraftbasiertes Stellen des Paares hin zur Gegendruckwalze 106; 106'; 103'; 103 erlaubt.

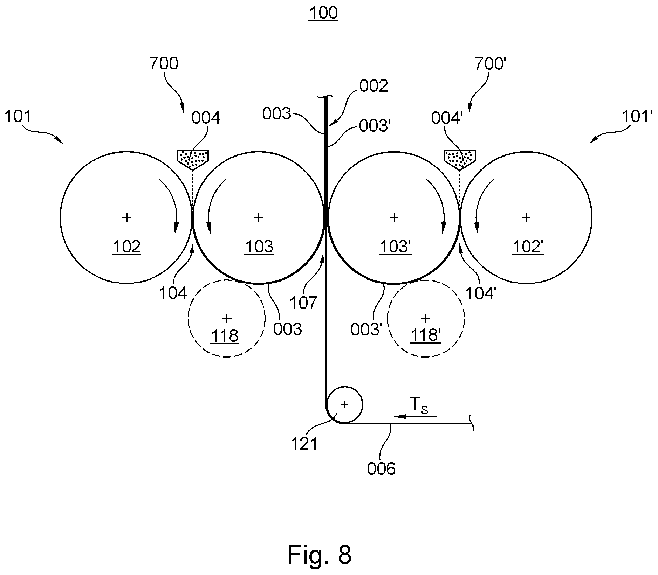

In einer zweiten Gruppe von Ausführungsbeispielen für die Beschichtungsvorrichtung 100* (siehe z. B. Fig. 8 bis Fig. 12, Fig. 15 und Fig. 16) bilden die zweite Walze 003' des zweiten Auftragwerks 101' oder eine mit der zweiten Walze 103' unmittelbar oder über eine oder mehrere weitere Walzen mittelbar zusammenwirkende Walze des zweiten Auftragwerks 101' mit der als Laminierwalze 103 wirksamen zweiten oder weiteren Walze 103 des ersten Auftragswerks 101 in einem Nip zwischen ihren Mantelflächen einen als zweiseitigen Laminierspalt 107 wirksamen gemeinsamen Spalt 107 aus, wobei die beiden den Spalt 107 zwischen sich ausbildenden Laminierwalzen 103; 103' gegenseitig als Gegendruckwalzen 103'; 103 wirksam sind. Zwischen letzteren ist das Trägersubstrat 006 hindurch führbar und, insbesondere beidseitig, mit dem jeweils über den ersten und den zweiten Filmbildungsspalt 104; 104' gebildeten Trockenfilmen 003', 003' beaufschlagbar. Eine solche Anordnung zweier für den gleichzeitig beidseitigen Auftrag zusammenwirkender Auftragwerke 101; 101' ist im Folgenden auch als Doppelauftragwerk 101, 101' bezeichnet.

Dabei schneiden sich die durch die im jeweiligen Auftragwerk 101; 101' durch die Rotationsachsen R102; R103; R102'; R103' der Dosierwalze 102; 102 und der Laminierwalze 103; 103' gebildeten Ebenen z. B. höchstens unter einem spitzen Winkel α, der z. B. maximal bei 20° grad liegt, vorteilhaft bei maximal 5°, insbesondere bei 0°, sodass im letztgenannten Fall die Rotationsachsen R102; R103; R106; R102'; R103' der Walzen 102; 103; 106; 102'; 103'; 106' der beiden in einem zweiseitigen Laminierspalt 107 zusammenwirkenden Auftragwerke 101; 101' in einer selben Ebene liegen oder parallel, aber vertikal versetzt zueinander verlaufen.

In einer ersten Ausführungsvariante verlaufen die beiden Ebenen in einer gemeinsame horizontalen Ebene oder horizontal, jedoch vertikal versetzt zueinander (siehe z. B. Fig. 8).

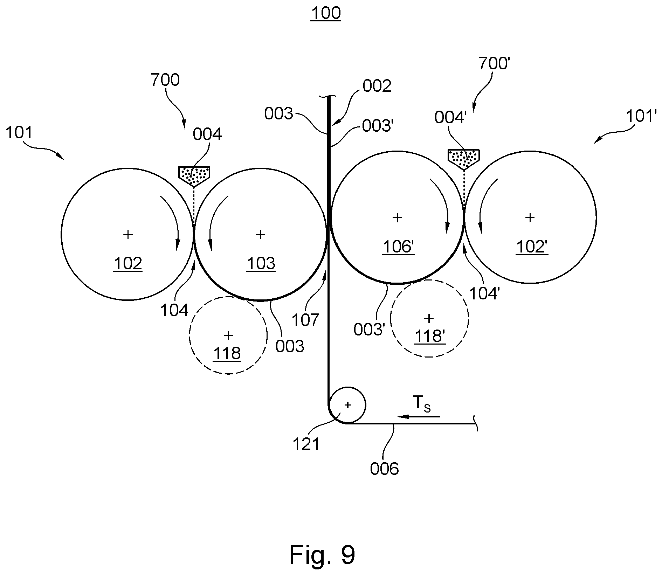

In einer zweiten, z. B. hinsichtlich einer kleinen Umschlingung vorteilhaften Ausführungsvariante, verlaufen die beiden Ebenen in einer gemeinsamen, gegen die Horizontale geneigten Ebene oder in zwei gegen die Horizontale geneigten, jedoch vertikal zueinander versetzten Ebenen. Dabei ist die gemeinsame Ebene bzw. sind die beiden versetzten Ebenen z. B. gegen die Horizontale um einen spitzen Winkel β von 2° bis 15°, insbesondere 3° bis 10°, geneigt (siehe z. B. Fig. 9).

Zusätzlich zu der jeweiligen Dosierwalze 102; 102' und der zweiten Walze 103; 103' kann in vorteilhafter Weiterbildung auch hier eine weitere Walze 118; 118' in o. g. Art einer Kalanderwalze 118; 118' vorgesehen sein (siehe z. B. exemplarisch für sämtliche Ausführengen der zweiten Gruppe strichliert in Fig. 8 und Fig. 9).

Für die o. g. Ausführungsvarianten und -formen kann in einer ersten Konfiguration für die Walzenlagerung eine erste der beiden Laminierwalzen 103 oder als Laminierwalze wirksame weitere Walze eines ersten der beiden Auftragswerke 101 mit ihrer Rotationsachse R103 betriebsmäßig ortsfest, wenn auch ggf. justierbar, gelagert sein, während die zweite der Laminierwalzen 103' oder eine als zweite Laminierwalze wirksame weitere Walze mit der zugeordneten Dosierwalze 102; 102' über eine gemeinsame Lagermechanik 112; 112' und/oder einen gemeinsamen Stellantrieb 109; 109'; 111; 111' paarweise in einer Richtung mit zumindest einer Bewegungskomponente zur zugeordneten Gegendruckwalze 106; 106' hin und/oder von dieser weg, und zusätzlich hierzu die jeweiligen Dosierwalzen 102; 102' über Lagermechaniken 112; 112'; 113; 113' und/oder Stellantriebe 109; 109'; 111; 111' in einer Richtung mit zumindest einer Bewegungskomponente zur jeweils zugeordneten Laminierwalze 103; 103' oder weiteren Walze hin und/oder von dieser weg stellbar gelagert sind. Für den Fall einer oder mehrere weiterer Walzen zwischen der Dosierwalze 102; 102' und der als Laminierwalze wirksamen Walze sind z. B. auch diese über die gemeinsame Lagermechanik 112; 112' und/oder den gemeinsamen Stellantrieb 109; 109'; 111; 111' gemeinsam in einer Richtung mit zumindest einer Bewegungskomponente zur zugeordneten Gegendruckwalze 106; 106' hin und/oder von dieser weg stellbar.

Für das Stellen der jeweiligen Dosierwalze 102; 102' ist in einer ersten, vorteilhaften Ausgestaltung ein positionsbasierter Stellantrieb 109; 109' in obigem Sinne und/oder in einer o. g. Ausführung vorgesehen. Für das paarweise Stellen der zweiten Laminierwalze 103' mit zugeordneter Dosierwalze 102' kann ein kraftbasierter Stellantrieb 111; 111 für ein kraftbasiertes Stellen in obigem Sinne und/oder in einer o. g. Ausführung vorgesehen sein.

In einer zweiten Ausgestaltung kann jedoch in umgekehrter Weise die Dosierwalze 102; 102' kraftbasiert und das Walzenpaar 103, 102; 103', 102 positionsbasiert stellbar sein. Auch hierfür ist das o. g. in jeweiliger Entsprechung zu übertragen und anzuwenden.

In einer dritten Ausgestaltung können jedoch beide Walzen 102; 102'; 106; 106 kraftbasiert und in einer vierten Ausgestaltung beide Walzen 102; 102'; 106; 106 positionsbasiert stellbar sein. Hierfür ist das o. g. in jeweiliger Entsprechung zu übertragen und anzuwenden.

In einer vorteilhaften fünften Ausgestaltung ist für das Stellen zumindest der Dosierwalze 102; 102' und/oder zumindest für das Stellen des Walzenpaars 103, 102; 103', 102 in obigem Sinne und/oder in obiger Ausführung ein kombinierter Stellmechanismus 112; 113; 112; 113 vorgesehen, welcher wahlweise ein positionsbasiertes Stellen des Paares gegen die als Gegendruckwalze 103'; 103 wirksame Laminierwalze 103'; 103 über einen positionsbasierten Stellantrieb 109; 109' und ein kraftbasiertes Stellen über einen kraftbasierten Stellantrieb 111; 111' erlaubt.

Für sämtliche Ausführungen der beiden Gruppen von Ausführungsbeispielen mit gemeinsam stellbaren Walzen 103'; 102'; 103; 102 können diese beidseitig in Trägern 122'; 122, insbesondere in Seitenteilen eines Untergestells, gelagert sein, welche ihrerseits über durch Linearlager 112; 112'; 113'; 113 gebildete Lagermechaniken 112; 112'; 113'; 113 in einem die Auftragwerke 101; 101' aufnehmenden Gestell gelagert sind.

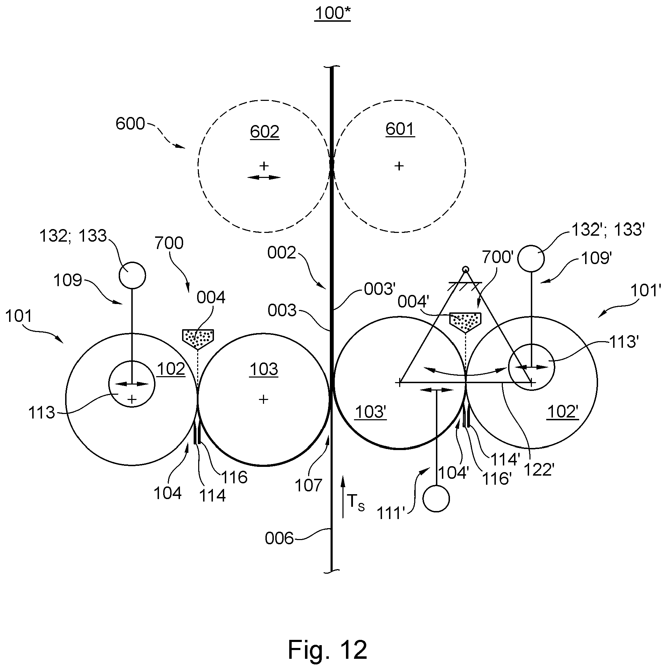

Alternativ hierzu können die beiden gemeinsam stellbaren Walzen 102; 103; 102; 102' beidseitig jedoch in Trägern, insbesondere in Seitenteilen eines Untergestells, gelagert sein, welche ihrerseits um eine zur Rotationsachse der ersten, ortsfest gelagerten Laminierwalze 103; 103' parallele Schwenkachse verschwenkbar gelagert sind (siehe z. B. Fig. 12).

Wie bereits erwähnt, kann in einem jeweiligen Auftragwerk 101; 101' zwischen der zweiten Walze 103; 103' und der Nipstelle zur Gegendruckwalze 106; 103' mindestens eine weitere, als Laminierwalze wirksame und mit der Gegendruckwalze 106; 103' den Laminierspalt 107; 107' bildende Walze vorgesehen sein.

Für sämtliche Ausführungen der beiden Gruppen von Ausführungsbeispielen ist in einer besonders vorteilhaften Weiterbildung im jeweiligen Auftragwerk 101; 101' eine von z. B. einer Materialabnahme 127; 127' umfasste, zu Reinigungszwecken wahlweise an die Mantelfläche der ersten Walze 102; 102' an- und abstellbare Abnahmeeinrichtung 114; 114', insbesondere Reinigungsrakel 114; 114' vorgesehen. Diese reicht z. B. mindestens über die zur Filmbildung wirksame Breite der Walzenmantelfläche.

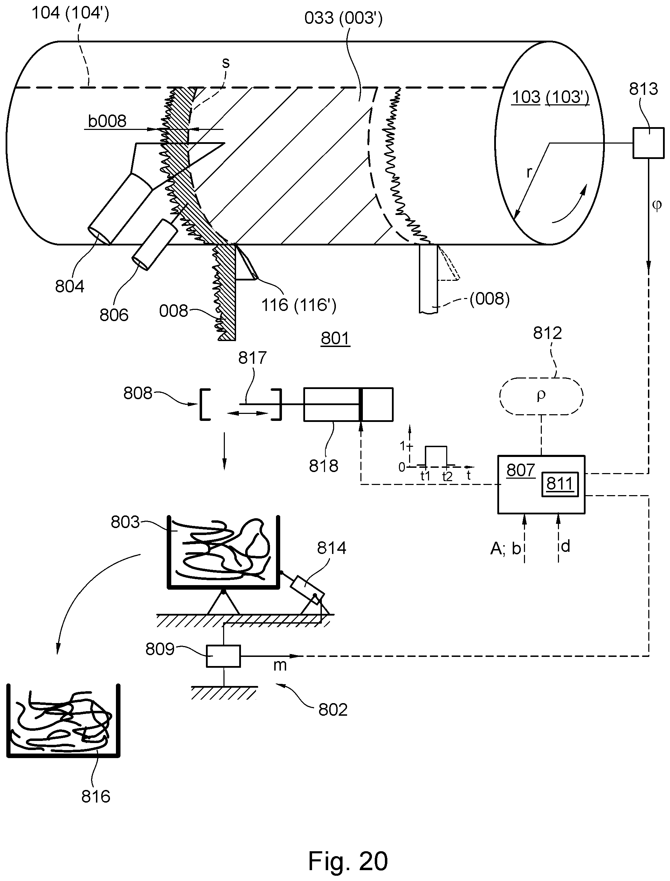

Stattdessen oder vorteilhafter Weise zusätzlich hierzu umfasst die Materialabnahme 127; 127' im jeweiligen Auftragwerk 101; 101' achsparallel zur zweiten Walze 103; 103' betrachtet voneinander beabstandet zwei achsparallel stellbare und an die zweite Walze 103; 103' angestellte oder anstellbare Abnahmeeinrichtungen 116; 116', insbesondere Seitenkantenrakel 116; 116', durch welche ein über die zweiten Walze 103; 103' geförderter Trockenfilm 003; 003' im Bereich seiner seitlichen Ränder abnehmbar und z. B. in eine Auffangvorrichtung 117; 117' abgebbar ist. Diese Abnahme dient beispielsweise als sog. Randbeschnitt dem Erhalt einer geraden Kante und/oder einer erwünschten Breite b003; b003' des Trockenfilms 003; 003. Die aufgefangene Menge kann z. B. wieder in die Zufuhr der Pulvermischung 004; 004' zurückgeführt werden. Eine solche Abnahmeeinrichtung 116; 116' kann auch zur Abnahme eines Randstreifens 008; 008' dienen, welcher z. B. bei der Bestimmung einer Dichte ρ der Materialschicht 003; 003' Verwendung finden, wie es beispielsweise unten in Verbindung mit z. B. der Fig. 20 dargelegt ist.

Zu Reinigungszwecken kann in vorteilhafter Weise auch eine an die Mantelfläche der zweiten Walze 103; 103' an-und abstellbare Abnahmeeinrichtung 129; 129', insbesondere Reinigungsrakel 129; 129' vorgesehen sein, welche z. B. mindestens über die zur Filmbildung wirksame Breite der Walzenmantelfläche reicht, und ggf. eine nicht dargestellte Absaugung oder Auffangeinrichtung.

Für die Zufuhr bzw. das Einleiten der Pulvermischung 004; 004' in den ersten Spalt 004; 004 ist eine o. g. Pulverzufuhrvorrichtung 700; 700' zur Zufuhr eines pulverförmigen Materials vorgesehen, wobei im Bereich des Zwickels oberhalb des Spaltes 104; 104' zwischen der ersten und zweiten Walze 102; 103; 102'; 103' vorzugsweise ein Einfüll- und/oder Vorlageraum 126 mit einer sich in axialer Richtung der zweiten Walze 103; 103' erstreckenden Breite ausgebildet und/oder vorgesehen ist.

In einer besonders vorteilhaften Ausgestaltung sind im Auftragwerk 101; 101' oberhalb des ersten Spaltes 104; 104' zwei achsparallel zur ersten Walze 102; 102' voneinander beabstandete und in achsparalleler Richtung stellbare Begrenzungen 124, insbesondere Seitenschilder 124, vorgesehen, welche jeweils einen Bereich des zwischen den Mantelflächen der erste und die zweite Walze 102; 103; 102'; 103' ausgebildeten oberen Zwickels zu beiden Stirnseiten des Auftragswerks 101; 101' hin abschotten und hierdurch einen dazwischenliegenden, bevorzugt in der Breite variierbaren Einfüll- und/oder Vorlageraum 126 für die Aufnahme der Pulvermischung 004; 004' ausbilden. Je nach gewünschter Breite und/oder Lage des Trockenfilms 003; 003' kann der Einfüll- und/oder Vorlageraum 126 dadurch auf mindestens einer, bevorzugt auf beiden Seiten in der Lage seiner seitlichen Begrenzung 124 variiert werden bzw. variierbar sein. Alternativ zu einem im unteren Bereich direkt durch die Mantelflächen begrenzten Einfüll- und/oder Vorlageraum 126 könnte - zumindest wo nicht widersprüchlich zu anderen Ausgestaltungsmerkmalen des Auftragwerks 101; 101' bzw. der Pulverzuführung 700; 700' - grundsätzlich auch ein Einfüll- und/oder Vorlageraum 126 in Art eines Einfüll- oder Vorlagetrichters, z. B. vergleichbar zu einer unten genannten Einführhilfe direkt im oder über dem Zwickel vorgesehen sein.

Für sämtliche o. g. Ausführungen, Varianten, Konfigurationen, Ausführungsformen oder Ausgestaltungen ist die Lagermechanik 112; 112'; 113; 113' und/oder der Stellantrieb 109; 109'; 111; 111' der ersten Walze 102; 102 bevorzugt derart ausgelegt, dass eine Spaltbreite für den ersten Spalt 104; 104' betriebsmäßig auf eine variierbare lichte Weite an der engsten Stelle von mindestens 15 µm, vorteilhaft von mindestens 30 µm, insbesondere von mindestens 50 µm einstellbar ist, und/oder dass die Spaltbreite des ersten Spaltes 104; 104' zumindest über o. g. positionsbasierte Antriebsmittel 132; 132' und/oder über zumindest einseitige, eine Anstelllage in Richtung Nipstelle begrenzende und in ihrer Lage stellbare Anschlagmittel, d. h. beispielsweise einen oben genannten stellbaren bzw. positionierbaren Anschlag, einstellbar ist.

Alternativ oder zusätzlich hierzu sind die Lagermechanik 112; 112'; 113; 113' und/oder der Stellantrieb 109; 109'; 111; 111' vorteilhaft ausgelegt, im ersten Spalt 104; 104' zumindest im Bereich ihrer zur Filmbildung beitragenden Breite eine Linienkraft von z. B. zumindest 500 N/mm, vorteilhaft mindestens 700 N/mm, bevorzugt eine zwischen 500 N/mm und 3000 N/mm liegende Linienkraft, zwischen den den ersten Spalt 104; 104' bildenden Walzen 102; 102'; 102; 103' einzustellen und/oder aufzubringen.

Dabei kann wie oben erwähnt für das Stellen der Dosierwalze 102; 102' an die zweite Walze 103; 103' - z. B. in einer obigen Ausführung und/oder in obigem Sinne - ein kombinierter Stellmechanismus 112; 113; 112; 113 vorgesehen sein, welcher wahlweise - z. B. in einer Betriebsweise - ein positionsbasiertes Stellen über einen positionsbasierten Stellantrieb 109; 109' und - z. B. in einer zweiten Betriebsweise - ein kraftbasiertes Stellen über einen kraftbasierten Stellantrieb 111; 111' erlaubt.

Für sämtliche o. g. Ausführungen, Varianten, Konfigurationen, Ausführungsformen oder Ausgestaltungen und z. B. unabhängig von o. g. Umsetzung der Beschichtungsvorrichtung 100; 100* mit einzelnen Auftragwerken 101; 101' mit jeweiligen Gegendruckwalzen 106; 106 oder mit kombinierten Auftragwerken 101; 101' mit gegenseitig wirksamen Gegendruckwalzen 103'; 103 ist in einer besonders vorteilhaften Ausführung der Dosierspalt 104; 104' zwischen erster und zweiter Walze 102; 102'; 103; 103' auf Basis eines in obigem Sinne positionsbasierten Stellantriebs 109; 109' stellbar, also beispielsweise auf eine konstante und/oder definierte Spaltbreite einstellbar, z. B. auf eine vorgegebenen Spaltbreite hin positionierbar oder über z. B. eine Steuerkette steuerbar oder über z. B. einen Regelkreis regelbar, ist, wobei das positionsbasierte Stellen insbesondere auf eine definierte und konstant zu haltende relative Lage bzw. Spaltbreite der beiden Walzen 102; 103; 102'; 103 in ihrer Arbeitslage gerichtet ist, und/oder der Laminierspalt 107; 107' zwischen der zweiten Walze 103; 103' und der Gegendruckwalze 106; 106; 103'; 103 in obigem Sinne auf Basis eines kraftbasierten Stellantriebs 111; 111' stellbar, also beispielsweise auf eine konstante und/oder definierte Anstell- bzw. Linienkraft einstellbar, z. B. im Hinblick auf eine vorgegebene bzw. gewünschte Stellkraft über beispielsweise ein Druckregelventil oder z. B. über eine beispielsweise ein solches Druckregelventil umfassende Steuerstrecke steuerbar oder z. B. über beispielsweise eine ein solches Druckregelventil umfassende Steuerstrecke regelbar, ist, wobei das kraftbasierte Stellen insbesondere auf eine definierte und/oder konstant zu haltende Anstell- bzw. Linienkraft zwischen den beiden am zweiten Spalt beteiligten Walzen 106; 106'; 103'; 103 in ihrer Arbeitslage gerichtet ist. Lediglich klarstellend sei angemerkt, dass die zwischen den beiden am Spalt beteiligten Walzen wirksame Linien- bzw. Anstellkraft dabei insbesondere nicht unmittelbar, sondern über das durch den Spalt hindurch geführte Material, im Fall des Filmbildungsspaltes 104; 104' also z. B. über das pulverförmige Material 004; 004' und im Fall des Laminierspaltes 107; 107' über den ein- oder beidseitig den Trockenfilm 007 aufweisenden Produktstrang 002, wirkt.

Ohne Beschränkung der o. g. speziellen Ausführungsbeispiele kann dabei grundsätzlich eine beliebige der beiden am betreffenden Spalt 104; 104'; 107; 107' beteiligten Walzen 102; 102'; 103; 103'; 106; 106' durch den entsprechenden Stellantrieb 109; 109'; 111; 111' stellbar und/oder an im obigen Sinne entsprechenden Stellmechanismen 112; 112'; 113; 113' gelagert sein. Dies gilt auch für Ausführungen, wobei eine der am betreffenden Spalt 104; 104'; 107; 107' beteiligten Walzen 102; 102'; 103; 103'; 106; 106' zusammen mit einer anderen, an diesem Spalt 104; 104'; 107; 107' nicht beteiligten Walze 102; 102'; 103; 103'; 106; 106' gemeinsam derart stellbar gelagert ist.

Ebenfalls z. B. unabhängig von o. g. Umsetzung der Beschichtungsvorrichtung 100; 100* mit einzelnen Auftragwerken 101; 101' mit jeweiligen Gegendruckwalzen 106; 106 oder mit kombinierten Auftragwerken 101; 101' mit gegenseitig wirksamen Gegendruckwalzen 103'; 103 ist in einer hinsichtlich der optimalen Einstellbarkeit besonders vorteilhaften Ausführung der Dosierspalt 104; 104' zwischen erster und zweiter Walze 102; 102'; 103; 103' desselben Auftragwerks 101; 101' und/oder der Laminierspalt 107; 107' zwischen der zweiten Walze 103; 103' und der zusammenwirkenden Gegendruckwalze 106; 106; 103'; 103 - beispielsweise nicht nur lediglich positions- oder kraftbasiert, sondern - auf Basis eines kombinierten Stellantriebs 109; 109'; 111; 111' wahlweise - insbesondere in obigem Sinne - positionsbasiert stellbar, z. B. bzgl. der Spaltbreite positionierbar, über z. B. eine Steuerkette steuerbar oder über z. B. einen Regelkreis regelbar, d. h. in z. B. einer Betriebsweise auf eine konstante und/oder definierte relative Lage der beiden Walzen und/oder eine konstante und/oder definierte Spaltbreite stellbar, oder in z. B. einer anderen Betriebsweise kraftbasiert stellbar, z. B. bzgl. der Stellkraft über beispielsweise ein Druckregelventil oder z. B. eine beispielsweise ein solches Druckregelventil umfassende Steuerstrecke steuerbar oder z. B. über beispielsweise eine ein solches Druckregelventil umfassende Steuerstrecke regelbar, ausgeführt, d. h. in z. B. einer anderen Betriebsweise auf eine definierte und/oder konstante Anstell- bzw. Linienkraft hin einstellbar, z. B. im Hinblick auf eine vorgegebene bzw. gewünschte Stellkraft über beispielsweise ein Druckregelventil oder z. B. über eine beispielsweise ein solches Druckregelventil umfassende Steuerstrecke steuerbar oder z. B. über beispielsweise eine ein solches Druckregelventil umfassende Steuerstrecke regelbar, ausgeführt. Insbesondere ist eine der am betreffenden Spalt 104; 104'; 107; 107' beteiligten Walzen 102; 102'; 103; 103'; 106; 106' in einem kombinierten Stellmechanismus 112; 113; 112; 113 wahlweise positionsbasiert oder kraftbasiert stellbar gelagert und/oder der betreffende Spalt 104; 104'; 107; 107' wahlweise auf eine konstante und/oder definierte Spaltbreite oder auf eine konstante und/oder definierte Anstell- bzw. Linienkraft hin in obigem Sinne einstellbar. Auch hier kann ohne Beschränkung der o. g. speziellen Ausführungsbeispiele dabei grundsätzlich eine beliebige der beiden am betreffenden Spalt 104; 104'; 107; 107' beteiligten Walzen 102; 102'; 103; 103'; 106; 106' durch den entsprechenden kombinierten Stellantrieb 109; 109'; 111; 111' derart stellbar und/oder an im obigen Sinne entsprechenden kombinierten Stellmechanismen 112; 112'; 113; 113' entsprechend gelagert sein. Dies gilt auch für Ausführungen, wobei eine der am betreffenden Spalt 104; 104'; 107; 107' beteiligten Walzen 102; 102'; 103; 103'; 106; 106' zusammen mit einer anderen, am an diesem Spalt 104; 104'; 107; 107' nicht beteiligten Walze 102; 102'; 103; 103'; 106; 106' gemeinsam derart stellbar gelagert ist.

Der kombinierte Stellantrieb 109; 109'; 111; 111' ist in einer vorteilhaften Ausführung durch einen kraftbasierten Stellanterieb 111; 111' mit einem Stellmechanismus 113; 113'; 112; 112' gebildet, in dessen Stellweg zur Positionsbegrenzung wahlweise ein z. B. über Antriebs- oder Stellmittel positionierbarer Anschlag einbringbar ist.

Zum Stellen kann die erste Walze 102; 102' über eine Lagermechanik 113; 113'; 112; 112' und/oder einen z. B. positionsbasierten oder kraftbasierten oder wahlweise positions- oder kraftbasierten Stellantrieb 109; 109'; 111; 111' in einer Richtung mit zumindest einer Bewegungskomponente zur jeweils zugeordneten zweiten Walze 103; 103' hin und/oder von dieser weg stellbar gelagert sein. Zusätzlich oder stattdessen kann die Gegendruckwalze 106; 106'; 103'; 103 über eine Lagermechanik 113; 113'; 112; 112' und/oder einen z. B. positionsbasierten oder kraftbasierten oder wahlweise positions- oder kraftbasierten Stellantrieb 109; 109'; 111; 111' in einer Richtung mit zumindest einer Bewegungskomponente zur zweiten oder einer dazwischenliegenden weiteren Walze 103; 103' hin und/oder von dieser weg stellbar gelagert sein.

Alternativ kann die erste Walze 103; 103' mit zugeordneter zweiter Walze 102; 102' über eine gemeinsame Lagermechanik 112; 112'; 113; 113' und/oder einen gemeinsamen z. B. positionsbasierten oder kraftbasierten oder wahlweise positions- oder kraftbasierten Stellantrieb 109; 109'; 111; 111' paarweise in einer Richtung mit zumindest einer Bewegungskomponente zur zugeordneten Gegendruckwalze 106; 106' hin und/oder weg bewegbar gelagert sein, und zusätzlich hierzu die jeweilige erste Walze 102; 102' über eine Lagermechanik 113; 113'; 112; 112' und/oder einen z. B. positionsbasierten oder kraftbasierten oder wahlweise positions- oder kraftbasierten Stellantrieb 109; 109'; 111; 111' in einer Richtung mit zumindest einer Bewegungskomponente zur jeweils zugeordneten zweiten Walze 103; 103' hin und/oder von dieser weg stellbar gelagert ist.

Für sämtliche o. g. Ausführungen, Varianten, Konfigurationen, Ausführungsformen oder Ausgestaltungen sind die erste Walze 102; 102' und die mit dieser den ersten Spalt 104; 104' bildende zweite Walze 103, 103' betriebsmäßig gegensinnig und mit voneinander verschiedenen Umfangsgeschwindigkeiten und/oder durch voneinander verschiedene Antriebsmotoren, insbesondere zumindest geschwindigkeitsregel- oder steuerbaren Servomotoren, mechanisch voneinander unabhängig antreibbar oder angetrieben

Dabei ist die erste Walze 102; 102' mit einer geringeren Geschwindigkeit betrieben, wobei die erste Walze 102; 102', insbesondere Dosierwalze 102; 102', und die zugeordnete zweite Walze 103; 103', insbesondere Laminierwalze 103; 103', betriebsmäßig z. B. in einem Verhältnis V102(102') : V103(103') ihrer Umfangsgeschwindigkeit der ersten zur zweiten Walze 102, 102'; 103; 103' betreibbar oder betrieben sind, welches in einem Bereich zwischen 1 : 5 bis 3 : 5, insbesondere bei 1 : 4 liegt.

Die den zweiten Spalt 107; 107' miteinander ausbildenden Walzen 103; 106; 103; 103' sind bevorzugt betriebsmäßig mit einer selben Umfangsgeschwindigkeit durch einen gemeinsamen Antriebsmotor, insbesondere Servomotor, oder bevorzugt durch voneinander verschiedene Antriebsmotoren, insbesondere Servomotoren, mechanisch voneinander unabhängig antreibbar oder angetrieben sind.

Die voneinander mechanisch unabhängigen Antriebsmotoren sind in vorteilhafter Ausführung über eine elektronische, insbesondere virtuelle Leitachse von einer Antriebssteuerung her betreibbar.

Von besonderem Vorteil ist eine Weiterbildung, wobei die erste Walze 102; 102' im Bereich ihrer zur Filmbildung beitragenden Mantelfläche eine im Hinblick auf der Pulvermischung stärker materialabweisende Oberfläche und/oder weniger stark adhäsiv wirksame Mantelfläche aufweist als die zweite Walze 103; 103' im Bereich ihrer zur Filmbildung beitragenden Mantelfläche.

Zumindest die zweite Walze 102; 102'; 103; 103' kann zumindest im Bereich ihrer zur Filmbildung beitragenden Mantelfläche eine polierte und/oder chrombeschichtete oder keramikbeschichtete Oberfläche aufweisen. Die erste Walze 102; 102' kann zumindest die im Bereich ihrer zur Filmbildung beitragenden Mantelfläche eine strukturierte oder materialabweisende Oberfläche aufweisen.

Für sämtliche o. g. Ausführungen, Varianten, Konfigurationen, Ausführungsformen oder Ausgestaltungen ist die erste und/oder die zweite Walze 102; 102; 103; 103' temperierbar, insbesondere beheizbar, bevorzugt derart, dass ihre Mantelfläche - z. B. bei einer Umgebungstemperatur von 25°C - auf mindestens 80°C, vorteilhaft auf mindestens 100°C, bevorzugt auf mindestens 120°C aufheizbar ist.

Stattdessen oder bevorzugt zusätzlich hierzu ist auch die lediglich als Gegendruckwalze 106; 106'; 103; 103 wirksame Walze 106; 106' der ersten Gruppe von Ausführungsbeispielen temperierbar, insbesondere beheizbar, bevorzugt derart, dass ihre Mantelfläche - z. B. bei einer Umgebungstemperatur von 25°C - auf mindestens 80°C, vorteilhaft auf mindestens 100°C, bevorzugt auf mindestens 120°C aufheizbar ist.

Für sämtliche o. g. Ausführungen, Varianten, Konfigurationen, Ausführungsformen oder Ausgestaltungen können die beiden Auftragwerke 101; 101' in einer vorteilhaften Ausführung zusammen mit einem oder mehreren ggf. direkt vor, nach oder dazwischen angeordneten Substratleitelementen 121, in einem gemeinsamen Gestell, z. B. zwei stirnseitigen Seitenwänden eines selben Gestells, gelagert sein. Damit ist eine kompakte und/oder in sich steife und/oder zueinander definierte Anordnung der Auftragwerke 101; 101' in einer als Aggregat 100; 100*, z. B. Laminieraggregat 100; 100* ausgebildeten Laminiereinheit 100; 100* bereitstellbar.

Für den Fall, dass im Substratpfad - z. B. unmittelbar - stromabwärts der Laminiereinheit 100; 100* ein z. B. unten beschriebenes, auch als Kalander 600, 600* bezeichnetes Kalandrierwerk 600; 600*, vorgesehen sein sollte, können vom Kalandrierwerk 600; 600* umfasste Walzen 601; 601'; 602; 602* in einer vorteilhaften Weiterbildung ebenfalls in diesem Gestell 603 oder in einer vorteilhaften Variante z. B. als getrenntes Aggregat 600; 600*, z. B. Kalandrieraggregat 600; 600*, in Seitenwänden eines direkt auf und/oder über dem die Auftragwerke 101; 101' tragenden Gestell 128 angeordneten eigenen Gestell 603 gelagert sein.

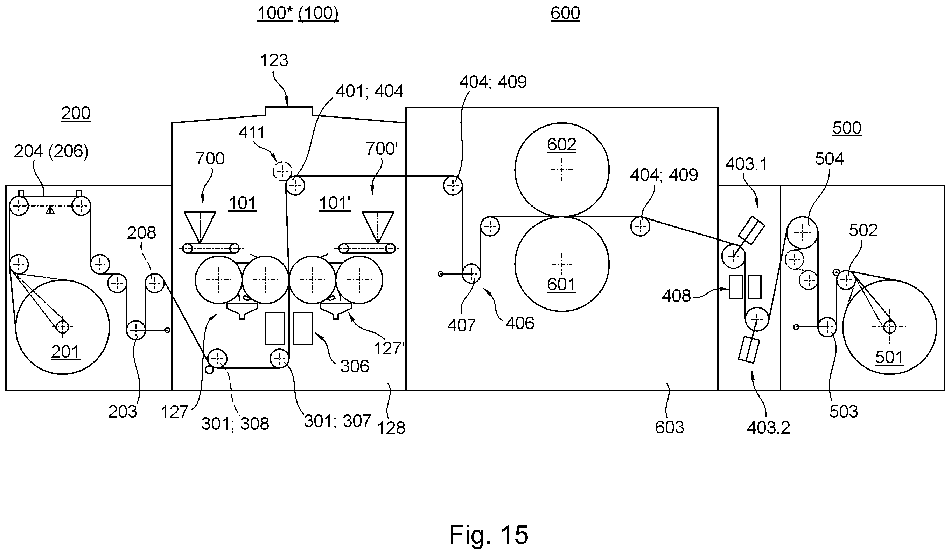

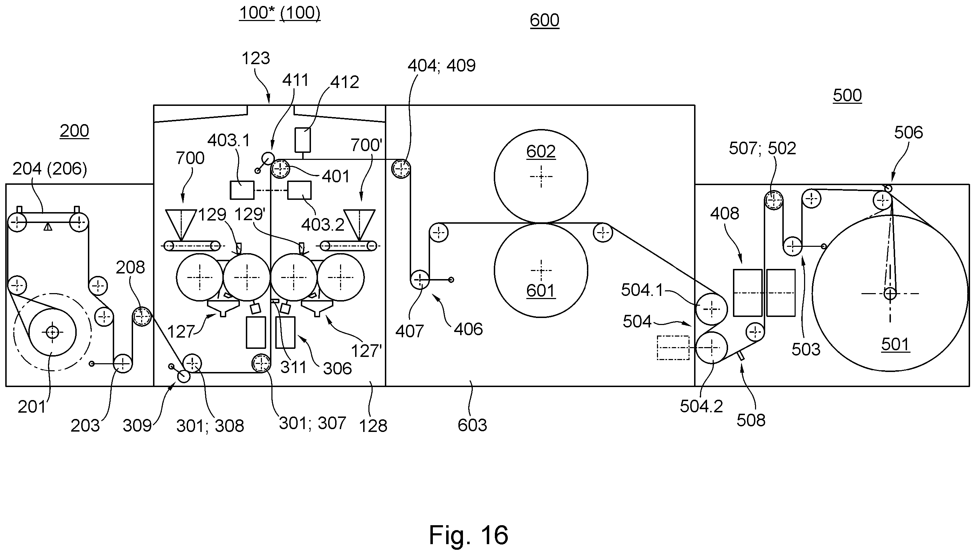

In einer z. B. in Fig. 15 und Fig. 16 dargestellten Ausführung der Maschine, welche zwar ggf. etwas länger baut, in welcher jedoch beispielsweise die Gefahr von Schwingungsübertragung zwischen den Aggregaten 100; 100*; 600; 600*, insbesondere zumindest dem Laminieraggregat 100; 100* und dem Kalandrieraggregat 600; 600*, vermindert ist, sind Laminieraggregat 100; 100* und das dort vorgesehene Kalandrieraggregat 600 horizontal nebeneinander, bevorzugt gar in eigenen, z. B. schwingungstechnisch voneinander getrennten Gestellen 128; 603, vorgesehen. Das Kalandrieraggregat 600; 600* kann in einer nicht dargestellten Variante zu Fig. 15 und/oder Fig. 16 auch entfallen.

Für sämtliche o. g. Ausführungen, Varianten, Konfigurationen, Ausführungsformen oder Ausgestaltungen sind der Stellantrieb 109; 109'; 111; 111' und/oder die von diesem umfasste Lagermechanik 112; 112'; 113; 113' zumindest der den zweiten Spalt 107; 107' bildenden Walzen 103; 103'; 106; 106' bevorzugt ausgeführt, betriebsmäßig an der engsten Stelle eine Spaltbreite b107 von mindestens 15 µm, vorteilhaft von mindestens 30 µm, insbesondere von mindestens 50 µm auszubilden und/oder, insbesondere zumindest innerhalb von den maximalen Stellweg definierenden Grenzen, eine sich zwischen den beiden Walzen 103; 106; 103; 103' über einen zu bildenden Produktstrang 002; 002' und/oder durch mindestens einen Stellmechanismus 112; 112' und/oder zumindest einen Stellantrieb 109; 109' hervorgerufene Anpress- oder Linienkraft einstellende Spaltbreite auszubilden, und/oder im zweiten Spalt 107; 107' zumindest im Bereich ihrer zur Filmbildung beitragenden Breite eine Linienkraft von z. B. zumindest 500 N/mm, vorteilhaft mindestens 700 N/mm, bevorzugt eine zwischen 500 N/mm und 3000 N/mm liegende Linienkraft, zwischen den den zweiten Spalt 107; 107' bildenden Walzen 103; 103'; 106; 106' einzustellen und/oder aufzubringen und/oder ein Konstanthalten einer gewünschten Linienkraft auch bei schwankender Trockenfilmstärke durch - z. B. selbsttätiges oder geregeltes - Nachführen zumindest einer der beiden Walzen 103; 106; 103; 103' zu ermöglichen. Dabei handelt es sich beim selbsttätigen Nachführen im Gegensatz zu einem über einen Regelkreis geregeltes Nachführen beispielsweise um ein Nachführen, welches durch das Antriebsmittel selbst und ohne ein Nachregeln über einen zusätzlichen Regelkreis erfolgt.

Für sämtliche o. g. Ausführungen, Varianten, Konfigurationen, Ausführungsformen oder Ausgestaltungen ist in einer besonders vorteilhaften Weiterbildung oberhalb des jeweiligen Auftragwerks 101; 101' bzw. der Auftragwerke 101; 101' eine Absaugung 123; 123' vorgesehen, durch welche ggf. entweichende Gase oder entstehende Dämpfe absaugbar sind.

Die Walzen 102; 102'; 103; 103'; 106; 106' oben genannter Auftragwerke 101; 101' sind bevorzugter Weise mit einer im Bereich von 400 mm bis 800 mm, insbesondere von 500 mm bis 700 mm liegenden zur Filmbildung und/oder zum Auftrag nutzbaren Breite ausgebildet.

Obgleich grundsätzlich eine beliebig ausgebildete Vorrichtung zur Zufuhr pulverförmigen Materials 700; 700' vorgesehen sein kann, durch welche dem Aufragwerk 101; 101' Pulvermischung 004 in den zwischen der ersten und der zweiten Walze ausgebildeten ersten Spalt 104; 104' zuführbar ist, ist besonders bevorzugt eine Zufuhr 700; 700' vorgesehen, durch welche dem Spalt 104; 104' unmittelbar bzw. direkt oder über eine oberhalb des Walzenspaltes 104; 104' vorgesehene Einführhilfe 711, z. B. in Art einer Trichterwanne 711, mittelbar oder indirekt ein definierter und/oder kontrollierbarer Strom Pulvermischung 004 gleichmäßig über die gesamte Abgabebreite zuführbar ist. Hierzu sind nachfolgend in verschiedener Hinsicht besonders vorteilhafte Ausführungen oder Ausführungsvarianten für die Vorrichtung zur Zufuhr pulverförmigen Materials 700; 700' dargelegt, die für sich betrachtet oder vorteilhaft in Verbindung zu jeglicher Ausführung oder Ausgestaltungen der dargelegten Auftragwerke 101; 101' und/oder Beschichtungsvorrichtungen 100; 100* und/oder Maschinenkonfigurationen vorsehbar sind. Die in den Figuren zu den Ausgestaltungen der Auftragwerke 101; 101' und/oder Beschichtungsvorrichtungen 100; 100* und/oder Maschinenkonfigurationen dargestellten Vorrichtungen zur Zufuhr pulverförmigen Materials 700; 700' können dabei lediglich schematisch verstanden und durch eine der nachfolgenden Ausführungen ausgebildet sein.

Dabei kann die Vorrichtung zur Zufuhr des pulverförmigen Materials 700; 700' in bevorzugter Ausführung mindestens eine die Abgabemenge kontrollierende und/oder definierende Abgabevorrichtung 701 aufweisen, die z. B. in Art einer Dosiervorrichtung 701 ausgebildet ist oder zumindest eine Dosiereinrichtung 704; 721 umfasst. Dabei kann eine als Dosiervorrichtung 701 ausgebildete oder eine Dosiereinrichtung 704; 721 umfassende Abgabevorrichtung 701 grundsätzlich in unterschiedlichster Weise beliebig derart ausgebildet sein, dass durch diese ein kontrollierter Strom Materials 004; 004' in oben genannter Weise abgebbar ist. In einer zu bevorzugenden Ausführung ist der Strom pulverförmigen Materials 004; 004' mittels der Abgabevorrichtung 701 an eine sich stromabwärts anschließende Fördereinrichtung 702, z. B. einen vorzugsweise als Förderband 702 ausgebildeten Linearförderer 702 abgebbar. Durch diese Fördereinrichtung 702 ist das pulverförmige Material 004; 004' - z. B. auf einer quer zur Förderrichtung T_{P} verlaufenden Förderbreite - in Art einer Pulverschüttung oder -schicht stromabwärts förderbar und ausgangsseitig bevorzugt unmittelbar oder ggf. mittelbar, z. B. über eine oder mehrere weitere Fördereinrichtungen, direkt dem Nip 104; 104' oder der ggf. vorgesehenen Einführhilfe 711 auf einer sich quer zur Förderrichtung T_{P} erstreckenden Zufuhrbreite zuführbar. Die Fördereinrichtung 702, insbesondere eine vom Förderband 702 umschlungene Walze 705, z. B. Umlenkwalze 705, insbesondere Antriebswalze 705, ist vorzugsweise bzgl. der Fördergeschwindigkeit variierbar und beispielsweise durch ein bzgl. der Geschwindigkeit variierbares Antriebsmittel 712, z. B. einen Antriebsmotor 712, insbesondere einen Servomotor 712, antreibbar. Zur Begünstigung des Transportes kann die Oberfläche einer als Förderband 702 ausgebildeten Fördereinrichtung 702 bevorzugt rau sein und/oder kann eine in Förderrichtung T_{P} abfallende Neigung aufweisen. Die Zufuhrbreite entspricht hier exakt oder zumindest in etwa, d. h. mit z. B. einer maximalen Abweichung von ± 10 %, einer Vorlagebreite eines beidseitig in der Breite begrenzten und im Walzenspalt 104; 104' direkt oder in einer darüber ggf. vorgesehenen Einführhilfe das Material 004; 004' aufnehmenden Einfüll- und/oder Vorlageraum 123.

In einer, z. B. bzgl. eines definierten und/oder vergleichmäßigten Eintrages in die Förderstrecke der Pulverzufuhrvorrichtung 700; 700', besonders vorteilhaften Ausführung umfasst die Pulverzufuhrvorrichtung 700; 700' eine in Art einer Dosiervorrichtung 701; 701' ausgebildete Abgabevorrichtung 701, 701', welche als eine, insbesondere die Fördergeschwindigkeit, betreffende Dosiereinrichtung 704 einen Linearförderer 704 umfasst, der bevorzugt als - insbesondere elektromagnetisch betriebener oder betreibbarer - Vibrationsförderer 704 ausgebildet ist, und durch welche bzw. welchen pulverförmige Material 004, 004' dosiert an eine stromabwärts folgende, Fördereinrichtung 702, z. B. einen Linearförderer 702, insbesondere ein stromabwärts folgendes Förderband 702, abgebbar ist. Die Abgabe an bzw. Aufgabe auf das Förderband 702 erfolgt hierbei nicht lediglich punktuell an einem eng begrenzten Ort, sondern abschnittsweise oder kontinuierlich über eine Abgabebreite, die - zumindest in Betriebslage - z. B. bevorzugt exakt oder zumindest in etwa, d. h. mit z. B. einer maximalen Abweichung von ± 10 %, der letztlich für die Zufuhr in den Nip 104; 104' relevanten Zufuhrbreite entspricht. Bevorzugter Weise - z. B. zur Anpassung an unterschiedliche Produktformate oder zu Korrekturzwecke - ist die Abgabebreite für die Abgabe des Materials 004; 004' durch die Dosiervorrichtung 701 bzw. Aufgabe auf das Förderband 704 quer zur Förderrichtung T_{P} betrachtet in der Breite und/oder der seitlichen Lage, z. B. manuell oder vorteilhaft fernbetätigt durch Antriebsmittel, einstellbar. Zusätzlich sind z. B. auf dem Vibrationstisch 706 - beispielsweise manuell oder in weiter automatisierbarer Ausprägung fernbetätigt durch Antriebsmittel, quer zur Förderrichtung T_{P} verlagerbare - seitliche Begrenzungen 717, z. B. Seitenführungen 717, vorgesehen. Dadurch ist auf der nachfolgenden Fördereinrichtung 702 keine signifikante Änderung in der Strombreite erforderlich, welche ansonsten ggf. einen störenden Einfluss auf das in der Breite verlaufende Höhenprofil haben könnte.

In einer vorteilhaften Weiterbildung ist auch eine Förderbreite auf dem Förderband - z. B. aus o. g. Gründen - in der Breite und/oder seitlichen Lage einstellbar. Hierzu sind z. B., beispielsweise manuell oder in weiter automatisierbarer Ausprägung fernbetätigt durch Antriebsmittel, quer zur Förderrichtung T_{P} verlagerbare seitliche Begrenzungen 716, z. B. Seitenführungen 716, vorgesehen, die über einen entsprechenden Mechanismus, z. B. eine jeweilige Gewindespindel oder Gewindespindelabschnitte, in der seitlichen Lage variierbar sind. Die Abgabebreite entspricht - zumindest in Betriebslage - beispielsweise bevorzugt exakt oder zumindest in etwa, d. h. mit z. B. einer maximalen Abweichung von ± 5 %, der letztlich für die Zufuhr in den Nip 104; 104' relevanten und gewünschten Zufuhrbreite. Abgabe- und Förderbreite können mechanisch unabhängig voneinander, mechanisch gekoppelt oder steuerungstechnisch gekoppelt in der Breite stellbar sein.

Die als Dosiereinrichtung 701 ausgeführte oder wirksame Abgabevorrichtung 701 bzw. die mindestens eine Dosiereinrichtung 704; 721 ist vorzugsweise ' derart fein im Pulverstrom einstellbar, dass im für den relevanten Bereich für die spezifische, d. h. auf die Breite bezogene Abgaberate, ein konstanter und/oder, insbesondere mit einer Genauigkeit in der Abgabemenge von maximal 3 %, insbesondere maximal 2 % Abweichung von der Soll-Abgabemenge, kontrollierbarer Strom Pulvermischung 004 an eine oder die stromabwärtig folgende, insbesondere mit konstanter und/oder kontrollierter Geschwindigkeit betreibbare, Fördereinrichtung 702, insbesondere das Förderband 702, abgebbar ist.

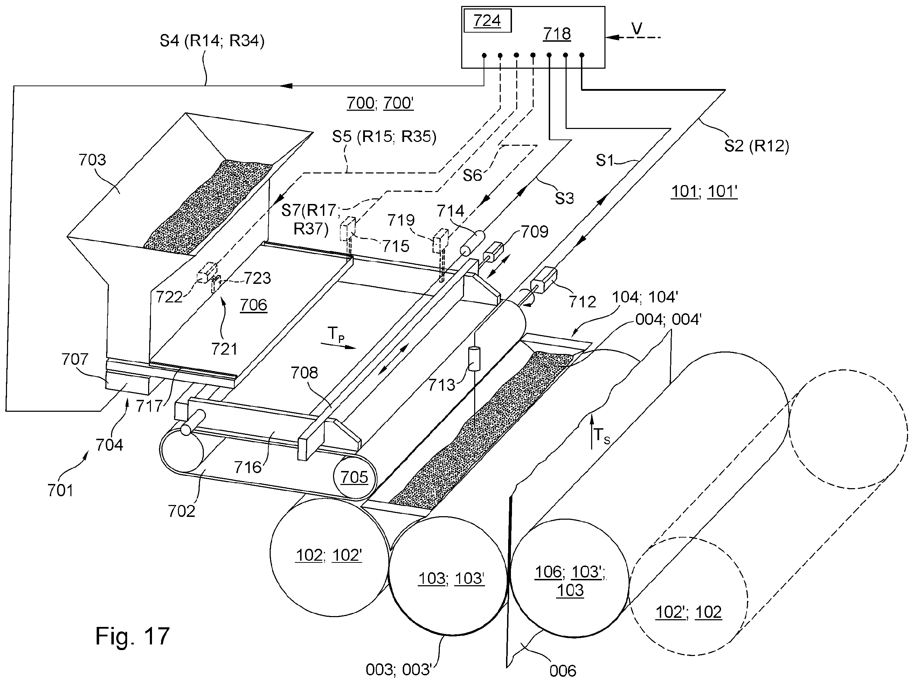

In einer z. B. in Fig. 17 ersichtlichen, z. B. bzgl. eines definierten und/oder vergleichmäßigenden Transportes in zumindest einem ersten Teil der Förderstrecke der Pulverzufuhrvorrichtung 700; 700' besonders vorteilhaften Ausführung ist als eine erste oder einzige Dosiereinrichtung 704 ein o. g., bevorzugt elektromagnetischer, Linearförderer 704, insbesondere ausgebildet als Vibrationsförderer 704, vorgesehen. Dieser erstreckt sich in der in axialer Richtung der Walzen 102, 103; 102'; 103' verlaufende Breite z. B. über eine Abgabebreite, die beispielsweise bevorzugt exakt oder zumindest in etwa, d. h. mit z. B. einer maximalen Abweichung von ± 5 %, der letztlich für die Zufuhr in den Nip 104; 104' relevanten und gewünschten Zufuhrbreite entspricht. Die Abgabebreite ist vorzugsweise einstellbar. Über diesem Vibrationsförderer 704 mündet ein abschnittsweise oder durchgehend über eine Auslassbreite reichender Auslass einer Bereitstellungseinrichtung 703, z. B. einer Versorgungsleitung 703 oder, wie z. B. in Fig. 17 dargestellt, eines Vorlagebehältnisses 703, über welche pulverförmiges Material an den Linearförderer 704 abgebbar ist. Eine als Vorlagebehältnis 703 ausgeführte Bereitstellungseinrichtung 703 kann beispielsweise in zumindest dem unteren Teil trichterförmig zusammenlaufenden Behältnisses, z. B. in Art eines Vorlagetrichters 703 ausgeführt und z. B. manuell oder über ein Leitungssystem befüllbar sein. Sie kann vorteilhaft eine fluidisierende Einrichtung, wie z. B. eine Einrichtung zum Einblasen eines gasförmigen Mediums, insbesondere von Luft, umfassen. In dargestellter und vorteilhafter Ausführung umfasst die Dosiereinrichtung 701 den Vibrationsförderer 704 sowie eine zumindest in einem gewissen Umfang Material 004; 004' vorhaltende Bereitstellungseinrichtung 703 und kann eine hier z. B. auch als Dosiergerät mit Vibrationsantrieb 701 oder kurz als Dosierrüttler 701 bezeichnete, und z. B. eine Baugruppe darstellende und als solche beziehbare Einheit bilden, welche beispielsweise manuell oder über eine Zuführleitung aus einem Vorrat nachbefüllbar ist.

Der Vibrationsförderer 704 umfasst z. B. einen Vibrationstisch 706 und ein diesen antreibendes Antriebsmittel 707, insbesondere einen diesen antreibenden, insbesondere elektromagnetisch angeregten, Vibrations- oder Rüttelantrieb 707, wobei die Begriffe Vibrations- oder Rüttelantrieb 707 hier einander gleichbedeutend verstanden werden als eine eine Rüttel- oder Vibrationseinrichtung antreibende Antriebeinrichtung 707. Dabei ist der Vibrations- bzw. Rüttelantrieb 707 bzw. eine diesen Vibrationsantrieb 707 steuernde Steuerung vorzugsweise in der Vibrationsfrequenz und/oder -amplitude variierbar und/oder der Vibrationstisch 706 hinsichtlich seines in Förderrichtung T_{P} betrachteten Gefälles manuell oder mittels eines Antriebsmittels 715, z. B. Stellantriebes 715, einstellbar.

Zusätzlich zu der o. g., durch einen Vibrationsförderer 704 ausgebildeten Dosiereinrichtung 704 kann in einer z. B. bzgl. eines besonders gut definierbaren Zuführstromes und/oder z. B. zum Vordosieren, eine den Abgabestrom am Auslass und damit den Aufgabestrom auf die Fördereinrichtung 702 variierende Dosiereinrichtung 721 vorgesehen sein. Eine solche kann z. B. durch einen in Fig. 17 lediglich schematisch angedeuteten Stellmechanismus 721 gegeben sein, durch welchen mittels zugeordneter Antriebsmittel 722, z. B. durch ein oder mehrere Stellmotoren 722; 722.x, in Verbindung mit einer das Aufgabeniveau auf die Fördereinrichtung 702 betreffenden Dosiereinrichtung 721 z. B. ein Abstand zwischen dem Auslass und der Oberseite des Linearförderers 704 und/oder in Verbindung mit einer den Abgabestrom am Auslass betreffenden Dosiereinrichtung 721 z. B. ein freier Fließquerschnitt aus oder in der Bereitstellungseinrichtung 703 variierbar ist.

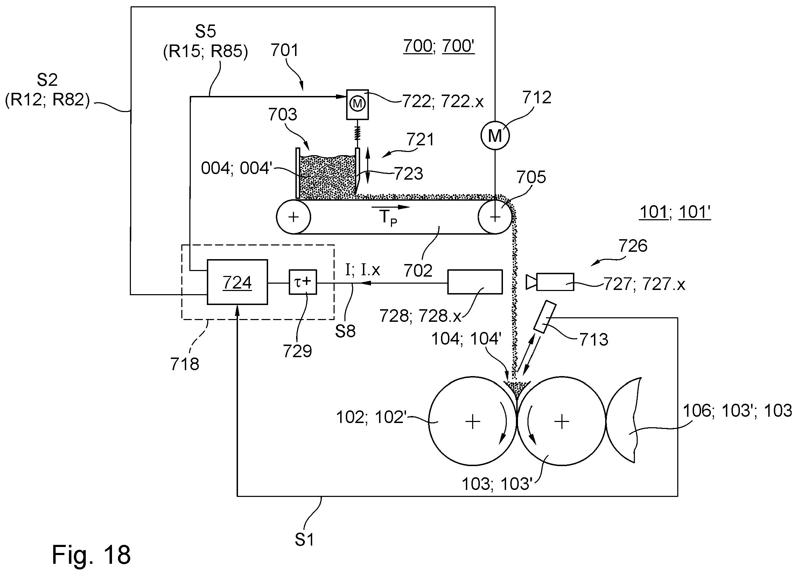

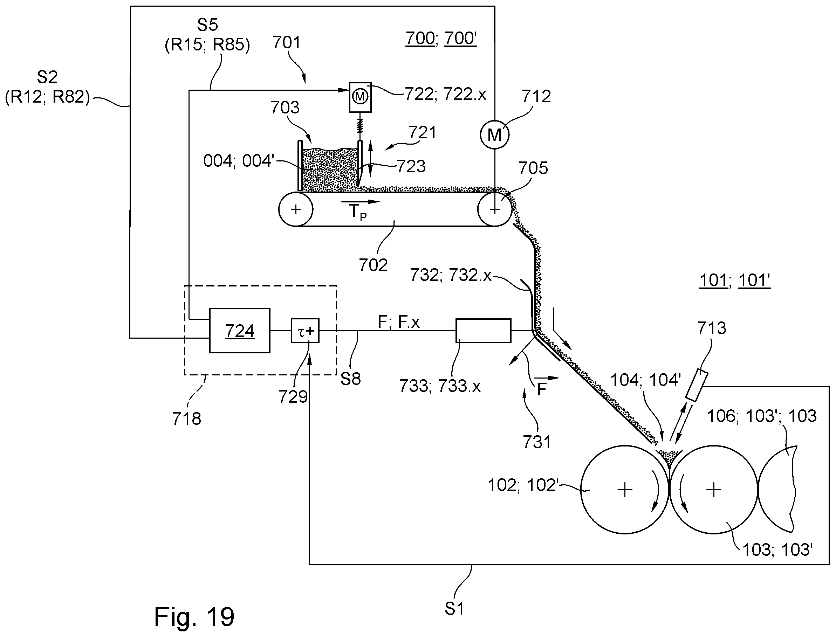

Als eine den Abgabestrom am Auslass betreffenden Dosiereinrichtung 721 kann dem Auslass der Bereitstellungseinrichtung 703 ein steuerbarer, den Auslassquerschnitt über ein oder mehrere zugeordnete Antriebsmittel 722; 722.x, z. B. einen oder mehrere Stellmotoren 722, variierender Stellmechanismus 721 zu- oder vorgeordnet sein. Ein solcher kann als in Fig. 17 exemplarisch und lediglich symbolhaft angedeutetes Stellelement 723 eine über die Auslassbreite reichende und durch das Antriebsmittel 722 betätigte Klappe 723 oder einen Schieber 723, oder durch mehrere über die Auslassbreite nebeneinander angeordnete und unabhängig voneinander durch mehrere Antriebsmittel 722.x stellbare Stellelemente 723.x wie z. B. Klappen- oder Schiebersegmente 723.x umfassen (siehe z. B. exemplarisch in Fig. 18 und Fig. 19). Im Fall mehrerer durch Antriebsmittel 722.x stellbarer Stellelemente 723.x kann beispielsweise der Fließquerschnitt bzw. Abgabestrom über die Abgabebreite hinweg variiert und/oder individuell korrigiert werden.

Als eine zusätzlich hierzu oder stattdessen vorgesehene, das Aufgabeniveau auf die Fördereinrichtung 702 betreffenden Dosiereinrichtung betreffenden Dosiereinrichtung 721 können ein oder mehrere zugeordnete Antriebsmittel 722; 722.x, z. B. einen oder mehrere Stellmotoren 722, vorgesehen sein, die über einen entsprechenden Stellmechanismus 723, z. B. ein Getriebe, den Abstand zwischen dem Auslass der Bereitstellungseinrichtung 703 und der Oberseite des Linearförderers 704 variieren, insbesondere die Bereitstellungseinrichtung 703 oder den den Auslass umfassenden Teil anheben oder absenken.

Grundsätzlich unabhängig von der Ausführung der Abgabevorrichtung 701 mit einer als Vibrationsförderer 704 ausgebildeten Dosiereinrichtung 704 und vom Vorhandensein und/oder von der Ausführung einer o. g. weiteren Dosiereinrichtung 721, vorzugsweise jedoch in Verbindung mit einer als Vibrationsförderer 704 ausgebildeten Dosiereinrichtung 704 und/oder z. B. wenigstens einer o. g. weiteren Dosiereinrichtung 721, ist in einer z. B. bzgl. eines vergleichmäßigten Materialstromes besonders vorteilhaften Ausführung der Pulverzuführvorrichtung 700; 700' über dem oder einem der Abgabevorrichtung 701 nachgeordneten Linearförderer 702 in Förderrichtung T_{P} zwischen der Stelle der Materialzuführung auf den Linearförderer 702 und einer Abgabestelle an den Walzenspalt 104; 104' oder die ggf. vorgesehene Einführhilfe 711 oder aber ggf. an eine weitere stromabwärtige Fördereinrichtung eine sich horizontal über zumindest die Förderbreite erstreckende und im Abstand zur Oberseite des Linearförderers 704 einstellbare Abnahmeeinrichtung 708 vorgesehen.

Durch eine solche Abnahmeeinrichtung 708 ist - Parallelität zwischen der Unterseite der Abnahmeeinrichtung 708 und der Oberseite des Linearförderers 704 auf zumindest der Wirklänge vorausgesetzt - eine gewünschte und gleichmäßige Schichthöhe des auf dem Linearförderer 702 bzw. Förderband 702 zu fördernden Materials 004; 004' über die Förderbreite hinweg festlegbar bzw. darstellbar. Sofern auf der gesamten Förderbreite stromaufwärts der Abnahmeeinrichtung 708 Material 004; 004' einer Stärke aufgebracht wird, die mindestens dem Abstand zwischen der Abnahmeeinrichtung 708 und der Oberseite des Linearförderers 704 entspricht, ist stromabwärts der Abnahmeeinrichtung 708 ein Materialstrom mit einer über die Lage der Abnahmeeinrichtung 708 definierten und gleichmäßigen Schichtstärke des pulverförmigen Materials 004; 004' sichergestellt.

In einer besonders vorteilhaften Ausführung ist die Abnahmeeinrichtung 708 als - bevorzugt quer zur Förderrichtung T_{P} changierbare - Abnahmerakel 708 ausgebildet, die während des Betriebes z. B. eine oszillierende bzw. changierende hin- und her-Bewegung ausführt. Hierzu ist die Abnahmerakel 708 beispielsweise axial bewegbar gelagert und durch ein Antriebsmittel 709, z. B. einen Antriebsmotor 709, changierend bzw. changierbar angetrieben. Dieser Antriebsmotor 709 kann direkt als Linearmotor oder als die Abnahmerakel 708 über ein Changiergetriebe treibender rotatorischer Motor ausgebildet sein. In vorteilhafter Weiterbildung ist die Abnahmeeinrichtung 708 durch ein - z. B. in Fig. 17 lediglich schematisch angedeutetes -Antriebsmittel 719, z. B. einen Stellantrieb 719, beispielsweise über eine Signalverbindung S6 fernbetätigt im Abstand zur Fördereinrichtung 702 einstellbar.

In einer alternativen Ausführung kann als Abnahmeeinrichtung 708 eine auf ihrer Unterseite entgegen der Förderrichtung T_{P} rotierbare bzw. rotierende Walze, insbesondere eine sog. Rollrakel, vorgesehen sein. In Weiterbildung kann diese zusätzlich in obiger Weise über entsprechende Antriebsmittel und eine entsprechende Lagerung changierbar sein.

In einer besonders vorteilhaften Ausführung einer Pulverzufuhrvorrichtung 700; 700', die z. B. auf sämtliche hier dargelegten Ausführungen, Ausgestaltungen und Varianten der Pulverzufuhrvorrichtung 700; 700' anzuwenden ist, ist zumindest eine Sensorik mit einem bevorzugt berührungslos arbeitenden Sensor 713; 714 vorgesehen, welche beispielsweise eine Information zu einer vertikalen Lage einer Pulverschichtoberfläche liefert und/oder welche beispielsweise auf einem berührungslosen Messprinzip z. B. unter Verwendung von Schallwellen oder elektromagnetischer Strahlung basiert und/oder welche zusammen mit einer über eine Signalverbindung S1; S3 verbundenen Steuer- und/oder Regeleinrichtung 724, insbesondere mit einer von der Steuer- und/oder Regeleinrichtung 724 umfassten Regelungslogik oder elektronischen Regelungsschaltung, und mit einem der oder einer Dosier- oder Fördereinrichtung 702; 704; 721 zur Variation der Abgabe- oder Förderrate zugeordneten Antriebsmittel 712 722; 707 über eine jeweilige Signalverbindung S2; S4; S5; S7 einen Regelkreis R11; R14; R15; R17; R34; R35; R37 ausbildet.

In einer besonders vorteilhaften, auf sämtliche hier dargelegten Ausführungen, Ausgestaltungen und Varianten der Pulverzufuhrvorrichtung 700; 700' anzuwenden Ausführung ist als eine Information zu einer Höhe einer Pulverschicht liefernde Sensorik eine Sensorik, insbesondere Füllstandssensorik, vorgesehen mit einem eine Information zur Füllhöhe im Walzenspalt 104; 104' bzw. in der Einführhilfe 711 liefernden Sensor 713, kurz Füllstandsensor 713, der - insbesondere von oben her - in den Zwickel des Walzenspaltes 104; 104' oder ins Innere einer ggf. über dem Walzenspalt 104; 104' vorgesehenen Einführhilfe 711 auf die Pulverschicht, insbesondere Pulverschichtoberfläche gerichteter ist und hierdurch eine mit einer Füllhöhe im Walzenspalt 104; 104 bzw. in der Einführhilfe 711 - an zumindest der betrachteten Stelle - korrespondierende Information bereitstellt.

Ein vorteilhafterweise vorgesehener Regelkreis R11; R14; R15; R17 umfasst eine o. g. Füllstandssensorik mit dem Sensor 713 zur Erfassung einer einen Füllstand an pulverförmigen Material 004; 004' im Walzenspalt 104; 104 bzw. in der Einführhilfe 711 repräsentierenden Information. In einem solchen Regelkreis R1; R1' ist z. B. der die Information zur Füllhöhe im Walzenspalt 104; 104' bzw. in der Einführhilfe 711 liefernde Sensor 713 signaltechnisch mit einer von einer o. g. Steuer- und/oder Regeleinrichtung 724 umfassten Regelungslogik oder -schaltung verbunden, die ihrerseits in Signalverbindung S2; S4; S5; S7 mit den Steuerungsmitteln eines oder mehrerer Antriebsmittel 712; 722; 715; 707 einer oder mehrerer o. g. Förder- und/oder Dosiereinrichtungen 702; 704; 721 zur Variation der Förder- und/oder Ab- bzw. Aufgaberate pulverförmigen Materials 004, 004' steht.

In einer, insbesondere für Phasen wechselnder Maschinengeschwindigkeiten wie z. B. einer Anfahrphase, vorteilhaften Ausführung ist z. B. ein die Fördergeschwindigkeit der Fördereinrichtung 702 betreffender Regelkreis R12 vorgesehen, in welchem die Füllstandssensorik über die Steuer- und/oder Regeleinrichtung 724 bzw. eine von dieser umfasste und entsprechend eingerichtete Regelungslogik oder -schaltung zur Bildung eines die Förderrate betreffenden Regelkreises R12 mit einem die Fördereinrichtung 702 antreibenden Antriebsmittel 712, hier z. B. dem das Förderband 702 antreibenden Abgabevorrichtung 701, in Signalverbindung steht. Eine Regelung der Fördergeschwindigkeit durch das betreffende Antriebsmittel 712 erfolgt hierzu z. B. füllstandabhängig, beispielsweise in der Weise, dass bei Unterschreitung einer definierten Untergrenze für den Füllstand eine Vergrößerung und bei Überschreitung einer definierten Obergrenze eine Verminderung der Fördergeschwindigkeit erfolgt.

Anstelle der füllstandabhängigen Variation oder zusätzlich hierzu kann dem Antrieb der Fördereinrichtung 702 eine zu einer die Maschinengeschwindigkeit repräsentierenden Größe V über einen hinterlegten Zusammenhang korrelierende Steuerung unterlegt sein, durch welche die Fördereinrichtung 702 beispielsweise bei ansteigender Maschinengeschwindigkeit schneller, und bei fallender Maschinengeschwindigkeit langsamer betrieben wird. Dieser Steuerung kann o. g. füllstandabhängige Regelung als Basis unterlagert sein.

Anstelle oder zusätzlich zu einem o. g., die Förderrate betreffenden Regelkreis R12 und/oder der maschinengeschwindigkeitsabhängigen Steuerung der Fördereinrichtung 702 kann in einer vorteilhaften Ausführung ein die Abgabevorrichtung 701, insbesondere die Abgaberate der Abgabevorrichtung 701 auf die Fördereinrichtung 702 betreffender Regelkreis R15; R14; R17 vorgesehen sein, in welchem die Füllstandssensorik über die Steuer- und/oder Regeleinrichtung 724 bzw. eine von dieser umfasste und entsprechend eingerichtete Regelungslogik oder -schaltung in Signalverbindung S4; S5; S7 mit einem oder mehreren von der Abgabevorrichtung 701 zu Dosierzwecken umfassten Antriebsmitteln 722; 722.x; 707; 715 steht, z. B. in einem die Abgabevorrichtung 701 betreffenden Regelkreis R15 mit einem Antriebsmittel 722; 722.x des dem Auslass vor- oder zugeordneten Stellmechanismus 721 und/oder in einem anderen die Abgabevorrichtung 701 betreffenden Regelkreis R14 dem Vibrationsantrieb 707 und/oder in einem weiteren die Abgabevorrichtung 701 betreffenden Regelkreis R117 dem Stellantrieb 715 für das Tischgefälle. Die genannten, die Abgabevorrichtung 701 betreffenden Regelkreise R15; R14; R17 können einzeln, zu zweien oder sämtlich vorgesehen sein, wobei im Fall mehrerer solcher Regelkreise R15; R14; R17 bevorzugt eine Kaskadierung oder Priorisierung einzelner Regelalgorithmen vorgesehen ist.

Eine die Füllstandssensorik zugrunde legende Regelung der Abgabevorrichtung 701, insbesondere des oder der die Abgaberate der Abgabevorrichtung 701 auf die Fördereinrichtung 702 betreffenden Regelkreises R15; R14; R17 bzw. Regelkreise R15; R14; R17 durch das betreffende Antriebsmittel 722; 722.x; 707; 715 erfolgt hierzu z. B. füllstandabhängig, beispielsweise in der Weise, dass bei Unterschreitung einer definierten Untergrenze für den Füllstand eine Vergrößerung und bei Überschreitung einer definierten Obergrenze eine Verminderung der Abgaberate erfolgt.

Anstelle der füllstandabhängigen Variation der Abgaberate oder bevorzugt zusätzlich hierzu kann der Dosierung durch die Dosiereinrichtung 701 eine zu einer die Maschinengeschwindigkeit repräsentierenden Größe V korrelierende Steuerung unterlegt sein, durch welche die Dosiereinrichtung 701 bzw. eine oder mehrere von dieser umfassten Dosiereinrichtungen 704; 721 beispielsweise bei ansteigender Maschinengeschwindigkeit die Abgaberate durch die Dosiereinrichtung 701 bzw. einer oder mehrerer von der Dosiereinrichtung 701 umfasste Dosiereinrichtungen über entsprechende Ansteuerung eines oder mehrerer o. g. Antriebsmittel 722; 722.x; 707; 715 erhöht und bei fallender Maschinengeschwindigkeit absenkt. Diese Steuerung kann mit der o. g. maschinengeschwindigkeitsabhängigen Steuerung der Fördereinrichtung 702 korreliert und/oder der o. g. füllstandabhängige Regelung der Abgabevorrichtung 701 als Basis unterlagert sein.

In einer Weiterbildung der die Abnahmeeinrichtung 708 umfassenden Ausführung kann die Zufuhrrate zusätzlich auch dadurch variiert, z. B. voreingestellt werden, indem manuell oder über eine Signalverbindung S6 fernbetätigt oder ggf. einen hier nicht explizit dargelegten Regelkreis (R16) der Abstand der Abnahmeeinrichtung 708 über ein zugeordnetes Antriebsmittel 719 variiert wird.

Grundsätzlich unabhängig von, jedoch vorteilhaft in Verbindung mit einer o. g. Füllstandssensorik und/oder einem oder mehreren o. g., den Füllstand zugrunde legenden Regelkreisen R12; R14; R15; R17 (R16) ist z. B. in einer, insbesondere einen Linearförderer 702 umfassenden, vorteilhaften Ausführung als eine alternative oder weitere, Informationen zur vertikalen Lage einer Pulverschichtoberfläche liefernde Sensorik eine eine Information zum vertikalen Niveau der Pulverschichtoberfläche auf der Fördereinrichtung 702 liefernde Sensorik, kurz Schichtniveausensorik, vorgesehen. Diese umfasst einen eine Information zur Schichthöhe oder zumindest zum Niveau der Pulverschichtoberfläche auf der Fördereinrichtung 702 liefernden, bevorzugt berührungslos arbeitender Sensor 714, z. B. Niveausensor 714, welcher beispielsweise - z. B. als optischer oder Ultraschallsensor - von einer Seite her auf das Profil der Pulverschicht gerichtet ist und zumindest eine Information zur vertikalen Lage zumindest einer höchsten Erhebung der Pulverschicht über die Förderbreite quer zur Förderrichtung T_{P} hinweg liefert. Bei hier betriebsmäßig stabiler vertikaler Lage der Förderereinrichtung 702 steht das Niveau der Pulverschichtoberfläche für eine resultierende Pulverschichtdicke.

In einem einfachen Fall wird durch den Sensor 714 beispielsweise lediglich ein Über- oder Unterschreiten eines bestimmten Niveaus einer höchsten Erhebung überwacht und das Ergebnis z. B. für Regelungszwecke herangezogen. Die Überwachung lediglich einer bestimmten Höhe auf Über- oder Unterschreitung kann beispielsweise durch eine einstrahlige Lichtschranke oder einen linear arbeitenden Ultraschallsensor realisierbar sein. In einer aufwändigeren, jedoch ggf. zu mehr Information führenden Ausführung kann durch die Sensorik - zumindest in einer bestimmten Bandbreite - auch eine Information zur vertikalen Lage einer über die Förderbreite aktuell vorliegenden höchsten Erhebung bereitstellbar sein. Hierbei kann beispielsweise eine sich in vertikaler Richtung über eine gewisse Höhe erstreckende Sensorik, wie z. B. ein Lichtgitter oder ein Ultraschallsensor mit vertikaler Auflösung, Anwendung finden.

Grundsätzlich unabhängig von, jedoch vorteilhaft in Verbindung mit einem oder mehreren o. g., den Füllstand zugrunde legenden Regelkreisen R12; R15; R14 oder R17 und/oder einer o. g. geschwindigkeitsabhängigen Steuerung, ist in einer vorteilhaften Ausführung einer die Abnahmeeinrichtung 708 umfassenden Vorrichtung, z. B. ein Regelkreis R35; R34; R37 vorgesehen, der eine o. g. Schichtniveausensorik mit einem o. g. Schichtniveausensor 714 umfasst. Dieser ist in einem solchen Regelkreis R35; R34; R37 signaltechnisch mit einer von einer o. g. Steuer- und/oder Regeleinrichtung 724 umfassten Regelungslogik oder -schaltung verbunden, die ihrerseits in Signalverbindung mit den Steuerungsmitteln eines oder mehrerer Antriebsmittel 707; 722; 715 einer oder mehrerer o. g. Dosiereinrichtungen 704; 721 zur Variation der Abgaberate der Dosiervorrichtung 701 steht. Eine Regelung der Dosiervorrichtung 701 hinsichtlich der Abgaberate bzw. einer von dieser umfassten Dosiereinrichtung 704; 721 durch das betreffende Antriebsmittel 707; 722; 715 erfolgt hierbei z. B. niveauabhängig, d. h. in Abhängigkeit von der die Schichtniveausensorik gelieferte Information, beispielsweise in der Weise, dass bei Unterschreitung einer definierten Untergrenze für das Niveau der Oberfläche oder eines Sollwertes z. B. um mehr als eine zulässige Toleranz eine Vergrößerung und bei Überschreitung einer definierten Obergrenze oder des Sollwertes z. B. um mehr als eine zulässige Toleranz eine Verminderung der durch die Abgabevorrichtung 701 abgegebenen bzw. auf der Fördereinrichtung 702 aufgegebenen Abgaberate durch wenigstens einen den Schichtniveausensor 714 umfassenden Regelkreis R35; R34; R37 erfolgt.

Anstelle oder zusätzlich zu einem o. g., die Förderrate betreffenden Regelkreis R12 und/oder der maschinengeschwindigkeitsabhängigen Steuerung der Fördereinrichtung 702 und/oder einem die Abgabevorrichtung 701, insbesondere die Abgaberate der Abgabevorrichtung 701 auf die Fördereinrichtung 702 in Abhängigkeit vom Füllstand betreffender Regelkreis R15; R14; R17 kann in einer vorteilhaften Ausführung daher ein die Abgabevorrichtung 701, insbesondere die Abgaberate der Abgabevorrichtung 701 auf die Fördereinrichtung 702 in Abhängigkeit vom Schichtniveau betreffender Regelkreis R35; R34; R37 vorgesehen sein, in welchem die Schichtniveausensorik über die Steuer- und/oder Regeleinrichtung 724 bzw. eine von dieser umfasste und entsprechend eingerichtete Regelungslogik oder -schaltung in Signalverbindung mit einem oder mehreren von der Abgabevorrichtung 701 zu Dosierzwecken umfassten Antriebsmitteln 722; 722.x; 707; 715 steht, z. B. in einem die Abgabevorrichtung 701 betreffenden Regelkreis R35 mit einem Antriebsmittel 722; 722.x des dem Auslass vor- oder zugeordneten Stellmechanismus 721 und/oder in einem anderen die Abgabevorrichtung 701 betreffenden Regelkreis R34 mit dem Vibrationsantrieb 707 und/oder in einem weiteren die Abgabevorrichtung 701 betreffenden Regelkreis R37 dem Stellantrieb 715 für das Tischgefälle. Die genannten, die Abgabevorrichtung 701 betreffenden Regelkreise R35; R34; R37 können einzeln, zu zweien oder sämtlich vorgesehen sein, wobei im Fall mehrerer solcher Regelkreise R35; R34; R37 bevorzugt eine Kaskadierung oder Priorisierung einzelner Regelalgorithmen vorgesehen ist.

Eine Pulverzufuhrvorrichtung 700; 700 mit Dosiervorrichtung 701, insbesondere einer Dosiervorrichtung 701 mit einem Dosiergerät mit Vibrationsantrieb 702, und einer stromabwärtigen Fördereinrichtung 702, insbesondere einem Linearförderer 702, wird in einer vorteilhaften Weise wie folgt betrieben:
Die insbesondere als Dosiervorrichtung 701 ausgebildete Abgabevorrichtung 701 wird anfangs und während des Betriebes bedarfsweise mit zu verarbeitenden pulverförmigen Material 004; 004' befüllt und das Material aus der Dosiervorrichtung 701 dosiert an die Fördereinrichtung 702 abgegeben, insbesondere gerüttelt. In besonders vorteilhafter Weiterbildung unter Anwendung einer o. g. Abnahmeeinrichtung 708 wird geringfügig, beispielsweise bis zu 10% bevorzugt lediglich bis zu 5% mehr Material 004; 004' an die Fördereinrichtung 702 abgegeben als tatsächlich abgenommen wird, das dann zur Bereitstellung einer gleichmäßigen Materialschichtdicke mit der sich bevorzugt changierenden Abnahmeeinrichtung auf eine bestimmte, insbesondere einstellbare Höhe abgenommen bzw. zurückgehalten wird. Die Abgaberate der Abgabevorrichtung 701 an die Fördereinrichtung 702 kann dabei z. B. über einen o. g., den Niveausensor 14 an der Fördereinrichtung 702 umfassenden Regelkreis R35; R34; R37 geregelt werden, z. B. derart, dass das detektierte Niveau immer mindestens dem eingestellten Abstand zur Fördereinrichtung 702 entspricht, vorteilhaft gar darüber liegt.

Das auf der Fördereinrichtung 702 geförderte, vorzugsweise unter der Abnahmeeinrichtung 708 in o. g. Weise durchgeführte pulverförmige Material 004; 004' wird von der Fördereinrichtung 702 direkt oder ggf., über eine weitere Fördereinrichtung in den Spalt 104; 104' oder eine ggf. darüber vorgesehene Einführhilfe 711 gefördert.

Die Fördereinrichtung 702 und ggf. eine sich anschließende weitere Fördereinrichtung kann in einer vorteilhaften Ausführung über einen o. g. Regelkreis R12 mit einem Füllstandsensor 713, der den Füllstand im Spalt 004; 004' oder in der Einführhilfe 711 überwacht, in einer oben dargelegten Weise geregelt werden.

In einer vorteilhaften Weiterbildung wird für einen Formatwechsel im herzustellenden Produkt 001; 002 die Abgabebreite der Abgabevorrichtung 701 und/oder die Förderbreite der Fördereinrichtung 702 manuell oder bevorzugt über entsprechende Antriebsmittel fernbetätigt eingestellt.

Um z. B. über ein Dosieren durch die Abgabevorrichtung 701 hinaus oder aber alternativ hierzu eine maximale Materialzufuhr zu variieren, kann in einer vorteilhaften Ausführung die Abnahmeeinrichtung 708 in ihrem Abstand zur Fördereinrichtung 702 variiert werden.

Für o. g. Ausführungen und Ausführungsvarianten der Pulverzufuhrvorrichtung 700 (z. B. in Verbindung mit Fig. 17) sowie insbesondere auch für hiervon abweichende, z. B. in Verbindung mit Fig. 18 und Fig. 19 dargelegten Ausführungen und Ausführungsvarianten für die Ausführung der Abgabe- bzw. Dosiervorrichtung 701 ist - grundsätzlich unabhängig von o. g. Sensoriken, Sensoren 713; 714 oder Regekreisen R12; R14; R15; R17; R34; R35; R37, vorteilhaft jedoch in Verbindung mit einem oder mehreren der o. g. Sensoriken, Sensoren 713; 714 oder Regekreise R12; R14; R15; R17; R34; R35; R37 - eine auf den aus der Pulverzufuhrvorrichtung 700 austretenden und in den Walzenspalt 104, 104' bzw. in die ggf. darüber angeordnete Einführhilfe 711 zugeführten Pulverstrom - insbesondere in einer Fallstrecke zwischen der oder einer letzten von der Pulverzufuhrvorrichtung 700; 700' umfassten Fördereinrichtung 702 und dem Walzenspalt 104; 104" bzw. einer ggf. vorgesehenen Einführhilfe 711 - an zumindest einer Stelle oder bevorzugt auf der gesamten Breite, insbesondere Fallbreite, durchgehend oder an mehreren Stellen punktuell oder abschnittweise gerichtete Sensorik 726; 731, z. B. Pulverstromsensorik 726; 731, mit z. B. einem Sensor 728; 733 vorgesehen, durch welche eine Information zum Pulverstroms, insbesondere zur Größe und/oder Homogenität, bereitstellbar ist. Eine solche Sensorik 726; 731 bzw. hieraus erhaltene Information kann in erster Ausführungsform eine integral, d. h. in Summe über die betrachtete, z. B. gesamte oder über einen Abschnitt durchgehende oder abschnittsweise unterbrochene Breite, insbesondere Fallbreite des Pulverstromes gewonnene Größe I; F, z. B. Messgröße I; F, liefern oder aber in zweiter Ausführungsform vorzugsweise eine in der Breite einzelne, ortsaufgelöste Werte einer solchen Größe I.x; F.x liefern.

In erster Ausführungsform kann über einen integralen Wert der Größe I; F eine Information über den Pulverstrom im beobachteten Bereich erhalten werden, die im Fall, dass nicht über die gesamt Breite detektiert wird in erster Näherung als ein Maß für den gesamten Strom herangezogen werden kann. Hiermit kann in einem z. B. unten erläuterten Regelkreis R82; R85 beispielsweise ein Pulverstrom geführt, z. B. konstant gehalten werden oder - beispielsweise bei Vorliegen z. B. empirisch ermittelter Zusammenhänge zwischen der ermittelten Größe I; F und der Größe des Durchsatzes - der Pulverstrom hinsichtlich seines Durchsatzes gesteuert oder geregelt werden.

In vorteilhafter Ausführung dieser ersten Ausführungsform ist ein Regelkreis R82; R85 vorgesehen, der eine o. g. integrale Pulverstromsensorik 726; 731 mit einem o. g. Sensor 728; 733 umfasst. Dieser ist in einem solchen Regelkreis R82; R85 über eine Signalverbindung S8 mit einer von einer o. g. Steuer- und/oder Regeleinrichtung 724 umfassten Regelungslogik oder -schaltung verbunden, die ihrerseits über eine Signalverbindung S2; S5; S7 mit den Steuerungsmitteln eines oder mehrerer Antriebsmittel 712; 707; 722; 715 einer oder mehrerer o. g. Förder- oder Dosiereinrichtungen 704; 721 zur Variation der Förderrate der Fördereinrichtung und/oder der Abgaberate der Dosiervorrichtung 701 steht. Die betreffende Regelungslogik oder - schaltung steht z. B. in einem die Förderrate betreffenden Regelkreis R82 über mit dem die Fördereinrichtung 702 antreibenden Antriebsmittel 712 und/oder in einem die Abgabevorrichtung 701 betreffenden Regelkreis R85 mit einem Antriebsmittel 722; 722.x des dem Auslass vor- oder zugeordneten Stellmechanismus 721 in Signalverbindung S2; S5. Für eine Ausführungsvariante mit einer Abgabevorrichtung mit einem o. g. Vibrationsförderer 704 kann in einem anderen die Abgabevorrichtung 701 betreffenden Regelkreis (nicht dargestellt) eine mit einem Sensor 728; 733 der Pulverstromsensorik 726; 731 signaltechnisch verbundene Regelungslogik oder -schaltung der Steuer- und/oder Regeleinrichtung 724 mit dem Vibrationsantrieb 707 und/oder in einem weiteren die Abgabevorrichtung 701 betreffenden Regelkreis (nicht dargestellt) mit dem Stellantrieb 715 für das Tischgefälle verbunden sein. Die genannten, die Abgabevorrichtung 701 und/oder Fördereinrichtung 702 betreffenden Regelkreise R82; R85 können einzeln, zu mehreren oder sämtlich vorgesehen sein, wobei im Fall mehrerer solcher Regelkreise R82; R85 bevorzugt eine Kaskadierung oder Priorisierung einzelner Regelalgorithmen vorgesehen ist.

In zweiter Ausführungsform mit an mehreren Stellen punktuell oder abschnittweise vorgesehener Sensorik 726; 731 können über die Breite hinweg durch einzelne, ortsaufgelöste Werte einer o. g. Größe I.x; P.x je einzelnem Abschnitt oder Messort jeweilige Informationen über den Pulverstrom im betreffenden Abschnitt bzw. am betreffenden Messort erhalten werden, die jeweils ein Maß für den Pulverstrom im betreffenden Abschnitt bzw. am betreffenden Messort darstellen. Hiermit kann in einem beispielsweise oben erläuterten Regelkreis R82; R85 - z. B. nach Summen- oder Mittelwertbildung - ebenfalls ein Gesamtpulverstrom geführt, z. B. konstant gehalten werden oder - beispielsweise bei Vorliegen z. B. empirisch ermittelter Zusammenhänge zwischen der ermittelten Größe I; F und der Größe des Durchsatzes - der Pulverstrom hinsichtlich seines Durchsatzes gesteuert oder geregelt werden. Anstelle oder zusätzlich zu dieser integralen Bewertung und einer darauf basierenden Regelung kann jedoch für mehrere oder sämtliche Abschnitte oder Messorte in jeweiligen Regelkreisen R82; R85 ein Pulverteilstrom zumindest relativ zu Pulverteilströmen in anderen Abschnitten bzw. an anderen Messorten oder - beispielsweise bei Vorliegen z. B. empirisch ermittelter Zusammenhänge zwischen der ermittelten Größe I.x; F.x und der Größe des Durchsatzes - der betreffende Pulverstrom, insbesondere Pulverteilstrom, hinsichtlich des Durchsatzes gesteuert oder geregelt werden.

In vorteilhafter Ausführung dieser zweiten Ausführungsform ist für mehrere oder sämtliche Abschnitte oder Messorte mit einem eigenen o. g. Sensor 728.x; 733.x je ein Regelkreis R82; R85 vorgesehen. Dieser Sensor 728.x; 733.x ist in einem solchen Regelkreis R82; R85 signaltechnisch mit einer von einer o. g. Steuer- und/oder Regeleinrichtung 724 umfassten Regelungslogik oder -schaltung verbunden, die ihrerseits in Signalverbindung mit Steuerungsmitteln mehrerer Antriebsmittel 722.x einer in der Breite abschnitt- bzw. segmentweise stellbaren Dosiereinrichtung 721 zur abschnittweisen Variation der Abgaberate aus der Dosiervorrichtung 701 steht. Dabei korrespondieren Abschnitte oder Messorte mit eigenen Sensoren 728.x; 733.x mit Abschnitten bzw. Segmenten, insbesondere Stellelementsegmenten 723.x, einer abschnittweise stellbaren Dosiereinrichtung 721, z. B. mit o. g. und durch Antriebsmittel 722.x angetriebenen Stellelementsegmenten 723.x, z. B. Klappen- oder Schiebersegmenten 723.x. Eine Regelung der einzelnen Stellelemente 723.x bzw. Stellelementsegmente 723.x erfolgt beispielsweise derart, dass in sämtlichen betrachteten Abschnitten z. B. ein gleich großer Pulverstrom durch die Sensorik 726; 731 erfasst wird. Bei Bedarf kann die Regelung auch auf ein gewünschtes Profil, d. h. mit über die Breite unterschiedlichen Pulverströmen in den betrachteten Abschnitten, gerichtet sein.

In einer vorteilhaften Ausführung (siehe z. B. Fig. 18 und Fig. 19) umfasst die Pulverzufuhrvorrichtung 700; 700' wie z. B. bereits oben zu Fig. 17 dargelegt eine Fördereinrichtung 702, durch welche pulverförmiges Material 004, 004' auf einer Förderbreite gefördert und von dort einem darunterliegenden Walzenspalt 104; 104 bzw. einer ggf. vorgesehenen Zuführhilfe 711 zugeführt wird. Die Zuführung selbst erfolgt hierbei insbesondere durch ein Herabfallen des Pulverstromes nach Erreichen des Endes der oder einer letzten Fördereinrichtung 702 über einen Fallweg und in den Walzenspalt 104; 104' oder die Einführhilfe 711 hinein.

In einer besonders vorteilhaften Ausführung einer Pulverzufuhrvorrichtung 700; 700' in einer der oben dargelegten oder nachfolgend dargelegten Ausführungen oder Varianten ist die o. g. Pulverstromsensorik 726; 731 im Bereich des Fallweges zwischen der einzigen oder stromabwärts letzten Fördereinrichtung 701 der Pulverzufuhrvorrichtung 700; 700' und dem Walzenspalt 104; 104' oder der ggf. vorgesehenen Einführhilfe 711 vorgesehen.

Eine solche Pulverstromsensorik 726; 731 ist z. B. in Verbindung mit einer vorteilhaften Ausführung für die Abgabevorrichtung 701 nach Fig. 18 und Fig. 19 dargestellt, wobei für diese bei funktional vergleichbaren oder gleichen Teilen dieselben Bezugszeichen wie zuvor in Fig. 17 Verwendung finden. Im Unterschied zur anhand von Fig. 17 dargestellten Ausführungsform ist die Abgabevorrichtung 701 hier ohne Vibrationsförderer 704, dafür jedoch mit einer z. B. in Fig. 17 lediglich schematisch angedeuteten und den Abgabestrom am Auslass der Bereitstellungseinrichtung 703 betreffenden Dosiereinrichtung 721 dargelegt, mit welcher z. B. der freie Fließquerschnitt in der Bereitstellungseinrichtung 703 oder aus dieser heraus variierbar ist. Das zur Pulverstromsensorik 726; 731 ausgeführte ist jedoch auch auf eine oben dargelegte Ausführung mit Vibrationsförderer 704 oder jede andere Ausführungsform anzuwenden, in welcher der Pulverstrom von einer Fördereinrichtung 702 her über eine Fallstrecke dem Walzenspalt 104; 104' bzw. einer ggf. darüber vorgesehenen Einführhilfe 711 zugeführt wird bzw. werden kann.

In Verbindung mit dem oben erläuterten, die Pulverstromsensorik 726; 731 umfassenden Regelkreis R85 auf der Basis eines integralen Wertes für die Größe I; F kann die Dosiereinrichtung 721 mit einem über die Breite durchgehenden oder segmentierten Stellelement 723; 723.x ausgebildet sein, wobei für letzteres beim Regeln über einen einzelnen integralen Wert der Größe I; F beispielsweise ein gleiches Stellen der Stellelemente 723.x erfolgt. Wird anhand der über die Größe I; F bereitgestellten Information ein zu geringer Pulverstrom oder eine unerwünschte Abnahme im Pulverstrom festgestellt, so wird das durchgehende Stellelement 723 bzw. werden die Stellelementsegmente 723.x für einen größeren Materialdurchtritt weiter geöffnet und umgekehrt. Auch kann bei Vorliegen eines o. g. Zusammenhangs auf einen bestimmten Durchsatz geregelt werden.

Alternativ oder zusätzlich hierzu kann in einem Regelkreis R82 auf der Basis des integralen Wertes für die Größe I; F durch entsprechende Ansteuerung des Antriebsmittels 712 auch die Geschwindigkeit der Fördereinrichtung geregelt werden.

In Verbindung mit dem oben erläuterten, die Pulverstromsensorik 726; 731 umfassenden Regelkreis R85 eines Regelns in einzelnen Abschnitten auf der Basis einzelner Werte für eine solche Größe I.x; P.x umfasst die Dosiereinrichtung 721 abschnittsweise durch Stellelementsegmente 723.x gebildete Stellelemente 723.x. Dabei werden die Stellelementsegmente 723.x bzw. deren Stellantriebe 722.x z. B. über jeweilige Regelkreise R82; R85 entsprechend der vorgegebenen Regelaufgabe auf Basis jeweils einzelner Werte für die Größe I.x; P.x an den betreffenden Abschnitten bzw. Messorten gestellt. Dabei kann beispielsweise auf ein über die Breite gleichmäßiges Profil oder ggf. auf ein vorgegebenes Profil mit über die Breite unterschiedlichen Pulverströmen geregelt werden. Auch kann bei Vorliegen eines o. g. Zusammenhangs auf ein Profil mit einem über die Breite gleichmäßigen oder variierenden Durchsatz geregelt werden. Im jeweiligen Regelkreis R82; R85 können ein oder mehrere weitere Schaltungsglieder 729, wie z. B. ein Totzeitglied 729, vorgesehen sein.

In einer ersten vorteilhaften Ausführung der Pulverstromsensorik 726 (siehe z. B. Fig. 18) basiert diese auf einer Messung unter Anwendung elektromagnetischer Strahlung, insbesondere von Licht im UV-, IR oder sichtbaren Wellenlängenbereich, insbesondere in Art einer Lichtschranke 726. Hierzu ist beispielsweise auf einer Seite des Fallweges eine Strahlungsquelle 727, z. B. eine Lichtquelle 727 vorgesehen und auf der anderen Seite eine Sensor 728; 728.x, insbesondere Strahlungsempfänger 728; 728.x. Als die Information über den Pulverstrom liefernde Größe I; I.x wird hier eine am Sensor 728 registrierte Strahlungsintensität I; I.x herangezogen. Für den Fall einer im obigen Sinne integralen Bestimmung und Bewertung mittels lediglich eines Wertes für die Größe I kann eine einzelne Strahlungsquelle 727, z. B. insbesondere gerichtete Lichtquelle 727, und/oder ein einzelner Strahlungsempfänger 728, z. B. eine Fotodiode 728 oder ein Fototransistor 728 vorgesehen sein. Für den zweiten Fall, die ein Regeln in einzelnen Abschnitten auf der Basis einzelner Werte für eine solche Größe I.x; P.x erlaubt, kann eine ausgedehnte Strahlungs- bzw. Lichtquelle 727.x, z. B. in Art eines Lichtgitters 726 eine Mehrzahl einzelner Lichtquellen 727.x oder eine Lichtleiste 727.x, und eine Mehrzahl von Strahlungsempfängern 728.x, ein ausgedehnter, insbesondere ortsauflösender Strahlungsempfänger 728.x oder aber Strahlungsempfängersegmente 728.x, wie z. B. ein Strahlungsempfängerarray 728.x, ein Fotodiodenarray 728.x oder eine Zeilenkamera 728.x, vorgesehen sein. Durch Erfassung der Strahlungsintensität I; I.x kann die Konstanz eines Massestromes überprüft werden, bei Vorliegen z. B. eines empirisch ermittelten Zusammenhangs gar der Pulverstrom hinsichtlich seines Durchsatzes - je nach Ausführung abschnittsweise oder integral - gesteuert oder geregelt werden.

In einer zweiten vorteilhaften Ausführung der Pulverstromsensorik 731 (siehe z. B. Fig. 19) basiert diese auf Anwendung einer Kraftmessung, insbesondere auf einer Messung der durch den Impuls der fallenden Pulverpartikel auf einen als Kraftaufnehmer 733; 733.x ausgebildeten Sensor 733; 733.x wirkenden Kraft. Als die Information über den Pulverstrom liefernde Größe F; F.x wird hier ein Wert für eine am Sensor 733; 733.x registrierte Kraft F; F.x herangezogen. Für den Fall einer im obigen Sinne integralen Bestimmung und Bewertung mittels eines Wertes für die Größe I kann ein einzelner Kraftaufnehmer 733 vorgesehen sein, auf welchen der Pulverstrom der gesamten Breite oder eines die Breite repräsentativen Teilabschnittes wirkt. Für den zweiten Fall eines Regelns in einzelnen Abschnitten auf der Basis einzelner Werte für eine solche Größe F.x kann eine Mehrzahl einzelner Kraftaufnehmer 733.x, z. B. als - beispielsweise piezoelektrisch arbeitendes - Kraftaufnehmerarray 733.x, vorgesehen sein.

Die Wirkung auf den oder die Kraftaufnehmer 733; 733.x kann grundsätzlich beliebig derart realisiert sein, dass ein Impuls des auf der Breite oder einem Teilabschnitt im Pulverstrom herabfallenden Materials 004; 004' an den betreffenden Kraftaufnehmer 733; 733.x übertragen wird. Im hier dargestellter und vorteilhafter Ausführung ist hierbei für den oder jeden zu betrachtenden Abschnitt, d. h. über die gesamte Breite, einen repräsentativen Teilabschnitt oder mehrere einzelne Teilabschnitte, ein Prallelement 732; 732.x, z. B. eine Prallplatte 732; 732.x, vorgesehen, welches sich im Fallweg des zu betrachtenden Abschnittes befindet und in Wirkverbindung zu einem zugeordneten Kraftaufnehmer 733; 733.x steht. Die Prallplatte 732; 732.x kann dabei in Art eines Umlenkblechs 732; 732.x ausgeführt sein, sodass zwar ein Impuls übertragen werden kann, das Material 004, 004' jedoch weiter zum Walzenspalt 104; 104' bzw. eine darüber vorgesehene Einführhilfe 711 abfließt. Das Prallelement 732; 732.x, kann schwenkbar oder elastisch gelagert und/oder gegen den Kraftaufnehmer 733; 733.x abgestützt sein, sodass sich z. B. bei wachsender Last durch den Pulverstrom die durch den Kraftaufnehmer 733; 733.x registrierte Kraft F; F.x vergrößert. Das Messprinzip ist hierbei auf einen Aufprall mit Richtungsänderung gestützt, wobei einer resultierenden Kraft F der physikalische Zusammenhang F = m x a (Kraft = Masse x Beschleunigung) und die Richtungsänderung beim Aufprall zugrunde liegt. Durch Erfassung der Kraft F kann die Konstanz eines Massestromes überprüft werden, bei Vorliegen z. B. eines empirisch ermittelten Zusammenhangs gar der Pulverstrom hinsichtlich seines Durchsatzes gesteuert oder geregelt werden.

Grundsätzlich unabhängig von, jedoch insbesondere vorteilhaft in Verbindung mit einer der o. g. Ausführungen, Varianten, Konfigurationen, Ausführungsformen oder Ausgestaltungen der Beschichtungsvorrichtung 100; 100* und/oder einer der o. g. Ausführungen oder Varianten für die Pulverzufuhrvorrichtung 700; 700* und/oder einer der unten näher erläuterten Ausstattungen und/oder Konfigurationen für die Maschine ist eine z. B. in Fig. 20 exemplarisch dargestellte Messanordnung 801 bzw. Vorrichtung zur Bestimmung der Dichte ρ einer auf einer Mantelfläche einer der Walzen 103; 103' des Auftragwerkes 101; 101' geförderten Materialschicht 003; 003' vorgesehen. In Verbindung mit einer o. g. Beschichtungsvorrichtung 100; 100* und/oder einer o. g. Pulverzufuhrvorrichtung 700; 700* wäre eine solche Messanordnung 801 gedanklich zu ergänzen.

Die Messanordnung 801 bzw. Vorrichtung umfasst eine oder die bereits o. g. Abnahmeeinrichtung 114; 114'; 116; 116', die zur Abnahme zumindest eines Teils der Materialschicht 003; 003' an einer Stelle des Umfangs der Walze 103; 103' auf zumindest einem Teil einer nutzbaren Arbeitsbreite, z. B. der zur Filmbildung wirksame Breite der Walzenmantelfläche, der Walze 103; 103' während des Rotierens an die Mantelfläche anstellbar oder angestellt ist. Die Abnahme zumindest des für die Bestimmung der Dichte ρ relevanten Teils der Materialschicht 003; 003' erfolgt durch die Abnahmeeinrichtung 114; 114'; 116; 116' während des Rotierens der Walze 103; 103' über einen Winkelbereich Δ*φ*, z. B. auch Winkelintervall Δ*φ*, zwischen einer ersten und einer zweiten Winkellage *φ*1; *φ*2 hinweg, wobei bei mehr als einer zurückzulegenden Umdrehung die zweite Winkellage *φ*2 entsprechend der zurückgelegten Winkeldifferenz mit einem Wert größer 360° anzurechnen ist. Der für die Bestimmung der Dichte ρ relevante Teil der Materialschicht 003; 003' kann aus der Abnahme während einer, mehr als einer oder einem Teil einer vollen Umdrehung resultieren. Gleichbedeutend mit dem Bezug auf einen für die Abnahme relevanten Winkelbereich Δ*φ* bzw. das betreffende Winkelintervall Δ*φ* ist im Folgenden, wo der Bezug auf die Winkellage *φ* bzw. den Winkelbereich Δ*φ* nicht zwingend oder ein direkter Bezug auf die Zeit t explizit ausgenommen ist, auch ein Zeitintervall Δt mit einem ersten Zeitpunkt t1 für den Start der Abnahme bei z. B. einer ersten Winkellage *φ*1 und einem zweiten Zeitpunkt t2 für das Ende der Abnahme bei z. B. einer zweiten Winkellage *φ*2 zu verstehen.

Grundsätzlich kann die Materialschicht 003; 003' zur Probenahme durch eine z. B. über die zur Filmbildung wirksame Breite der Walzenmantelfläche reichende, z. B. o. g. Abnahmeeinrichtung 114; 114' auf der gesamten Breite über eine bestimmte Länge bzw. einen bestimmten Winkelbereich Δ*φ* hinweg abnehmbar sein bzw. abgenommen werden. Dies insbesondere z. B. im Fall eines Aufragwerkes 101; 101', durch welches eine durch freie Abschnitte unterbrochene Materialschicht 003; 003' auf das Trägersubstrat 006 aufgebracht wird.

In einer beispielsweise o. g. und vorteilhaften Ausführung, in welcher z. B. eine über eine mehr- oder Vielzahl von Umdrehungen der o. g. Laminierwalze 103; 103' hinweg ununterbrochene Materialschicht 003; 003' auf das Trägersubstrat 006 aufgebracht wird, ist jedoch eine Abnahmeeinrichtung 116; 116' vorgesehen, die zur Abnahme lediglich eines Teils 008; 008' der Materialschicht 003; 003', insbesondere eines Materialstreifens 008; 008', der im Randbereich, d. h. einem in axialer Richtung betrachtet an einem Ende der Materialschicht 003; 003' liegenden Bereich, durch einen Randstreifen 008; 008' gebildet ist, an einer Stelle des Umfangs der Walze 103; 103' auf lediglich einem Teil einer nutzbaren Arbeitsbreite an die Mantelfläche anstellbar oder angestellt ist. Der Materialstreifen 008 wird dabei entlang einer in Umfangsrichtung verlaufenden Schnittlinie s abgetrennt und von der Mantelfläche abgehoben. Beim Randstreifen 008; 008'kann es sich um eine Verwendung des oben zum Erhalt einer geraden Kante dienenden Randbeschnittes handeln.

Die Messanordnung 801 bzw. Vorrichtung umfasst weiter eine Wägeeinrichtung 802, auf welcher ein abgenommener, insbesondere definierter und/oder feststellbarer Teil 008; 008' der auf der Walze 103; 103' zuvor geförderten Materialschicht 003; 003' gesammelt werden kann bzw. wird. Hierzu wird der abgenommene, zumindest der Bestimmung der Dichte ρ dienende Teil der Materialschicht 003; 003' beispielsweise in einem auf einer Waage 809 gelagerten Wägebehältnis 803, z. B. einer Wägeschale 803, gesammelt und hierüber dessen Masse m bestimmt. Dabei kann z. B. eine Totzeit berücksichtigt sein oder werden, die dem Weg des abgenommenen und der Bestimmung der Dichte ρ dienenden Teils der Materialschicht 003; 003' von der Stelle des Abschälens bis zur Wägeeinrichtung 802 Rechnung trägt.

Grundsätzlich ist hierbei eine Ausführung denkbar, in welcher während des Betriebes der Beschichtungsvorrichtung 100; 100* ein Randstreifen 008; 008' kontinuierlich abgenommen und auf der Wägeeinrichtung 803 bzw. im entsprechend dimensionierten Wägebehältnis 803 gesammelt wird, wobei die Masse m des über den für die Bestimmung der Dichte ρ relevanten Winkelbereich Δ*φ* abgenommenen Teils 008; 008' der Materialschicht 003; 003' ermittelt wird, indem eine Differenz zwischen der zum Zeitpunkt t2 des Endes und zum Zeitpunkt t1 des Beginns des Bestimmungsprozesses durch die Wägeeinrichtung 802 registrierten Masse m gebildet wird.

In einer vorteilhaften und z. B. in Fig. 20 exemplarisch dargestellten Ausführung, in welcher z. B. während des Betriebes der Beschichtungsvorrichtung 100; 100* ebenfalls ein Randstreifen 008; 008' kontinuierlich abgenommen sein oder werden kann und ggf. durch eine Auffangvorrichtung 117; 117' aufgenommen und über diese ggf. abgeführt wird oder werden kann, ist eine über z. B. ein Antriebsmittel 818 betätigte Separationseinrichtung 808 vorgesehen, durch welche - z. B. über ein definiertes und/oder ein zur Abnahme im relevanten Winkelbereich Δ*φ* z. B. über eine Totzeit korrelierendes Zeitintervall Δt hinweg - der bzw. ein für die Bestimmung der Dichte ρ im relevanten Winkelbereich Δ*φ* abgenommene Teil 008; 008' der Materialschicht 003; 003' der eigens für diesen Zweck vorgesehenen Wägeeinrichtung 802, insbesondere dem Wägebehältnis 803, zuleitbar ist. Die Separationseinrichtung 808 kann dabei als Ausleiteinrichtung 808 in Art einer Weiche 808 mit einer z. B. durch ein Antriebsmittel 818 betätigten Weichenzunge 817 ausgebildet sein oder aber in Art eines Diverters 808 mit einem z. B. durch das Antriebsmittel 818 betätigten Schieber 817 oder Boden 817. In einer Abwandlung mit z. B. einer durch freie Abschnitte unterbrochenen Materialschicht 003; 003' kann z. B. eine für die Bestimmung heranzuziehende Anzahl von Materialschichtabschnitten ein Randbereich 008 durch eine solche Separationseinrichtung 808 in o. g. Weise separierbar sein, wobei z. B. ggf. andere Randbereiche 008 in einer Auffangvorrichtung 117; 117' aufgenommen werden. Das auf bzw. in dem Wägebehältnis 803 aufgenommene Probematerial der abgenommenen Materialschicht 003; 003' kann beispielsweise nach einem Bestimmungszyklus über ein Antriebsmittel 814, z. B. einen Kippantrieb 814, in eine z. B. größere Materialaufnahme 816, beispielsweise ein Behältnis 816, geleert, insbesondere gekippt werden.

Des Weiteren ist eine Messeinrichtung 806 vorgesehen, über welche eine Stärke d, z. B. Schichtdicke d, der auf der Walze 103; 103' geförderten Materialschicht 003; 003' bestimmbar ist. Als solche kann in erster Näherung die Stärke d003, z. B. Schichtdicke d003, grundsätzlich irgendwo an einem Ort auf der Breite b003; b003' der Materialschicht 003; 003' und/oder zu einem Zeitpunkt eines stationären Betriebes einer die Walze umfassenden Vorrichtung eingehen, bevorzugt jedoch eine Stärke d008 bzw. Schichtdicke d008 der Materialschicht 003; 003' im abzunehmenden Materialstreifen 008; 008'. Eine solche Messeinrichtung 806 basiert bevorzugt auf einer berührungslosen Messung und ist beispielsweise als eine ultraschallbasierte, eine induktive oder eine kapazitive Messeinrichtung 806 mit einem entsprechenden Messkopf ausgeführt.

Die Bestimmung der Dichte ρ erfolgt - z. B. in hierzu vorgesehenen und beispielsweise in einer den Prozess zur Bestimmung der Dichte ρ steuernden Steuerungseinrichtung 807 vorgesehenen Datenverarbeitungsmitteln 811 - z. B. nach: ρ = m / V = m / (A· d).

Im einfachsten Fall mit z. B. einer ausreichend geraden Seitenkante der auf der Walze 103; 103' geförderten Materialschicht 003; 003' und einer über die axiale Lage der Abnahmeeinrichtung 116; 116' bekannten Breite 008 des abzunehmenden bzw. abgenommenen Materialstreifens 008; 008' kann unter Verwendung einer Information zu einem während der Probenahme des für die Bestimmung der Dichte ρ relevanten Teils 008; 008' der Materialschicht 003; 003' überstrichenen Winkelbereich Δ*φ* und einem Radius r der Walze 103; 003' unmittelbar ein Maß für die Fläche A und zusammen mit der Schichtdicke ein Maß für das Volumen V des für die Bestimmung der Dichte ρ relevanten und abgenommenen Teils 008; 008' der Materialschicht 003; 003' ermittelt werden. Dabei kann in die Bestimmung der Dichte ρ als Breite b die bekannte Breite b008 und in guter Näherung als Radius r direkt der Radius der Walze 103; 103' im Bereich der nutzbaren Mantelfläche selbst eingehen oder ein - z. B. geringfügig, beispielsweise um die mittlere Schichtdicke d008 - nach oben korrigierter Radius. Bei bekannter Breite b erfolgt die Ermittlung der Fläche A für obige Beziehung z. B. nach: A = b · 2 r π · Δ*φ*/360°.

Für den Fall z. B., dass keine ausreichend gerade Seitenkante der auf der Walze 103; 103' geförderten Materialschicht 003; 003' vorliegt und/oder eine Breite b008 des abzunehmenden Materialstreifens 008 nicht bekannt ist, kann beispielsweise eine Sensorik 804, z. B. ein optisch arbeitender Sensor 804, vorgesehen sein, durch welche über den zu betrachtenden Winkelbereich Δ*φ* dass die Breite b; b008 des abzunehmenden Randstreifens 008; 008' oder ein Verlauf der Breite b; b008 oder der Seitenkante ermittelbar und z. B. hieraus eine gemittelte Breite bestimmbar ist, wobei im letztgenannten Fall in obiger Beziehung als Breite b die gemittelte Breite tritt.

In einer vorteilhaften Alternative für den Fall einer unbekannten und/oder variierenden Breite b008 des Materialstreifens 008 kann eine Sensorik 804 mit entsprechenden Auswertemitteln vorgesehen sein, durch welche bei bekannter Lage der Schnittlinie s unter Berücksichtigung der Drehbewegung über den Winkelbereich Δ*φ* oder ein entsprechendes Zeitintervall Δt sowie einen o. g. Radius r die Fläche A direkt ermittelt, z. B. im Verlauf der Drehbewegung aufintegriert, wird.

Die Sensorik 804 bzw. der optisch arbeitender Sensor 804 kann beispielsweise durch eine Kamera 804, insbesondere eine Linienkamera 804, gebildet sein.

Eine die jeweils aktuelle Winkellage *φ* der Walze 103; 103' repräsentierende Information bzw. die Information zu einem während der Probenahme des für die Bestimmung der Dichte ρ relevanten Teils 008; 008' der Materialschicht 003; 003' überstrichenen Winkelbereich Δ*φ* können den Datenverarbeitungsmitteln 811 beispielsweise über eine Signalverbindung von einem Winkellagegeber 813 her zuleitbar sein, welcher z. B. mittel- oder unmittelbar an die Walzendrehachse gekoppelt ist, oder über eine Signalverbindung von einer die Winkellage der Walze 103; 103' mittel- oder unmittelbar vorgebenden Antriebsteuerung her.

Die Bestimmung der Dichte ρ einer auf einer Mantelfläche einer oben genannten Walze 103; 103' geförderten Materialschicht 003; 003' erfolgt somit dadurch, dass die die Materialschicht 003; 003' auf ihrer Mantelfläche tragende Walze 103; 103' um ihre Rotationsachse R103; R103' rotiert wird, an einer Stelle des Umfangs zwischen einer Aufnahme und einer stromabwärtigen Abgabe der Materialschicht 003; 003' an eine weitere Walze 103; 103' oder an ein beispielsweise ein o. g. Trägersubstrat 006 die Materialschicht 003; 003' auf der gesamten oder einem Teil 008; 008' ihrer Breite b003; b008 während des Rotierens durch eine Abnahmeeinrichtung 114; 114'; 116; 116' über einen Winkelbereich Δ*φ* hinweg von der Mantelfläche abgenommen wird, über eine Wägung die Masse m des über den Winkelbereich Δ*φ* abgenommene Teils 008 der Materialschicht 003; 003' ermittelt wird, über eine Messeinrichtung 806 noch vor der Abnahme eine Bestimmung einer Schichtdicke d; d003; d008 der Materialschicht 003; 003', vorzugsweise im abzunehmenden Bereich, erfolgt, eine Fläche A der im Winkelbereich Δ*φ* abgenommenen oder abzunehmenden Materialschicht 003; 003' auf der Walze auf z. B. einem der o. g. Wege bestimmt wird, und schließlich aus der Fläche A, der Masse m und der Schichtdicke ein Wert für die Dichte der auf der Walze 103; 103' geförderten Materialschicht 003; 003' gewonnen wird.

Der ermittelte Wert für die Dichte ρ kann beispielsweise über eine Anzeigeeinrichtung 812, z. B. ein Display 812, anzeigbar sein und/oder in einer die Beschichtungsvorrichtung 100; 100* steuernden Steuerungseinrichtung Verwendung finden.

Mittels einer o. g. Vorrichtung zur Bestimmung der Dichte ρ bzw. einem entsprechenden Verfahren kann während einer Produktion - inline oder in einem eigens vorgesehenen Lauf - die Dichte ρ und damit eine Qualität der z. B. in obiger Weise als Pulververbundstofffilm 003; 003' und/oder Aktivmaterialschicht 003; 003, beispielsweise in Art eines Trockenfilms 003; 003' ausgebildeten Materialschicht 003; 003' überprüft und ggf. erforderlichenfalls bei Abweichung von einem Sollwert oder erlaubten Sollbereich Gegenmaßnahmen getroffen werden. Diese können z. B. bei zu niedriger Dichte ρ beispielsweise eine Erhöhung eines Druckes z. B. über die o. g. Linienkraft oder eine Verkleinerung der Spaltbreite b104 in einem o. g. Walzenspalt 104; 104' oder z. B. bei zu großer Dichte beispielsweise eine Verkleinerung eines Druckes z. B. über die o. g. Linienkraft oder eine Vergrößerung der Spaltbreite b104 in einem Walzenspalt 104; 104' z. B. bei zu niedriger Dichte ρ Verkleinerung einer Spaltbreite sein. Stattdessen oder zusätzlich hierzu kommt auch eine Modifikation der Pulverzusammensetzung und/oder einer Temperatur an z. B. einer der an der Materialschichtbildung beteiligten Walzen 102; 102'; 103; 103' und/oder eine Modifikation einer o. g. Geschwindigkeitsdifferenz zwischen den an der Materialschichtbildung beteiligten Walzen 102; 102'; 103; 103' in Frage.

Eine Maschine zur Herstellung, insbesondere in einem Inline-Prozess, eines mehrlagigen Produktes (siehe z. B. Fig. 3, Fig. 10, Fig. 15 oder Fig. 16), welches auf zumindest einer Seite eines Trägersubstrates 006 einen o. g., aus einer Pulvermischung ausgebildeten Trockenfilm 003; 003' aufweist, umfasst bevorzugter Weise eine Substratzufuhr 200, durch welche der Maschine eingangsseitig das Trägermaterial 006 zuführbar ist, einen ersten Substratpfadabschnitt 300, über welchen das Trägersubstrat 006 einer Auftragstufe 100; 100* zum Aufbringen des Trockenfilms 003; 003' auf zumindest eine Seite des Trägersubstrates 006 und einen zweiten Substratpfadabschnitt 400, über welchen das auf zumindest auf einer Seite mit dem Trockenfilm 003 versehene Trägermaterial 006 einer Produktaufnahme 500 zuführbar ist, durch welche das Produkt zu Produktgebinden, z. B. zu Rollen oder Stapeln, zusammenfassbar ist.

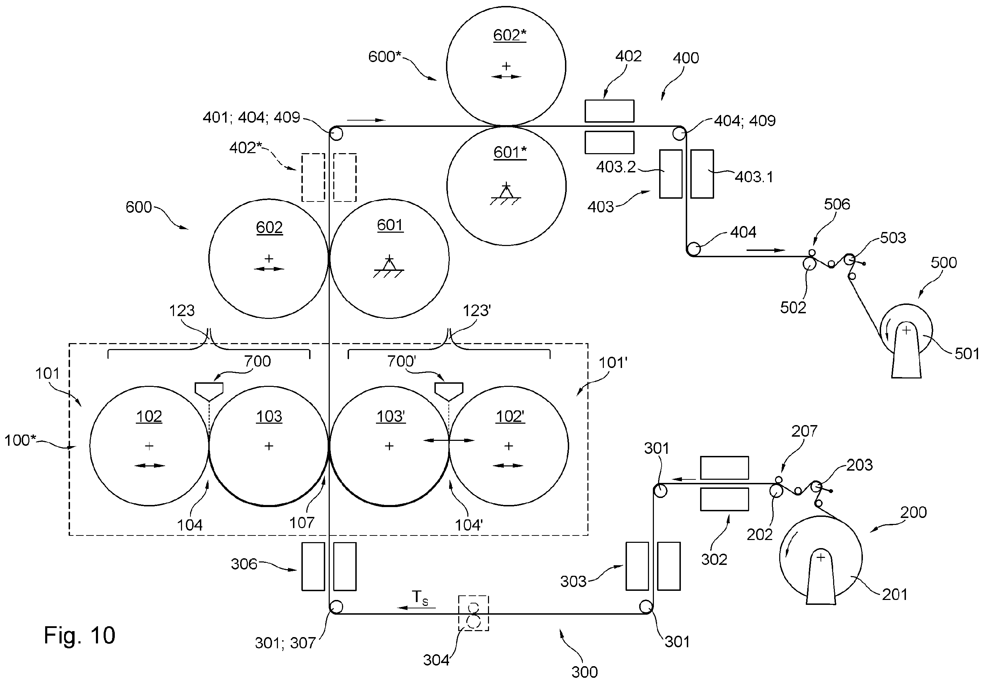

In besonders zu bevorzugender Ausführung ist die Auftragstufe 100; 100* in einer o. g. Ausführung, Ausgestaltung, Konfigurationen, Ausführungsformen oder Variante für die oben beschriebene Vorrichtung 100; 100* ausgeführt. Dabei sollen anstelle der exemplarisch in Fig. 3 dargestellten Auftragstufe 100 sämtliche Ausführungen, Ausgestaltungen, Konfigurationen, Ausführungsformen der ersten Gruppe von Ausführungsbeispielen treten können und anstelle der exemplarisch in Fig. 10, Fig. 15 oder Fig. 16 dargestellten Auftragstufe 100* sämtliche der zweiten Gruppe. In den in Fig. 15, und Fig. 16 dargestellten Ausführungsbeispielen für die Maschine sind als Varianten auch Ausführungen, Ausgestaltungen, Konfigurationen, Ausführungsformen oder Varianten der ersten Gruppe für die Auftragstufe 100, d. h. mit getrennten Auftrageinrichtungen 101; 101', anzuwenden.

Die Substratzufuhr 200 ist in einer vorteilhaften Ausführung durch einen Substratabwickler 200, insbesondere einen Rollenwechsler 200, bevorzug durch einen mehrere Rollenplätze umfassenden und/oder für einen Nonstop-Rollenwechsel qualifizierten Rollenwechsler 200, ausgebildet. Sie kann vorteilhaft ein als motorisch zwangsgetriebene Walze 202, insbesondere Zugwalze 202, ausgebildetes Substratführungselement 202 und/oder ein Substratführungselement 203 in Form einer - z. B. an einem Hebel oder einer Führung quer zum Substratpfad federnd vorgespannten - Tänzerwalze 203 umfassen.

Am Substratabwickler 200 wird die Trägersubstratbahn 006 abgewickelt und am Ort des Abwickelns eingangsseitig dem durch die Maschine führenden Substratpfad zugeführt.

Für den Fall einer vom Substratabwickler umfassten und diesem z. B. baulich zugerodneten Zugwalze 202 (siehe exemplarisch z. B. in Fig. 3 oder Fig. 10) kann diese von einem Zugwerk 207, insbesondere Einzugwerk 207, umfasst sein, welches beispielsweise neben der Zugwalze 202 ein die Zugwalze 202 - insbesondere unabhängig von anderen Zugwalzen - antreibendes und bezüglich der Geschwindigkeit regel- und/oder steuerbares Antriebsmittel, insbesondere einen Antriebsmotor, z. B. in Form eines Servoantriebsmotors, und/oder an die Zugwalze 202 anstellbare Andrückrollen zur Erhöhung der Friktion aufweist. Dabei kann die Walze 202 bzw. das Antriebsmittel - je nach den vor und nach der Walze 202 vorliegenden Bahnspanungsverhältnissen und/oder Bahnspanungserfordernissen - auch generatorisch bzw. den Vorschub der Trägersubstratbahn 006 hemmend betreibbar oder betrieben sein, um beispielsweise im sich anschließenden und sich z. B. bis zu einer nächsten Klemm- oder Bahnzugstelle stelle erstreckenden Substratpfadabschnitt 300 oder in einem durch eine sich anschließende Substratpfadstrecke gebildeten Teil des Substratpfadabschnitt 300 eine bestimmte und/oder gewünschte Bahnspannung aufzubauen bzw. aufrechtzuerhalten.

Z. B. noch baulich dem Substratpfad im Rollenabwickler 200 oder bereits dem ersten Substratpfadabschnitt 300 zugeordnet kann im Substratpfad ein Substratführungselement 208; 307 als Messwalze 208, z. B. Bahnspannungsmesswalze 208; 307 (exemplarisch für sämtliche Ausführungen z. B. in Fig. 16 dargestellt), ausgebildet sein, durch welche beispielsweise die Bahnspannung oder zumindest ein die Bahnspannung repräsentierendes Größe ermittelbar ist um diese z. B. zur Regelung der Bahnspannung z. B. über die Fördergeschwindigkeit einzelner Aggregate 100; 100*; 600 oder eines oder mehrerer insbesondere motorisch zwangsgetriebener Bahnführungselemente 202; 308; 401; 502 heranzuziehen.

Die als Rollenwechsler 200 ausgebildete Substratzufuhr 200 umfasst vorteilhaft einen mechanisch unabhängig vom Rest der Maschine und/oder einzelmotorisch angetriebenen Rollenantrieb und/oder eine Hebeeinrichtung zur Unterstützung eines Rollenlade- und/oder Rollenentladeprozesses.

Noch in der der der Substratzufuhr 200 zuzurechnenden Substratpfadstrecke und/oder im sich anschließenden ersten Substratpfad 300 kann in einer vorteilhaften Ausführung eine Einrichtung zur seitlichen Bahnkantensteuerung 204 (exemplarisch für sämtliche Ausführungen z. B. in Fig. 15 dargestellt), insbesondere eine eine Bahnkante detektierende Sensorik und ein einen seitlichen Versatz des Trägersubstrates bewirkendes Stellglied, z. B. einen um eine senkrecht zur Transportrichtung Ts verlaufende Achse verschwenkbares Wendestangenpaar, vorgesehen sein. In einer besonders vorteilhaften Ausführung ist die Bahnkantensteuerung 204 mit einer Anklebeeinrichtung 206, z. B. einem Anklebetisch 206, kombiniert.

Stattdessen oder zusätzlich ist in einer vorteilhaften Ausführung noch in der Substratpfadstrecke der Substratzufuhr 200 und/oder im ersten Substratpfad 300 eine Breitstreckeinrichtung, insbesondere ein ein- oder mehrgliedriges Bahnleitelement mit einer konvex verlaufenden Mantelfläche, vorgesehen.

In einer vorteilhaften Weiterbildung ist im ersten Substratpfad 300 eine ein- oder mehrteilige Vorbehandlungsstation 302, insbesondere eine Reinigungs- und/oder Entionisierungsstation 302 vorgesehen, durch welche das Trägersubstrat 006 ein- oder beidseitig in einem kontaktlosen oder kontaktierenden Verfahren von oberflächlichen Verunreinigungen, z. B. Staub oder Schnittresten, und/oder elektrischen Ladungsträgern befreit wird oder werden kann.

Im ersten Substratpfad 300, insbesondere stromabwärts eines ggf. vorgesehenen Reinigens, ist vorteilhaft eine Messstation 303, insbesondere mit einer schall- oder strahlungsbasierten Messvorrichtung 303, vorgesehen, durch welche die Materialstärke des Trägermaterials 006 auf deren Stärke und/oder Homogenität in der Stärke und/oder auf Verunreinigungen überprüfbar ist und z. B. bei unzulässigen Abweichungen von einer Sollvorgabe ein optisches/und/oder akustisches Warnsignal und/oder eine Fehlersignal an eine Maschinensteuerung und/oder einen Leitstand übermittelt wird.

Für sämtliche Ausführungen der Maschine kann in vorteilhafter Ausführung in einer baulich dem Rollenabwickler 200 zugeordneten Substratpfadstrecke und/oder in einer sich daran anschließenden Substratpfadstrecke des ersten Substratpfades 300 ein Substratführungselement 208; 307 als Messwalze 307 (exemplarisch für sämtliche Ausführungen z. B. in Fig. 15 und Fig. 16 dargestellt) ausgebildet sein, durch welche beispielsweise die Bahnspannung ermittelbar ist um diese z. B. zur Regelung der Bahnspannung z. B. über die Fördergeschwindigkeit einzelner Aggregate 100; 100*; 600 oder eines oder mehrerer insbesondere motorisch zwangsgetriebener Bahnführungselemente 202; 308; 401; 502 heranzuziehen. Dabei kann lediglich eine der beiden Messwalzen 208; 307 oder können vorteilhaft beide Messwalzen 208; 307 vorgesehen sein, wobei im letzten Fall z. B. die stromabwärtiger liegende Messwalze 307 zur Ermittlung und/oder der unten genannten Regelung der der Bahnspannung im der ersten oder einzigen Auftragstelle vorgeordneten Substratpfadstrecke herangezogen wird. In einer vorteilhaften Weiterbildung ist im ersten Substratpfad 300 z. B. eine als Auftragstation 304 ausgebildete Vorbehandlungsstation 304 vorgesehen, durch welche das Trägermaterial 006 ein- oder beidseitig mit einem Binder und/oder einem Primer beaufschlagbar ist. In diesem Fall kann vorzugsweise ein nicht dargestellter Trockner, z. B. ein Heißluft- oder Strahlungstrockner, direkt stromabwärts der Auftragstation 304 vorgesehen sein.

In einer besonders zu bevorzugenden Ausführung grundsätzlich für sich betrachtet, jedoch vorteilhaft in Verbindung mit einer oder mehreren der anderen Ausführungsvarianten der Maschine, ist im Substratpfad unmittelbar vor der Auftragstufe 100; 100*, d. h. z. B. stromabwärts des letzten mit der Trägersubstratbahn 006 zusammenwirkenden Substratführungselements 301; 307, eine thermische Vorbehandlungsstation 306, insbesondere eine Temperierstation 306, z. B. eine Infrarotstrahlungsquelle 306, vorgesehen sein, durch welche das Trägermaterial 006 über Umgebungstemperatur, insbesondere auf über 60°C, bevorzugt auf mindestens 80°C, erwärmbar ist. Dies kann z. B. von besonderem Vorteil für ein Aktivieren eines auf dem Trägersubstrat 006 vorgesehenen oder aufgebrachten verbindungsunterstützenden oder -bewirkenden Mittels 007; 007' sein. Grundsätzlich unabhängig hiervon, jedoch vorteilhaft in Verbindung mit einer solchen Temperierstation 306 kann ein Sensor 311 zur Ermittlung der Temperatur der Trägersubstratbahn 006, z. B. Temperatursensor 311, insbesondere berührungslos und/oder strahlungsbasiert arbeitender Temperatursensor 311 vorgesehen sein. Der Sensor 311, z. B. als Temperatursensor 311 kann mit der ggf. vorgesehenen Temperierstation 306 Bestandteil eines Regelkreises zum Regeln der Temperatur der Trägersubstratbahn 006 sein

Anstatt einer dem Substratabwickler 200 zuzurechnenden Zugwalze 202 bzw. zuzurechnenden Zugwerks 207 oder ggf. zusätzlich hierzu kann eine Zugwalze 308 bzw. ein Zugwerk 309 im sich an den Substratabwickler 200 anschließenden und/oder zur Stelle des ersten oder einzigen Trockenfilmauftrag, d. h. zum ersten oder einzigen Laminierspalt 107; 107', führenden Substratpfadabschnitt 300 vorgesehen sein. Im Fall lediglich einer Zugwalze 202; 308 bzw. lediglich eines Zugwerks 207; 309 im Substratpfad zwischen der Abwicklung von der Rolle 201 und dem Eintritt in den ersten oder einzigen Laminierspalt 107; 107' kann eine solche Zugwalze 202; 308 bzw. ein solches Zugwerk 207; 309 grundsätzlich baulich dem Substratabwickler 200, einem sich zwischen Substratabwickler 200, insbesondere von der Abwicklung, und Auftragstufe 100; 100*, insbesondere der erster oder einziger Auftragstelle, erstreckenden Substratpfadabschnitt 300 oder baulich ebenso gut der Auftragstufe 100; 100* eingangsseitig zuordenbar oder zugeordnet sein. Wesentlich ist hierbei, dass der ersten Auftragstelle, d. h. dem ersten oder einzigen Laminierspalt 107; 107', im Substartpfad eine solche Zugwalze 202; 308 bzw. ein solches Zugwerk 207; 309 vorgeordnet ist, um beispielsweise im sich anschließenden Substratpfadabschnitt oder in einem durch eine sich anschließende Substratpfadstrecke gebildeten Teil des Substratpfadabschnittes eine bestimmte und/oder gewünschte Bahnspannung aufzubauen bzw. aufrechtzuerhalten. Das Zugwerk weist dabei - in Entsprechung zum bereits oben beschriebene Zugwerk 207 - z. B. neben der Zugwalze 308 ein die Zugwalze 308 - insbesondere unabhängig von anderen Zugwalzen - antreibendes und bezüglich der Geschwindigkeit regel- und/oder steuerbares Antriebsmittel, z. B. in Form eines Servoantriebsmotor, und/oder an die Zugwalze 308 anstellbare Andrückrollen zur Erhöhung der Friktion auf. Dabei kann die Walze 308 bzw. das Antriebsmittel - je nach den vor und nach der Walze 308 vorliegenden Bahnspanungsverhältnissen und/oder Bahnspanungserfordernissen - auch generatorisch bzw. den Vorschub der Trägersubstratbahn 006 hemmend betreibbar oder betrieben sein, um beispielsweise im sich anschließenden und sich z. B. bis zu einer nächsten Klemm- oder Bahnzugstelle erstreckenden Substratpfadabschnitt oder in einem durch eine sich anschließende Substratpfadstrecke gebildeten Teil des Substratpfadabschnitt eine bestimmte und/oder gewünschte Bahnspannung aufzubauen bzw. aufrechtzuerhalten.

In einer vorteilhaften Ausführung ist im zweiten Substratpfad 400, insbesondere im Substratpfad unmittelbar nach der Auftragstufe 100; 100*, ein o. g. Kalander 600 bzw. ein o. g. Kalandrierwerk 600 mit zwei einen Spalt, z. B. Kalandrierspalt zwischen sich ausbildenden Walzen 601; 602, insbesondere Kalandrierwalzen 601; 602, vorgesehen, von denen z. B. mindestens eine, bevorzugt beide beheizbar, insbesondere derart beheizbar ist bzw. sind, dass ihre Mantelfläche - z. B. bei einer Umgebungstemperatur von 25°C - auf mindestens 80°C, vorteilhaft auf mindestens 100°C, bevorzugt auf mindestens 120° verbringbar ist und/oder zwischen welchen eine Pressung mit einer bevorzugt einstellbaren Linienkraft von zumindest 500 N/mm, vorteilhaft mindestens 700 N/mm, bevorzugt eine zwischen 500 N/mm und 3000 N/mm liegende Linienkraft aufbringbar ist. Durch den Kalandrierspalt ist der zumindest einseitig beschichtete Produktstrang 002 zwecks weiterer Verdichtung des Trockenfilms 003; 003' unter Anwendung von Druck und/oder gegenüber der Umgebungstemperatur erhöhter Temperatur hindurch führbar.

Grundsätzlich unabhängig von, jedoch vorteilhaft in Verbindung mit einer oder mehreren der anderen Ausführungsvarianten der Maschine, ist in besonders vorteilhafter Ausführung im zweiten Substratpfad 400 nach der Auftragstufe 100; 100*, im Fall eines ggf. vorgesehenen Kalandrierwerk 600 stromabwärts von diesem, eine Kühleinrichtung 402, z. B. mit einer oder mehreren teilumschlungenen temperierten Kühlwalzen 402.1; 402.2, vorgesehen, durch welche ein hindurchgeführter Produktstrang 002, z. B. um mindestens 20°C, insbesondere um mindestens 50°C, abkühlbar ist.

Grundsätzlich unabhängig von, jedoch vorteilhaft in Verbindung mit einer oder mehreren der anderen Ausführungsvarianten der Maschine, ist in vorteilhafter Weiterbildung im zweiten Substratpfad 400 eine, insbesondere auf einer optischen und/oder akustischen Messung basierende, Inspektionseinrichtung 403; 403.1; 403.2, z. B. mit einem auf die eine Seite gerichteten Sensor 403.1 und einem auf die andere Seite gerichteten Sensor 403.2, vorgesehen, durch welche die Produktoberfläche auf Fehler oder Fehlstellen, z. B. auf Vollständigkeit in der Fläche und/oder Stärke des aufgebrachten Trockenfilms 003; 003', überprüfbar ist. Die Inspektionseinrichtung 403; 403.1, 403.2 kann dabei - wie z. B. in Fig. 15 dargestellt - im Substratpfad stromabwärts des Kalandrierwerks 600 oder - wie z. B. in Fig. 16 dargestellt - im Substratpfad stromabwärts der Auftragstufe 100; 100' jedoch stromaufwärts des Kalandrierwerks 600 vorgesehen sein. Im erstgenannten Fall können durch das Kalandrieren hervorgerufene Fehler erkannt werden, im zweiten Fall jedoch ein möglichst frühzeitiges Feststellen von ggf. in der Auftragstufe 100; 100' hervorgerufene Fehler. Die Inspektionseinrichtung 403 kann dabei vorzugsweise als Sensoren 403.1; 403.2 je Seite eine Kamera, z. B. Zeilenkamera, umfassen, durch welche die jeweilige Oberfläche aufgenommen bzw. optisch abgetastet und über eine nachgelagerte Auswerteeinrichtung auf fehlerhafte oder fehlende Stellen ausgewertet wird.

Grundsätzlich unabhängig von, jedoch auch vorteilhaft zusammen mit anderen Ausführungsvarianten der Maschine, insbesondere jedoch in Verbindung mit einer am Substratpfad vorgesehenen Inspektionseinrichtung 403; 403.1; 403.2 ist in vorteilhafter Weiterbildung eine Einrichtung zur Fehlstellenmarkierung 412 vorgesehen, die beispielsweise durch ein Druckeinrichtung, z. B. ein Inkjet-Druckkopf, oder eine Einschießeinrichtung gebildet sein kann, wobei letztere beispielsweise ein gegenständliches Markierungsmittel, z. B. eine sog. Markierungsfahne oder Markierungslabel, auf die Trägersubstratbahn 006 ein- bzw. aufbringen kann.

Für sämtliche Ausführungen der Maschine kann in vorteilhafter Ausführung im zweiten Substratpfad 400 mindestens ein Substratführungselement 409 als Messwalze 409 ausgebildet sein, durch welche beispielsweise die Bahnspannung ermittelbar ist um diese z. B. zur Regelung der Bahnspannung, z. B. über die relative Fördergeschwindigkeit einzelner Aggregate 100; 100*; 600 oder eines oder mehrerer insbesondere motorisch zwangsangetriebener Bahnführungselemente 202; 308; 401; 502, heranzuziehen. Bevorzugter Weise ist zumindest in der der Auftragstufe 100; 100*, insbesondere der Stelle des letzten oder einzigen Auftrages nachgeordneten und einem ggf. vorgesehenen Kalandrierwerk 600, insbesondere der Stelle eines ggf. stattfindenden Kalandrierens vorgeordneten, Substratpfadstrecke des zweiten Substratpfadabschnittes 400, insbesondere bevorzugt jedoch sowohl in der genannten als auch in der dem in einer vorteilhaften Ausführung vorgesehenen Kalandrierwerk 600 nachgeordneten Substratpfadstrecke mindestens ein Substratführungselement 409 als Messwalze 409 ausgebildet. Stattdessen oder zusätzlich hierzu kann ein baulich dem Produktaufwickler 500 zugeordnetes Substratführungselement 507 als eine dem Kalandrierwerk 600 im, Substratpfad nachgeordneten Messwalze 507 ausgebildet sein.

Um einen optimalen Substratlauf durch die Auftragstufe 100; 100* sicherstellen zu können, ist in einer vorteilhaften Ausführung im zweiten Substratpfad 400, bevorzugt unmittelbar hinter der Auftragstufe 100; 100*, jedoch vor einem ggf. vorgesehenen Kalandrierwerk 600, ein als motorisch zwangsgetriebene Zugwalze 401 ausgebildetes Substratführungselement 401 vorgesehen. Diese kann von einem Zugwerk 411 umfasst sein, welches beispielsweise neben der Zugwalze 401 selbst ein die Zugwalze 401 - insbesondere unabhängig von anderen Zugwalzen - antreibendes und bezüglich der Geschwindigkeit regel- und/oder steuerbares Antriebsmittel, z. B. in Form eines Servoabtriebsmotor, und/oder an die Zugwalze 401 anstellbare Andrückrollen zur Erhöhung der Friktion aufweist. Dabei kann die Walze 401 bzw. das Antriebsmittel - je nach den vor und nach der Walze 401 vorliegenden Bahnspanungsverhältnissen und/oder Bahnspanungserfordernissen - grundsätzlich zwar auch generatorisch bzw. den Vorschub der Trägersubstratbahn 006 hemmend betreibbar oder betrieben sein, ist hier jedoch zum Aufbau und/oder Erhalt einer Bahnspannung auf der vorgelagerten Substratpfadstrecke motorisch, d. h. die Trägersubstratbahn 006 in Transportrichtung Ts fördernd bzw. mit einer Voreilung gegenüber z. B. der Geschwindigkeit an einer stromaufwärtig nächsten Zugwalze 202; 301 und/oder der Umfangsgeschwindigkeit der letzten oder einzigen Laminierwalze 107; 107' oder des Paares von Laminierwalzen 107; 107' betrieben oder betreibbar.

Alternativ oder zusätzlich hierzu ist in einer bevorzugten Ausführung im zweiten Substratpfad 400 stromabwärts der Auftragstufe 100, 100*, ggf. zwischen der Auftragstufe 100; 100* und einem in einer vorteilhaften Ausführung vorgesehenen Kalandrierwerk 600, eine Bahnspannungsausgleichs- und/oder -regeleinrichtung 406 (z. B. in Fig. 15 exemplarisch dargestellt für sämtliche Ausführungen), mit z. B. einer - z. B. an einem Hebel oder einer Führung quer zum Substratpfad federnd vorgespannten - Tänzerwalze 407, vorgesehen, durch welche beispielsweise Schwankungen in der Bahnspannung ausgleichbar und/oder die Fördergeschwindigkeit eines vor- oder nachgelagerten Aggregates 100; 100*; 600 oder eines oder mehrerer insbesondere motorisch angetriebener Bahnführungselemente 202; 308; 401; 502 - insbesondere über den Ausschlag der Tänzerwalze 407 - regelbar ist.

Für sämtliche hier genannten Ausführungen und Varianten der Maschine ist eine Ausführungsform von besonderem Vorteil, in welcher im der Auftragstufe 100; 100* nachgeordneten Substratpfad - für den Fall eines im Substratpfad vorgesehenen Kalandrierwerks 600; 600 stromabwärts dieses einzigen oder letzten Kalandrierwerks 600; 600 - vor dem Zusammenfassen zum Produktgebinde 501 in der Produktaufnahme - eine Messstation 408 zur Ermittlung der Produktstrangstärke, insbesondere der Gesamtstärke, vorgesehen ist (z. B. in Fig. 15, und Fig. 16 exemplarisch dargestellt für sämtliche Ausführungen).

Anstelle oder zusätzlich zu o. g. Kühleinrichtung 402 im zweiten Substratpfadabschnitt 400 kann eine solche oder weitere Kühleinrichtung 402; 504 auch in der der Produktaufnahme 500 zuzurechnenden Substratpfadstrecke bzw. an deren Gestell vorgesehen sein. Eine solche Kühleinrichtung 504 kann beispielsweise durch ein als Kühlwalze 504 ausgebildetes Substratführungselement 504 gebildet sein. Alternativ kann eine solche - dem zweiten Substratpfadabschnitt 400 oder baulich der Produktaufnahme 500 zuzurechnende Kühleinrichtung 504 auch durch eine oder mehrere nacheinander teilumschlungene temperierte Kühlwalzen 504.1; 504.2 gebildet sein.

In Weiterbildung kann - z. B. stromabwärts der ggf. vorgesehenen Kühleinrichtung 504 - ein Sensor 508 zur Ermittlung der Temperatur des Produktes 002, insbesondere des Produktstranges 002, im Substratpfad stromabwärts des ggf. vorgesehenen Kalandrierwerks 600, jedoch spätestens vor der Auslage, z. B. vor einem Aufwickeln im Produktaufwickler 500, vorgesehen sein. Der Sensor 508, z. B. als Temperatursensor 508, ist insbesondere berührungslos und/oder strahlungsbasiert arbeitender Temperatursensor 311, ausgebildet und/oder kann mit der ggf. vorgesehenen Kühleinrichtung 504 Bestandteil eines Regelkreises zum Regeln der Temperatur sein.

In einer vorteilhaften Ausführung ist die Produktaufnahme 500 als Produktaufwickler 500, insbesondere in Art eines Rollenwechslers 500, ausgebildet.

Vorzugsweise ist der Produktaufwickler 500 für einen Nonstop-Rollenwechsel qualifiziert und/oder umfasst ein o. g., als motorisch zwangsgetriebene Zugwalze 502 ausgebildetes Substratführungselement 502 und/oder ein Substratführungselement 503 in Form einer - z. B. an einem Hebel oder einer Führung quer zum Substratpfad federnd vorgespannten - Tänzerwalze 503.

Um einen optimalen Substratlauf zwischen dem ggf. vorgesehenen Kalandrierwerk 600 und dem Aufwickeln auf dem Produktaufwickler 500 sicherstellen zu können, kann in einer vorteilhaften Ausführung im zweiten Substratpfad 400 oder in einer dem Produktaufwickler 500 zuzurechnenden Substratpfadstrecke ein als motorisch zwangsgetriebene Zugwalze 401; 502 ausgebildetes Substratführungselement 401; 502 vorgesehen sein. Diese kann von einem Zugwerk 411; 506, umfasst sein, welches beispielsweise neben der Zugwalze 401; 502 ein die Zugwalze 401; 502 - insbesondere unabhängig von anderen Zugwalzen - antreibendes und bezüglich der Geschwindigkeit regel- und/oder steuerbares Antriebsmittel, z. B. in Form eines Servoantriebsmotor, und/oder an die Zugwalze 401; 502 anstellbare Andrückrollen zur Erhöhung der Friktion aufweist.

In einer insbesondere für den stabilen und störungsarmen Inline-Dauerbetrieb besonders vorteilhaften Ausführung einer z. B. ein Kalandrierwerk 600 umfassenden Maschine ist sowohl in einer zwischen dem Ort des Abwickelns von der Substratrolle 201 im Substratabwickler 200 bis zum Eintritt in den einzigen oder ersten Laminierspalt 107; 107' der Auftragstufe 100; 100* gelegenen ersten Substratpfadstrecke, als auch in einer zweiten, zwischen dem Ort des Austrittes der dann zumindest einseitig mit dem Trockenfilm 003; 003' versehenen Trägersubstratbahn aus der einzigen oder stromabwärts letzten Laminierspalt 107; 107' der Auftragstufe 100; 100* und - für die Ausführung mit Kalandrierwerk 600; 600* - dem Eintritt in den Kalandrierspalt zwischen den beiden Kalandrierwalzen 601; 602 gelegenen Substratpfadstrecke zumindest eine zwangsgetriebene Zugwalze 202; 308; 401 und/oder zumindest eine Messwalze 208; 307; 409 zur Ermittlung einer Bahnspannung vorgesehen. In einer vorteilhaften Weiterbildung für die Ausführung mit Kalandrierwerk 600; 600* ist auch in einer zwischen dem Ort des Austrittes der zumindest einseitig mit dem Trockenfilm 003; 003' versehenen Trägersubstratbahn 006 aus dem Kalandrierspalt und dem Ort des Aufwickelns auf die Produktrolle 501 im Produktaufwickler 500 gelegenen dritten Substratpfadstrecke eine zwangsgetriebene Zugwalze 502 und/oder eine Messwalze 409; 507 zur Ermittlung einer Bahnspannung vorgesehen.

Bevorzugter Weise ist eine hier nicht dargestellte Bahnspannungsregeleinrichtung vorgesehen, welche eingangsseitig mit jeweils der oder einer in der ersten sowie der oder einer in der zweiten o. g. Substratpfadstrecke vorgesehenen Messwalze 208; 307; 409 und ausgangseitig mit jeweils einer die Walzenantriebe steuernden Antriebssteuerung der oder einer in der ersten sowie der oder einer in zweiten o. g. Substratpfadstrecke vorgesehenen Zugwalze 202; 308; 401 stehen, und welche insbesondere Datenverarbeitungs- und/oder elektronische Schaltmitteln aufweist, die eingerichtet sind durch entsprechende Ansteuerung der Antriebssteuerung des Antriebes einer oder mehrerer der Zugwalzen 202; 308; 401 in jeder der beiden Substratpfadstrecken eine jeweils vorgegebene Bahnspannung und/oder eine für die beiden Substratpfadstrecken vorgegebene Bahnspannungsdifferenz aufzubauen und/oder zu erhalten. In Weiterbildung kann die Bahnspannungsregeleinrichtung eingangsseitig zusätzlich mit jeweils der oder einer in der dritten o. g. Substratpfadstrecke vorgesehenen Messwalze 409; 507 und ausgangseitig mit einer den Antrieb der betreffenden Zugwalze 502 steuernden Antriebssteuerung der oder einer in der dritten o. g. Substratpfadstrecke vorgesehenen Zugwalze 502 stehen und z. B. ebenfalls durch diese bezüglich einer vorgegebenen Bahnspannung und/oder einer vorgegebenen Bahnspannungsdifferenz zur stromaufwärts vorgeordneten Substratpfadstrecke regelbar sein.

Ganz allgemein, insbesondere auch für die o. g. Ausführung der Maschine ohne Kalandrierwerk stromabwärts der Auftragstufe 100; 100*, ist das oben zu den Zugwalzen 202; 308; 401 und Messwalzen 208; 307; 409, zu den Signalverbindungen und zur Bahnspannungsregeleinrichtung dargelegte auf eine Ausführung mit mindestens einer Mess- und/oder mindestens einer Zug- und/oder mindestens einer Tänzerwalze 202; 208; 203 in der ersten Substratpfadstrecke zwischen dem Abwickeln und der Stelle des Erstauftrages durch die Auftragstufe 100; 100* und/oder mit mindestens einer Mess- und/oder mindestens einer Zug- und/oder mindestens einer Tänzerwalze 409; 507; 401; 502; 407; 503 in einer Substratpfadstrecke zwischen dem Verlassen der einzigen oder letzten Stelle des Trockenfilmauftrages durch die Auftragstufe 100; 100* und dem Aufwickeln im Rollenaufwickler 500 zu übertragen bzw. anzuwenden.

Durch eine o. g. Tänzerwalze 203; 407; 503 und einen diese umfassenden - und beispielsweise in eine o. g. Bahnspannungsregeleinrichtung eingebundener - Regelkreis sind beispielsweise Schwankungen in der Bahnspannung ausgleichbar bzw. ausregelbar und/oder ist eine Fördergeschwindigkeit eines vor- oder nachgelagerten Aggregates 100; 100*; 600 oder eines oder mehrerer insbesondere motorisch angetriebener Bahnführungselemente 202; 308; 401; 502, wie z. B. der Antrieb eines vorgeordneten Substratabwicklers 200 oder nachgeordneten Substrataufwicklers 500 oder einer vor- oder nachgeordneten Zugwalze 202; 308; 401; 502, insbesondere über den Ausschlag der Tänzerwalze 407, regelbar. Sie ist - z. B. an einer Führung oder an einem Hebel - quer zum Substratpfad federnd vorgespannt, insbesondere gegen die Wirkrichtung der Bahnspannung der die Walze schlaufenförmig umschlingenden Substratbahn 006 (bzw. des Produktstranges 002) mit einer Kraft pneumatisch oder elastisch vorgespannt.

Eine o. g. Zugwalze 203; 308; 401; 502 umfasst z. B. einen bezüglich der Geschwindigkeit regel- und/oder steuerbaren Antriebsmotor, insbesondere Servomotor, und/oder wirkt beispielsweise zur Verbesserung des Förderverhaltens mit einer oder mehreren Andrückelementen, z. B, Andrückrollen zusammen und/oder ist je nach Lage im Substratpfad - beispielsweise zur Erzeugung bzw. Aufrechterhaltung einer stromaufwärtigen Bahnspannung motorisch oder - beispielsweise zur Erzeugung bzw. Aufrechterhaltung einer stromabwärtigen Bahnspannung generatorisch, d. h. mit Bremnswirkungm, betreibbar und/oder ist von einem die Bahnspannung regelnden - und beispielsweise in eine o. g. Bahnspannungsregeleinrichtung eingebundener - Regelkreis z. B. als Stellglied umfasst.

Alternativ zur Ausführung der Maschine mit einer als Rollenaufwickler 500 ausgebildeten Produktaufnahme 500 kann in einer besonders vorteilhaften Ausführung im zweiten Substratpfad 400 oder eingangs der Produktaufnahme 500 eine Querschneideinrichtung vorgesehen sein, durch welche ein in der Maschine hergestellter Produktstrang 002 bereits in Produktabschnitte 001 quer schneidbar ist. Die Produktaufnahme 500 ist hierbei z. B. als Stapelausleger, insbesondere als mehrere Stapel hintereinander auslegender Mehrfachstapelausleger ausgebildet.

In einer oben beschriebenen Maschine und/oder Vorrichtung 100; 100* wird z. B. ein bahnförmiges Trägersubstrat 006 kontinuierlich und bevorzugt beidseitig mit einem Trockenfilm 003; 003' einer gegenüber der Trägersubstratbreite kleineren Breite versehen, sodass beidseitig ein unbeschichteter Rand Trägersubstrat 106 stehen bleibt.

### Bezugszeichenliste

- 001: Produkt, Endprodukt, produktabschnitt, Elekrodeneinheit, Elektrode
- 002: Produkt, Zwischenprodukt, Produktstrang, Elektrodenstrang
- 003: Aktivmaterialschicht, Materialschicht, Trockenfilm, Pulververbundstofffilm (insbes. lösungsmittelfrei)
- 003': Aktivmaterialschicht, Materialschicht, Trockenfilm, Pulververbundstofffilm (insbes. lösungsmittelfrei)
- 004: Material, pulverförmig, Pulvermischung (insbes. trocken)
- 004': Material, pulverförmig, Pulvermischung (insbes. trocken)
- 005: -
- 006: Trägersubstrat, Trägersubstratbahn, Stromableitersubstrat, Stromableiterfolie, bahnförmig
- 007: Verbindungsunterstützendes oder -bewirkendes Mittel, Primer, Binder, Klebstoff
- 007': Verbindungsunterstützendes oder -bewirkendes Mittel, Primer, Binder, Klebstoff
- 008: Teil, Materialstreifen, Randstreifen

- 100: Vorrichtung zum Beschichten, Beschichtungsvorrichtung, Auftragstufe, Aggregat, Laminieraggregat, Laminiereinheit
- 100*: Vorrichtung zum Beschichten, Beschichtungsvorrichtung, Auftragstufe, Aggregat, Laminieraggregat, Laminiereinheit
- 101: Auftragwerk, erstes
- 101': Auftragwerk, zweites
- 102: Walze, erste, Dosierwalze
- 102': Walze, erste, Dosierwalze
- 103: Walze, zweite, Laminierwalze, Gegendruckwalze
- 103': Walze, zweite, Laminierwalze, Gegendruckwalze
- 104: Spalt, erster, Filmbildungsspalt, Dosierspalt, Walzenspalt, Nip
- 104': Spalt, erster, Filmbildungsspalt, Dosierspalt, Walzenspalt, Nip
- 105: -
- 106: Walze, Gegendruckwalze
- 106': Walze, Gegendruckwalze
- 107: Spalt, zweiter, Auftragspalt, Laminierspalt
- 107': Spalt, zweiter, Auftragspalt, Laminierspalt
- 108: -
- 109: Stellantrieb, Stellmittel, positionsbasiert
- 109': Stellantrieb, Stellmittel, positionsbasiert
- 110: -
- 111: Stellantrieb, Stellmittel, kraftbasiert
- 111': Stellantrieb, Stellmittel, kraftbasiert
- 112: Stellmechanismus, Lagermechanik, Linearlager
- 112': Stellmechanismus, Lagermechanik, Linearlager
- 113: Stellmechanismus, Lagermechanik, Dreiringlager, Linearlager
- 113': Stellmechanismus, Lagermechanik, Dreiringlager, Linearlager
- 114: Abnahmeeinrichtung, Rakel, Reinigungsrakel
- 114': Abnahmeeinrichtung, Rakel, Reinigungsrakel
- 115: -
- 116: Abnahmeeinrichtung, Rakel, Seitenkantenrakel
- 116': Abnahmeeinrichtung, Rakel, Seitenkantenrakel
- 117: Auffangvorrichtung, Auffangwanne
- 117': Auffangvorrichtung, Auffangwanne
- 118: Walze, weitere, Kalanderwalze
- 118': Walze, weitere, Kalanderwalze
- 119: -
- 120: -
- 121: Substratleitelement, Leitwalze, Umlenkwalze
- 122: Träger, Seitenteile (Untergestell)
- 122': Träger, Seitenteile (Untergestell)
- 123: Absaugung
- 123': Absaugung
- 124: Begrenzung, Seitenschild
- 125: -
- 126: Einfüll- und/oder Vorlageraum
- 127: Materialabnahme
- 127': Materialabnahme
- 128: Gestell (Auftragstufe)
- 129: Abnahmeeinrichtung, Rakel, Reinigungsrakel
- 130: -
- 131: -
- 132: Antriebsmittel
- 133: Antriebsmittel

- 200: Substratzufuhr, Substratabwickler, Rollenwechsler
- 201: Rolle, Substratrolle
- 202: Substratführungselement, Walze, Zugwalze, zwangsgetrieben
- 203: Substratführungselement, Tänzerwalze
- 204: Bahnkantensteuerung
- 205: -
- 206: Anklebeeinrichtung, Anklebetisch
- 207: Zugwerk, Einzugwerk
- 208: Substratführungselement, Messwalze, Bahnspannungsmesswalze

- 300: Substratpfadabschnitt, Förderstrecke, erste, aufstromseitig, zufuhrseitig
- 301: Substratleitelement, Walze, Leitwalze, Umlenkwalze
- 302: Vorbehandlungsstation, Reinigungsstation, Entionisierungsstation
- 303: Messstation (Trägersubstratstärke)
- 304: Vorbehandlungsstation, Auftragstation
- 305: -
- 306: Vorbehandlungsstation, thermisch, Temperierstation, Infrarotstrahlungsquelle
- 307: Substratführungselement, Messwalze, Bahnspannungsmesswalze
- 308: Substratleitelement, Walze, Zugwalze, zwangsgetrieben
- 309: Zugwerk
- 310: -
- 311: Sensor, Temperatursensor

- 400: Substratpfadabschnitt, Förderstrecke, zweite, abstromseitig, abfuhrseitig
- 401: Substratleitelement, Walze, Zugwalze, zwangsgetrieben
- 402: Kühleinrichtung
- 402*: Kühleinrichtung (alternativ oder zusätzlich)
- 403: Inspektionseinrichtung (Fehlstellen)
- 404: Substratleitelement, Walze, Leitwalze, Umlenkwalze
- 405: -
- 406: Bahnspannungsausgleichs- und/oder -regeleinrichtung
- 407: Tänzerwalze
- 408: Messstation (Produktstrangstärke)
- 409: Substratführungselement, Messwalze, Bahnspannungsmesswalze
- 410: -
- 411: Zugwerk
- 412: Fehlstellenmarkierung

- 500: Produktaufnahme, Produktaufwickler, Rollenwechsler
- 501: Produktgebinde, Rolle, Produktrolle
- 502: Substratführungselement, Zugwalze, zwangsgetrieben
- 503: Tänzerwalze
- 504: Kühleinrichtung, Substratführungselement, Walze, Kühlwalze
- 504.1: Kühlwalze
- 504.2: Kühlwalze
- 505: -
- 506: Zugwerk
- 507: Substratführungselement, Messwalze, Bahnspannungsmesswalze
- 508: Sensor, Temperatursensor

- 600: Kalandrierwerk, Kalander, Aggregat, Kalandrieraggregat
- 600*: Kalandrierwerk, Kalander (alternativ oder zusätzlich), Aggregat, Kalandrieraggregat
- 601: Walze, Kalanderwalze, erste, beheizt
- 601*: Walze, Kalanderwalze, erste (alternativ oder zusätzlich)
- 602: Walze, Kalanderwalze, zweite, beheizt
- 602*: Walze, Kalanderwalze, zweite (alternativ oder zusätzlich)
- 603: Gestell (Kalandrierwerk)

- 700: Vorrichtung zur Zufuhr pulverförmigen Materials, Pulverzufuhrvorrichtung
- 700': Vorrichtung zur Zufuhr pulverförmigen Materials, Pulverzufuhrvorrichtung
- 701: Abgabevorrichtung, Dosiervorrichtung, Dosiergerät mit Vibrationsantrieb Dosierrüttler
- 702: Fördereinrichtung, Linearförderer, Förderband
- 703: Bereitstellungseinrichtung, Versorgungsleitung, Vorlagebehältnis
- 704: Dosiereinrichtung, Linearförderer, Vibrationsförderer
- 705: Walze, Umlenkwalze, Antriebswalze
- 706: Vibrationstisch
- 707: Antriebsmittel, Vibrationsantrieb
- 708: Abnahmeeinrichtung, Abnahmerakel
- 709: Antriebsmittel, Antriebsmotor
- 710: -
- 711: Einführhilfe, Trichterwanne
- 712: Antriebsmittel, Antriebsmotor, Servomotor
- 713: Sensor, Füllstandsensor
- 714: Sensor, Niveausensor, Schichtniveausensor
- 715: Antriebsmittel, Stellantrieb
- 716: Begrenzung, seitlich, Seitenführung
- 717: Begrenzung, seitlich, Seitenführung
- 718: -
- 719: Antriebsmittel, Stellantrieb
- 720: -
- 721: Dosiereinrichtung, Stellmechanismus
- 722: Antriebsmittel, Stellmotor
- 722.x: Antriebsmittel, Stellmotor
- 723: Stellelement, Klappe, Schieber
- 723.x: Stellelement, Klappensegment, Schiebersegment, Stellelementsegment
- 724: Steuer- und/oder Regeleinrichtung
- 725: -
- 726: Sensorik, Pulverstromsensorik, Lichtschranke, Lichtgitter
- 727: Strahlungsquelle, Lichtquelle
- 727.x: Strahlungsquelle, Lichtquelle, ausgedehnt, Lichtleiste
- 728: Sensor, Strahlungsempfänger, Fotodiode, Fototransistor
- 728.x: Sensor, Strahlungsempfänger, ausgedehnt, Strahlungsempfängersegmente, Strahlungsempfängerarray, Fotodiodenarray, Zeilenkamera
- 729: Schaltungsglieder, Totzeitglied
- 730: -
- 731: Sensorik, Pulverstromsensorik
- 731.x: Sensorik, Pulverstromsensorik
- 732: Prallelement, Prallplatte, Umlenkblech
- 732.x: Prallelement, Prallplatte, Umlenkblech
- 733: Sensor, Kraftaufnehmer
- 733.x: Sensor, Kraftaufnehmer, ausgedehnt, Kraftaufnehmerarray

- 801: Messanordnung zur Bestimmung einer Dichte
- 802: Wägeeinrichtung, Waage
- 803: Wägebehältnis, Wägeschale
- 804: Sensorik, Sensor, optisch, Kamera, Zeilenkamera
- 805: -
- 806: Messeinrichtung, ultraschall basiert, induktiv, kapazitiv
- 807: Steuerungseinrichtung
- 808: Separationseinrichtung, Ausleiteinrichtung, Weiche, Diverter
- 809: Waage
- 810: -
- 811: Datenverarbeitungsmittel
- 812: Anzeigeeinrichtung, Display
- 813: Winkellagegeber
- 814: Antriebsmittel, Kippantrieb
- 815: -
- 816: Materialaufnahme, Behältnis
- 817: Weichenzunge, Schieber, Boden
- 818: Antriebsmittel, Zylinder-kolben-System

- b: Breite
- d: Stärke, Schichtdicke
- b003: Breite (003; 003')
- b006: Breite (006)
- b008: Breite (008)
- d003: Stärke, Schichtdicke (003)
- d003': Stärke, Schichtdicke (003')
- d006: Stärke (006)
- d008: Stärke, Schichtdicke (008)

- F: Messgröße, Kraft
- F.x: Messgröße, Kraft
- I: Messgröße, Strahlungsintensität
- I.x: Messgröße, Strahlungsintensität

- *φ*: Winkellage
- ρ: Dichte
- r: Radius
- m: Masse

- R12: Regelkreis
- R14: Regelkreis
- R15: Regelkreis
- R17: Regelkreis
- R34: Regelkreis
- R35: Regelkreis
- R37: Regelkreis
- R82: Regelkreis
- R85: Regelkreis

- R102: Rotationsachse
- R102': Rotationsachse
- R103: Rotationsachse
- R103': Rotationsachse
- R106: Rotationsachse
- R106': Rotationsachse
- S1: Signalverbindung, Sensorsignal
- S2: Signalverbindung, Steuersignal
- S3: Signalverbindung, Sensorsignal
- S4: Signalverbindung, Steuersignal
- S5: Signalverbindung, Steuersignal
- S6: Signalverbindung, Steuersignal
- S7: Signalverbindung, Steuersignal
- S8: Signalverbindung, Sensorsignal

- s: Schnittlinie
- t: Zeit
- t1: Zeitpunkt, erster
- t2: Zeitpunkt, zweiter

- Ts: Transportrichtung (Trägersubstrat 006)
- T_{P}: Förderrichtung (pulverförmiges Material 004)

- V: Maschinengeschwindigkeit repräsentierende Größe

## Patentansprüche

1. Maschine zur Herstellung eines mehrlagigen Produktes mit einem auf einem Trägersubstrat (006) aufgebrachten Trockenfilm (003),
- mit einem Substratabwickler (200), durch welchen der Maschine eingangsseitig in einer Substratrolle (201) abzuwickelndes bahnförmiges Trägersubstrat (006) in Form einer Trägersubstratbahn (006) zuführbar ist oder zugeführt wird,
- mit einem ersten Substratpfadabschnitt (300), über welchen das bahnförmige Trägersubstrat (006) einer von der Maschine umfassten Auftragstufe (100; 100*) zuführbar ist und/oder zugeführt wird, wobei durch die Auftragstufe (100; 100*) zumindest ein erster Trockenfilm (003; 003') aus einem pulverförmigen Material (004; 004') herstellbar ist und auf zumindest eine erste Seite des Trägersubstrates (006) aufgebracht wird oder werden kann,
- und mit einem zweiten Substratpfadabschnitt (400), über welchen das auf zumindest einer Seite mit dem Trockenfilm (003) versehene bahnförmige Trägermaterial (006) als Produktstrang (002) einem von der Maschine umfassten Produktaufwickler (500) zuführbar ist und/oder zugeführt wird, wobei durch den Produktaufwickler (500) die in der Auftragstufe (100; 100*) zumindest einseitig beschichtete Substratbahn (006) als Produktstrang (002) zu einer Produktrolle (501) zusammenfassbar ist oder zusammengefasst wird,
wobei im Substratpfad einer zwischen dem Ort des Abwickelns von der Substratrolle (201) im Substratabwickler (200) bis zum Eintritt in einen ersten oder einzigen Auftragspalt (107; 107') der Auftragstufe (100; 100*) gelegenen ersten Substratpfadstrecke eine zwangsgetriebene Zugwalze (202; 308) angeordnet ist und/oder dass im Substratpfad einer zwischen dem Austritt aus einem letzten oder einzigen Auftragspalt (107; 107') der Auftragstufe (100; 100*) und dem Ort des Aufwickelns des Produktstranges (002) auf die Produktrolle (501) gelegenen zweiten Substratpfadstrecke eine zwangsgetriebene Zugwalze (401; 502) angeordnet ist,
**dadurch gekennzeichnet, dass** im Substratpfad der ersten Substratpfadstrecke und/oder im Substratpfad der zweiten Substratpfadstrecke eine Tänzerwalze (203; 407; 503) angeordnet ist.

2. Maschine nach Anspruch 1, **dadurch gekennzeichnet, dass** im Substratpfad der zwischen dem Ort des Abwickelns von der Substratrolle (201) im Substratabwickler (200) bis zum Eintritt in einen ersten oder einzigen Auftragspalt (107; 107') der Auftragstufe (100; 100*) gelegenen ersten Substratpfadstrecke eine die Bahnspannung in der Trägersubstratbahn (006) oder eine diese Bahnspannung repräsentierende Größe liefernde Messwalze (307) angeordnet ist und/oder dass im Substratpfad der zwischen dem Austritt aus einem letzten oder einzigen Auftragspalt (107; 107') der Auftragstufe (100; 100*) und dem Ort des Aufwickelns des Produktstranges (002) auf die Produktrolle (501) gelegenen zweiten Substratpfadstrecke eine die Bahnspannung im Produktstrang (002) oder eine diese Bahnspannung repräsentierende Größe liefernde Messwalze (409; 507) angeordnet ist.

3. Maschine nach den Ansprüchen 2, **dadurch gekennzeichnet, dass** eine Bahnspannungsregeleinrichtung vorgesehen ist, welche eingangsseitig mit der in der ersten und/oder in der zweiten Substratpfadstrecke vorgesehenen Messwalze (208; 307; 409; 507) und ausgangseitig mit dem Antrieb der in der ersten und/oder in der zweiten Substratpfadstrecke vorgesehenen Zugwalze (202; 308; 401) steht, und welche Datenverarbeitungs- und/oder elektronische Schaltmitteln aufweist, die eingerichtet sind durch entsprechende Ansteuerung der Antriebssteuerung des Antriebes einer oder beider Zugwalzen (202; 308; 401; 502) in der betreffenden oder jeder der beiden Substratpfadstrecken eine jeweils vorgegebene Bahnspannung und/oder eine für die beiden Substratpfadstrecken vorgegebene Bahnspannungsdifferenz aufzubauen und/oder zu erhalten.

4. Maschine nach Anspruch 1, 2 oder 3, **dadurch gekennzeichnet, dass** der Auftragstufe (100; 100*) im zweiten Substratpfadbschnitt (400) ein Kalandrierwerk (600) mit einem Kalandrierspalt nachgeordnet ist, durch welchen das zumindest auf einer Seite mit dem Trockenfilm (003; 003') versehene Trägersubstrat (006) als Produktstrang (002) unter Anwendung von Druck und/oder erhöhter Temperatur hindurch führbar oder geführt ist.

5. Maschine nach Anspruch 4, **dadurch gekennzeichnet, dass** die in der zweiten Substratpfadstrecke gelegene Zugwalze (401) und/oder die in der zweiten Substratpfadstrecke gelegene Messwalze (409) im Substratpfad zwischen dem letzten oder einzigen Auftragspalt (107; 107') der Auftragstufe (100; 100*) und dem Kalandrierwerk (600) angeordnet ist.

6. Maschine nach Anspruch 1, 2, 3, 4 oder 5, **dadurch gekennzeichnet, dass** die oder jede zwangsgetriebene Zugwalze (202; 308; 401) durch ein bezüglich der Geschwindigkeit regel- und/oder steuerbares Antriebsmittel mechanisch unabhängig von der oder jeder anderen im Substratpfad angeordneten Zugwalze (202; 308; 401) antreibbar ausgeführt ist.

7. Maschine nach Anspruch 1, 2, 3, 4, 5 oder 6, **dadurch gekennzeichnet, dass** im Substratpfad vor dem Eintritt in den ersten oder einzigen Auftragspalt (107; 107') aber stromabwärts eines letzten mit der Trägersubstratbahn (006) zusammenwirkenden Substratführungselements (301; 307) eine thermische Vorbehandlungsstation (306) und zwischen der Vorbehandlungsstation (306) und dem Eintritt in den ersten oder einzigen Auftragspalt (107; 107') ein Sensor (311) zur Ermittlung der Temperatur der Trägersubstratbahn (006) angeordnet ist.

8. Maschine nach Anspruch 1, 2, 3, 4, 5, 6 oder 7, **dadurch gekennzeichnet, dass** im Substratpfad des zweiten Substratpfadabschnittes (400) stromaufwärts der Stelle für das Aufrollen im Produktaufwickler (500) eine Kühleinrichtung (504) und stromabwärts der Kühleinrichtung (504) am Substratpfad ein Sensor (508) zur Ermittlung der Temperatur des Produktstranges (002) angeordnet ist.

9. Maschine nach Anspruch 1, 2, 3, 4, 5, 6, 7 oder 8, **dadurch gekennzeichnet, dass** der einzige oder jeweilige Auftragspalt (107; 107'), durch welchen das zu beschichtende Trägersubstrat (106) hindurchführbar und dabei auf zumindest der ersten Seite mit dem ersten Trockenfilm (106) beaufschlagbar ist, im Nip zwischen einer Auftragwalze (103) eines ersten Auftragwerkes (101) und einer als Gegendruckwalze (103'; 106) wirksamen Walze (103'; 106) ausgebildet ist.

10. Maschine nach Anspruch 9, **dadurch gekennzeichnet, dass** der Auftragsspalt (107; 107') zwischen der Auftragwalze (103) des ersten Auftragwerkes (101) und der Gegendruckwalze (103'; 106) auf Basis eines kraftbasierten Stellantriebs (111; 111') stellbar ausgebildet, d. h. über einen kraftbasierten Stellantrieb (111; 111') und/oder einen kraftbasierten Stellmechanismus (112; 112') auf eine konstante und/oder definierte Anstell- bzw. Linienkraft hin einstellbar ausgeführt ist.

11. Maschine nach Anspruch 9 oder 10, **dadurch gekennzeichnet, dass** das erste Auftragwerk (101) eine Dosierwalze (102) umfasst, welche zwischen ihrer Mantelfläche und der Mantelfläche der Auftragwalze (103) oder einer in einem Walzenzug zwischen Dosierwalze (102) und Auftragwalze (103) liegenden weiteren Walze des ersten Auftragwerkes (101) einen der Filmbildung dienenden Dosierspalt (104) ausbildet, durch welchen zur Herstellung des ersten Trockenfilms (003') eine trockene Pulvermischung (004) förderbar ist.

12. Maschine nach Anspruch 9, 10 oder 11, **dadurch gekennzeichnet, dass** die mit der Auftragwalze (103) des ersten Auftragwerkes (101) den Auftragspalt (107) ausbildende Gegendruckwalze (103') durch eine Auftragwalze (103') eines zweiten Auftragwerks (101') gebildet ist, durch welche das durch den Auftragspalt (107) hindurchgeführte Trägersubstrat (106) auf der zweiten Seite mit einem zweiten Trockenfilm (106) beaufschlagbar ist, und dass eine vom zweiten Auftragwerk (101') umfasste Dosierwalze (102') vorgesehen ist, welche mit der Auftragwalze (103') des zweiten Auftragwerks (101') oder einer in einem Walzenzug zwischen Dosierwalze (102') und Auftragwalze (103') liegenden weiteren Walze des zweiten Auftragwerkes (101') einen der Filmbildung dienenden Dosierspalt (104') ausbildet, durch welchen eine trockene Pulvermischung (004) zur Herstellung eines zweiten Trockenfilm (003') förderbar ist.

13. Maschine nach Anspruch 11 oder 12, **dadurch gekennzeichnet, dass** der Dosierspalt (104; 104') auf Basis eines positionsbasierten Stellantriebs (109; 109') stellbar ausgebildet ist, d. h. über einen positionsbasierten Stellmechanismus (113; 113') auf eine konstante und/oder definierte Spaltbreite hin eingestellt werden kann.

14. Maschine nach Anspruch 1, 2, 3, 4, 5, 6, 7, 8, 9, 10, 11, 12 oder 13, **dadurch gekennzeichnet, dass** am Substratpfad des der Auftragstufe (100; 100') nachgelagerten Substratpfadabschnittes (400) eine Inspektionseinrichtung (403; 403.1; 403.2) vorgesehen ist, durch welche am die Messstation (408) passierenden Produktstrang (002) die Produktstrangoberfläche auf Vollständigkeit in der Fläche und/oder auf die Stärke des aufgebrachten Trockenfilms (003; 003') hin überprüfbar ist und/oder überprüft wird.

15. Maschine nach Anspruch 1, 2, 3, 4, 5, 6, 7, 8, 9, 10, 11, 12, 13 oder 14, **dadurch gekennzeichnet, dass** am Substratpfad des der Auftragstufe (100; 100') nachgelagerten Substratpfadabschnittes (400) eine Messstation (408) vorgesehen ist, durch welche am die Messstation (408) passierenden Produktstrang (002) eine Produktstrangstärke bestimmbar ist und/oder bestimmt wird.

## Claims

1. Machine for producing a multi-layer product with a dry film (003) applied to a carrier substrate (006), the machine comprising:
- a substrate unwinder (200), by which web-format carrier substrate (006), in the form of a carrier substrate web (006), to be unwound in a substrate roll (201) can be fed or is fed to the machine on the input side;
- a first substrate path section (300) via which the web-format carrier substrate (006) can be fed and/or is fed to an application stage (100; 100*) comprised by the machine, wherein at least a first dry film (003; 003') can be produced by the application stage (100; 100*) from a powdered material (004; 004') and is or can be applied to at least a first side of the carrier substrate (006); and
- a second substrate path section (400) via which the web-format carrier material (006), which has been provided on at least one side with the dry film (003), can be fed and/or is fed as a product strand (002) to a product winder (500) comprised by the machine, wherein the substrate web (006), which is coated at least on one side in the application stage (100; 100*), in the form of a product strand (002) can be combined or is combined into a product roll (501) by the product winder (500),
a positively driven draw roller (202; 308) being arranged in the substrate path of a first substrate path segment located between the location at which the unwinding from the substrate roll (201) in the substrate unwinder (200) takes place and the entry into a first or only application gap (107; 107') of the application stage (100; 100*),
and/or in that a positively driven draw roller (401; 502) is arranged in the substrate path of a second substrate path segment located between the outlet from a last or only application gap (107; 107') of the application stage (100; 100*) and the location at which the product strand (002) is wound onto the product roll (501),
**characterized in that** a dancer roller (203; 407; 503) is arranged in the substrate path of the first substrate path segment and/or in the substrate path of the second substrate path segment.

2. Machine according to claim 1, **characterized in that** a measuring roller (307) supplying the web tension in the carrier substrate path (006) or a variable representing this web tension is arranged in the substrate path of the first substrate path segment located between the location at which the unwinding from the substrate roll (201) in the substrate unwinder (200) takes place and the entry into a first or only application gap (107; 107') of the application stage (100; 100*), and/or **in that** a measuring roller (409; 507) supplying the web tension in the product strand (002) or a variable representing this web tension is arranged in the substrate path of the second substrate path segment located between the outlet from a last or only application gap (107; 107') of the application stage (100; 100*) and the location at which the product strand (002) is wound onto the product roll (501).

3. Machine according to claim 2, **characterized in that** a web tension control device is provided, which on the input side is connected to the measuring roller (208; 307; 409; 507) provided in the first and/or in the second substrate path segment and on the output side is connected to the drive of the draw roller (202; 308; 401) provided in the first and/or in the second substrate path segment, and which comprises data processing means and/or electronic circuit means which are equipped to build and/or to maintain a respective specified web tension and/or a web tension difference specified for the two substrate path segments by appropriate activation of the drive controller of the drive of one or both draw rollers (202; 308; 401; 502) in the relevant or each of the two substrate path segments.

4. Machine according to claim 1, 2 or 3, **characterized in that** a calendering unit (600) comprising a calendering gap is arranged downstream from the application stage (100; 100*) in the second substrate path section (400), through which the carrier substrate (006), which is provided with the dry film (003; 003') at least on one side, can be guided or is guided as a product strand (002), applying pressure and/or an increased temperature.

5. Machine according to claim 4, **characterized in that** the draw roller (401) located in the second substrate path segment and/or the measuring roller (409) located in the second substrate path segment is arranged in the substrate path between the last or only application gap (107; 107') of the application stage (100; 100*) and the calendering unit (600).

6. Machine according to claim 1, 2, 3, 4 or 5, **characterized in that** the or each positively driven draw roller (202; 308; 401) is designed so as to be drivable mechanically independently of the or any other draw roller (202; 308; 401) arranged in the substrate path by a drive means that can be controlled by closed loop and/or open loop control in terms of the speed.

7. Machine according to claim 1, 2, 3, 4, 5 or 6, **characterized in that** a thermal pretreatment station (306) is arranged in the substrate path prior to the entry into the first or only application gap (107; 107'), but downstream from a last substrate guide element (301; 307) cooperating with the carrier substrate web (006), and a sensor (311) for ascertaining the temperature of the carrier substrate web (006) is arranged between the pretreatment station (306) and the entry into the first or only application gap (107; 107').

8. Machine according to claim 1, 2, 3, 4, 5, 6 or 7, **characterized in that** a cooling unit (504) is arranged in the substrate path of the second substrate path section (400) upstream from the point where the rolling in the product winder (500) takes place, and a sensor (508) for ascertaining the temperature of the product strand (002) is arranged downstream from the cooling unit (504) at the substrate path.

9. Machine according to claim 1, 2, 3, 4, 5, 6, 7 or 8, **characterized in that** the only or respective application gap (107; 107'), through which the carrier substrate (106) to be coated can be guided and, in the process, can have the first dry film (106) applied to at least the first side, is formed in the nip between an application roller (103) of a first application unit (101) and a roller (103'; 106) that is effective as a counter-pressure roller (103'; 106).

10. Machine according to claim 9, **characterized in that** the application gap (107; 107') between the application roller (103) of the first application unit (101) and the counter-pressure roller (103'; 106) is designed so as to be adjustable based on a force-based positioning drive (111; 111'), that is, is designed so as to be settable toward a constant and/or defined contact force or linear force by way of a force-based positioning drive (111; 111') and/or a force-based positioning mechanism (112; 112').

11. Machine according to claim 9 or 10, **characterized in that** the first application unit (101) comprises a metering roller (102), which between the outer cylindrical surface thereof and the outer cylindrical surface of the application roller (103) or of a further roller of the first application unit (101) located in a roller train between the metering roller (102) and the application roller (103) forms a metering gap (104), which is used for forming the film and through which a dry powder mixture (004) for producing the first dry film (003') can be conveyed.

12. Machine according to claim 9, 10 or 11, **characterized in that** the counter-pressure roller (103') forming the application gap (107) together with the application roller (103) of the first application unit (101) is formed by an application roller (103') of a second application unit (101'), by which the carrier substrate (106) guided through the application gap (107) can have a second dry film (106) applied to the second side, and **in that** a metering roller (102') comprised by the second application unit (101') is provided, which together with the application roller (103') of the second application unit (101') or a further roller of the second application unit (101') located in a roller train between the metering roller (102') and the application roller (103') forms a metering gap (104'), which is used for forming the film and through which a dry powder mixture (004) for producing a second dry film (003') can be conveyed.

13. Machine according to claim 11 or 12, **characterized in that** the metering gap (104; 104') is designed so as to be adjustable based on a position-based positioning drive (109; 109'), that is, can be set toward a constant and/or defined gap width by way of a position-based positioning mechanism (113; 113').

14. Machine according to claim 1, 2, 3, 4, 5, 6, 7, 8, 9, 10, 11, 12 or 13, **characterized in that** an inspection device (403; 403.1; 403.2) is provided at the substrate path of the substrate path section (400) arranged downstream from the application stage (100; 100'), by which the product strand surface of the product strand (002) passing the measuring station (408) can be checked and/or is checked for completeness of the surface and/or for the thickness of the applied dry film (003; 003').

15. Machine according to claim 1, 2, 3, 4, 5, 6, 7, 8, 9, 10, 11, 12, 13 or 14, **characterized in that** a measuring station (408) is provided at the substrate path of the substrate path section (400) arranged downstream from the application stage (100; 100'), by which a product strand thickness of the product strand (002) passing the measuring station (408) can be determined and/or is determined.

## Revendications

1. Machine pour la fabrication d'un produit multicouche avec un film sec (003) appliqué sur un substrat de support (006), comprenant
- un dérouleur de substrat (200), par lequel un substrat de support (006) en forme de bande à dérouler dans un rouleau de substrat (201) peut être amené ou est amené sous la forme d'une bande de substrat de support (006) à la machine côté entrée,
- une première section de trajet de substrat (300), par l'intermédiaire de laquelle le substrat de support (006) en forme de bande peut être amené et/ou est amené à un étage d'application (100 ; 100*) compris par la machine, dans laquelle au moins un premier film sec (003 ; 003') composé d'un matériau pulvérulent (004 ; 004') peut être fabriqué par l'étage d'application (100 ; 100*) et est ou peut être appliqué sur au moins une première face du substrat de support (006),
- et une deuxième section de trajet de substrat (400), par l'intermédiaire de laquelle le matériau de support (006) en forme de bande pourvu sur au moins une face du film sec (003) peut être amené et/ou est amené en tant que brin de produit (002) à un enrouleur de produit (500) compris par la machine, dans laquelle la bande de substrat (006) revêtue au moins sur une face dans l'étage d'application (100 ; 100*) peut être rassemblée ou est rassemblée en tant que brin de produit (002) en un rouleau de produit (501) par l'enrouleur de produit (500),
dans laquelle un rouleau de traction (202 ; 308) à entraînement forcé est disposé dans le trajet de substrat d'un premier tronçon de trajet de substrat situé entre l'emplacement du déroulement à partir du rouleau de substrat (201) dans le dérouleur de substrat (200) jusqu'à l'entrée dans une première ou unique fente d'application (107 ; 107') de l'étage d'application (100 ; 100*)
et/ou qu'un rouleau de traction (401 ; 502) à entraînement forcé est disposé dans le trajet de substrat d'un deuxième tronçon de trajet de substrat situé entre la sortie d'une dernière ou unique fente d'application (107 ; 107') de l'étage d'application (100 ; 100*) et l'emplacement de l'enroulement du brin de produit (002) sur le rouleau de produit (501),
**caractérisée en ce qu'**un rouleau danseur (203 ; 407 ; 503) est disposé dans le trajet de substrat du premier tronçon de trajet de substrat et/ou dans le trajet de substrat du deuxième tronçon de trajet de substrat.

2. Machine selon la revendication 1, **caractérisée en ce qu'**un rouleau de mesure (307) fournissant la tension de bande dans la bande de substrat de support (006) ou une grandeur représentant cette tension de bande est disposé dans le trajet de substrat du premier tronçon de trajet de substrat situé entre l'emplacement du déroulement à partir du rouleau de substrat (201) dans le dérouleur de substrat (200) jusqu'à l'entrée dans une première ou unique fente d'application (107 ; 107') de l'étage d'application (100 ; 100*) et/ou qu'un rouleau de mesure (409 ; 507) fournissant la tension de bande dans le brin de produit (002) ou une grandeur représentant cette tension de bande est disposé dans le trajet de substrat du deuxième tronçon de trajet de substrat situé entre la sortie d'une dernière ou unique fente d'application (107 ; 107') de l'étage d'application (100 ; 100*) et l'emplacement de l'enroulement du brin de produit (002) sur le rouleau de produit (501).

3. Machine selon la revendication 2, **caractérisée en ce qu'**un dispositif de régulation de tension de bande est prévu, lequel se tient côté entrée avec le rouleau de mesure (208 ; 307 ; 409 ; 507) prévu dans le premier et/ou dans le deuxième tronçon de trajet de substrat et côté sortie avec l'entraînement du rouleau de traction (202 ; 308 ; 401) prévu dans le premier et/ou dans le deuxième tronçon de trajet de substrat, et lequel présente des moyens de traitement de données et/ou de commutation électronique, qui sont conçus pour créer et/ou pour conserver une tension de bande respectivement prédéfinie et/ou une différence de tension de bande prédéfinie pour les deux tronçons de trajet de substrat par commande correspondante de la commande d'entraînement de l'entraînement d'un ou des deux rouleaux de traction (202 ; 308 ; 401 ; 502) dans le tronçon concerné ou chacun des deux tronçons de trajet de substrat.

4. Machine selon la revendication 1, 2 ou 3, **caractérisée en ce qu'**un groupe de calandrage (600) avec une fente de calandrage, à travers laquelle le substrat de support (006) pourvu au moins sur une face du film sec (003 ; 003') peut être guidé ou est guidé en tant que brin de produit (002) à l'aide d'une pression et/ou température accrue, est monté en aval de l'étage d'application (100 ; 100*) dans la deuxième section de trajet de substrat (400).

5. Machine selon la revendication 4, **caractérisée en ce que** le rouleau de traction (401) situé dans le deuxième tronçon de trajet de substrat et/ou le rouleau de mesure (409) situé dans le deuxième tronçon de trajet de substrat est disposé dans le trajet de substrat entre la dernière ou unique fente d'application (107 ; 107') de l'étage d'application (100 ; 100*) et le groupe de calandrage (600).

6. Machine selon la revendication 1, 2, 3, 4 ou 5, **caractérisée en ce que** le ou chaque rouleau de traction (202 ; 308 ; 401) à entraînement forcé est conçu de manière à pouvoir être entraîné par un moyen d'entraînement pouvant être régulé et/ou commandé en ce qui concerne la vitesse mécaniquement indépendamment du ou de chaque autre rouleau de traction (202 ; 308 ; 401) disposé dans le trajet de substrat.

7. Machine selon la revendication 1, 2, 3, 4, 5 ou 6, **caractérisée en ce qu'**une station de prétraitement (306) thermique est disposée dans le trajet de substrat devant l'entrée dans la première ou unique fente d'application (107 ; 107') mais en aval d'un dernier élément de guidage de substrat (301 ; 307) coopérant avec la bande de substrat de support (006) et un capteur (311) pour la détection de la température de la bande de substrat de support (006) est disposé entre la station de prétraitement (306) et l'entrée dans la première ou unique fente d'application (107 ; 107').

8. Machine selon la revendication 1, 2, 3, 4, 5, 6 ou 7, **caractérisée en ce que** dans le trajet de substrat de la deuxième section de trajet de substrat (400) en amont de l'endroit pour l'enroulement dans l'enrouleur de produit (500) est disposé un dispositif de refroidissement (504) et en aval du dispositif de refroidissement (504) sur le trajet de substrat un capteur (508) pour capter la température du brin de produit (002).

9. Machine selon la revendication 1, 2, 3, 4, 5, 6, 7 ou 8, **caractérisée en ce que** la fente d'application (107 ; 107') unique ou respective, à travers laquelle le substrat de support (106) à revêtir peut être guidé et peut ce faisant être sollicité sur au moins la première face avec le premier film sec (106), est réalisée dans la zone de pincement entre un rouleau d'application (103) d'un premier groupe d'application (101) et un rouleau (103' ; 106) opérant en tant que rouleau de contre-pression (103' ; 106).

10. Machine selon la revendication 9, **caractérisée en ce que** la fente d'application (107 ; 107') entre le rouleau d'application (103) du premier groupe d'application (101) et le rouleau de contre-pression (103' ; 106) est réalisée de manière ajustable sur la base d'un entraînement d'ajustement basé sur la force (111 ; 111'), c'est-à-dire conçue de manière réglable en vue d'obtenir une force de contact ou linéaire constante et/ou définie par l'intermédiaire d'un entraînement d'ajustement basé sur la force (111 ; 111') et/ou d'un mécanisme d'ajustement basé sur la force (112 ; 112') est.

11. Machine selon la revendication 9 ou 10, **caractérisée en ce que** le premier groupe d'application (101) comprend un rouleau de dosage (102), lequel entre sa surface d'enveloppe et la surface d'enveloppe du rouleau d'application (103) ou un autre rouleau du premier groupe d'application (101) se trouvant dans un train de rouleaux entre le rouleau de dosage (102) et le rouleau d'application (103) réalise une fente de dosage (104) servant à la formation du film, par laquelle un mélange de poudre sec (004) peut être transporté pour la fabrication du premier film sec (003').

12. Machine selon la revendication 9, 10 ou 11, **caractérisée en ce que** le rouleau de contre-pression (103') réalisant avec le rouleau d'application (103) du premier groupe d'application (101) la fente d'application (107) est formé par un rouleau d'application (103') d'un deuxième groupe d'application (101'), par lequel le substrat de support (106) guidé à travers la fente d'application (107) peut être sollicité sur la deuxième face avec un deuxième film sec (106), et qu'un rouleau de dosage (102') compris par le deuxième groupe d'application (101') est prévu, lequel réalise avec le rouleau d'application (103') du deuxième groupe d'application (101') ou un autre rouleau du deuxième groupe d'application (101') se trouvant dans un train de rouleaux entre le rouleau de dosage (102') et le rouleau d'application (103') une fente de dosage (104') servant à la formation du film, par laquelle un mélange de poudre sec (004) peut être transporté pour la fabrication d'un deuxième film sec (003').

13. Machine selon la revendication 11 ou 12, **caractérisée en ce que** la fente de dosage (104 ; 104') est réalisée de manière ajustable sur la base d'un entraînement d'ajustement basé sur la position (109 ; 109'), c'est-à-dire peut être réglée afin d'obtenir une largeur de fente constante et/ou définie par l'intermédiaire d'un mécanisme d'ajustement basé sur la position (113 ; 113').

14. Machine selon la revendication 1, 2, 3, 4, 5, 6, 7, 8, 9, 10, 11, 12 ou 13, **caractérisée en ce qu'**un dispositif d'inspection (403 ; 403.1 ; 403.2), par lequel l'intégrité de la surface et/ou l'épaisseur du film sec (003 ; 003') appliqué de la surface de brin de produit peut être contrôlée et/ou est contrôlée sur le brin de produit (002) passant par la station de mesure (408), est prévu sur le trajet de substrat de la section de trajet de substrat (400) montée en aval de l'étage d'application (100 ; 100').

15. Machine selon la revendication 1, 2, 3, 4, 5, 6, 7, 8, 9, 10, 11, 12, 13 ou 14, **caractérisée en ce qu'**une station de mesure (408), par laquelle une épaisseur de brin de produit peut être déterminée et/ou est déterminée sur le brin de produit (002) passant par la station de mesure (408), est prévue sur le trajet de substrat de la section de trajet de substrat (400) montée en aval de l'étage d'application (100 ; 100').
